# EUROPÄISCHE PATENTSCHRIFT

(11) **EP 2 383 159 B1**
(45) Veröffentlichungstag und Bekanntmachung des Hinweises auf die Patenterteilung: **02.07.2014**
(21) Anmeldenummer: 10726795.7
(22) Anmeldetag: 05.01.2010
(51) Int. Cl.: B60V 1/08, B60V 1/14

(54) **VERFAHREN ZUR UMFASSENDEN VERBESSERUNG VON AERODYNAMIK- UND TRANSPORTEIGENSCHAFTEN, BODENEFFEKTFLUGZEUG ZUR AUSFÜHRUNG DIESES VERFAHRENS (VARIANTEN) UND VERFAHREN ZUR DURCHFÜHRUNG EINES FLUGES DAMIT**
METHOD FOR COMPREHENSIVELY INCREASING AERODYNAMIC AND TRANSPORT CHARACTERISTICS, A WING-IN-GROUND-EFFECT CRAFT FOR CARRYING OUT SAID METHOD (VARIANTS) AND A METHOD FOR REALIZING FLIGHT
PROCEDE D'AUGMENTATION COMPLEXE DE CARACTERISTIQUES AERODYNAMIQUES ET DE TRANSPORT, ECRANOPLANE POUR LA MISE EN OEUVRE DU PROCEDE, VARIANTES, ET PROCEDE DE VOL

(30) Priorität: 05.01.2009 DE 102009004239
(43) Veröffentlichungstag der Anmeldung: 02.11.2011
(73) Patentinhaber: Novikov-Kopp, Ivan, Saarlouis 66740 (DE)
(72) Erfinder: Novikov-Kopp, Ivan, Saarlouis 66740 (DE)
(86) Internationale Anmeldenummer: PCT/IB2010/000032
(87) Internationale Veröffentlichungsnummer: WO 2010/076776

(56) Entgegenhaltungen:
- DE-A1- 2 303 972
- DE-A1- 3 843 231
- RU-C1- 2 099 217
- RU-C2- 2 254 250
- US-A- 3 244 246
- US-A1- 2005 183 898

## Beschreibung

### Technisches Gebiet

Die Efindungsgruppe bezieht sich auf Flugtechnik und Transportmittel mit statischen und dynamischen Luftkissen, insbesondre auf die Schiff- und Amphibientransportplattformen, Flugzeuge, Amphibienflugzeug und Bodeneffektfahrzeuge. Das hauptsächliche Anwendungsgebiet der Erfindungsgruppe schließt die sebststabilisierenden Bodeneffektfahzeuge von Typen A, B und C mit ein, deshalb basieren die weiteren Erläuterungen auf dem Beispiel der Bodeneffektfahrzeuge (BEF). DE 3843231 bildet den nächstliegenden Stand der Technik.

### Stand der Technik

Seit über 70 Jahren wird im Bereich des Bodeneffekts und des Bodenerffektfahrzeugbaus geforscht. Doch bis heute sind keine BEF für die Massenanwendung geschaffen, die dazu geeignet wären, das gleiche Sicherheitsniveau und(oder) Transporteffektivität und(oder) Anwendungskomfort wie bei den herkömmlichen Flugzeugen oder Schiffen zu gewährleisten, da keine annehmbare technische Allrounlösung der grundlegenden Probleme der BEF, - nämlich Längsstabilität, Seefähigkeit und Amphibienfähigkeit angeboten wird, die in der die anwendungs- und wartungpraktischen Konstruktion realisiert wäre.

Die Besonderheit der BEF-Anwendung besteht darin, dass die Höhe des Dauerbetriebs - des Fluges im Bodeneffekt-Modus, niedriger als mittlere Flügeltiefe - in der Praxis 0,1 - 0,3 und die Geschwindigkeiten des Fluges der BEF sich im Bereich zwischen 150 und 600 km/h befinden, d.h. sie entsprechen den Fluggeschwindigkeiten der Flugzeuge. Dabei haben die aerodynamischen Kräfte und deren Momente einen komplexeren Charakter der Abhängigkeiten von dem Flugparameter, und was besonders wichtig ist - höhere Gradiente deren Charakteristiken.

Die gegenwärtig verwendeten Methoden zur Gewährleistung der Längsstabilität bei der Flugausführung bei eines Zeitmangel für Entscheidungen in unmittelbarer Nähe zu Wasser- oder Erdoberfläche können zu katastrophalen Folgen führen (und führen dazu). Dies hängt damit zusammen, dass unter Einfluss der äußeren Störungen um die Querachse oder bei fehlerhafter Pilotentechnik sich die Entwicklung der Unfallsituation im Sekundenbereich abspielt. Die meisten der bekannten Unfälle und Katastrophen mit BEF, sowohl mit den experimentellen Modellen, als auch mit denen im dienstlichen Einsatz, von den leichten bis zu den extremschweren, hängen in jedem Fall mit der Längsstabilität und Längssteuerbarkeit zusammen. Darunter sind auch die BEF der meist bekannten Konstrukteure - A. M. Lippisch und R. Alekseew.

Aus dem Stand der Technik, beispielsweise von Belavin N. I, «Bodeneffektfahrzeuge». L.: S, 1968 [1], ist bekannt, dass das Problem der Gewährleistung der Längsstabilität eines BEFs im Bodeneffektbetrieb entweder mit der Auslegungswahl oder mithilfe der automatischen Steuerungssysteme (ASS) gelöst wird. «Provisorische Anleitung für die Sicherheit der BEF», genehmigt von Maritime Safety Committee der International Maritime Organization (IMO) im Dezember 2002, fordert allerdings im Kapitel 15 «Aerodynamische Stabilisierungssysteme»: «Im Falle eines Ausfalls der beliebigen automatischen Ausrüstung oder des Selbststabilisierungsgerätes oder dessen/deren Kraftantriebs, sollen die Bewegungsparameter der BEF in Grenzen der Sicherheit bleiben», S. 391. A. I. Maskalik u. A. «Bodeneffektfahrzeuge - Transportmittel des XXI Jahrhunderts», St.Pb.: Sudostroenie, 2005, im Folgenden als [2] bezeichnet. Dies bedeutet, dass das BEF ursprünglich selbst sicher fliegen «können» soll, d.h. statisch und dynamisch stabil sein, und dass die automatischen Steuerungssysteme als ein Werkzeug für das genaue Einhalten der Flugparameter und die Erleichterung der Arbeit für die Bordmannschaft verwendet werden sollen. Diese Anforderungen sind eigentlich mit denen an die Stabilisierungssysteme der Flugzeuge vergleichbar. Doch die statische Längsstabilität eines Flugzeugs wird bei jeder aerodynamischen Auslegung durch die Wahl der Lastigkeitsregelung gewährleistet. Denn die Entstehung und Veränderung der aerodynamischen Kräfte eines Flugzeuges laufen in einem Zweikomponenten-Dynamiksystem «Luftstrom - Flügel» ab, bei der linearen Abhängigkeit der Veränderung der Auftriebkraftgröße im zulässigen Anstellwinkelbereich Prinzipiell ist dabei, dass die vorhandenen Flugzeugauslegungen unverzichtbar und ausreichend für die Gewährleistung des vorgegebenen Sicherheitsniveaus sind und das dynamische System «Luftstrom - Flügel» von der Erdoberfläche isoliert ist. Bei Flügen auf Sicherheitsflughöhen betragen die tatsächlichen Abweichungen von den vorgegeben Höhen aufgrund verschiedener äußerer Störungen, mit Ausnahme von Notfall-Situationen, von einigen Metern bis zu einigen Zehnern Meter (im starken Turbulenzgebiet), was zwei bis drei Potenzen geringer als laufende Höhe ist, deshalb wird die Flugsicherheit auch bei Flughöheänderung nicht gefährdet.

Im Gegensatz dazu, hat die Auftriebkraft eines Flügels im Bereich des Bodeneffekts die Nichtlinearität in Abhängigkeit von dem Anstellwinkel und von der Flughöhe über der Erdoberfläche. Dabei kann der Flughöhenänderungsbereich eine Größe kleiner als die aerodynamische Bezugsflügeltiefe betragen, und die Auftriebkraft kann sich dabei um fast das zweifache verändern. Beispielweise bei schweren BEF «Orlyonok» (140t) und «Lun'» (400t) führt eine Verringerung der relativen Flughöhe über der Erdoberfläche von 0,9 bis auf 0,1 der Bezugsflügeltiefe zu einer Exponentvergrößerung des Flügelauftriebsbeiwertes auf 90% - Abb. 57, S. 41 [2]. Wenn sich dabei der Anstellwinkel vergrößern wird, wird der Auftriebsbeiwertszuwachs noch höher und schneller sein. Auf diese Weise bekommt das dynamische System «Luftstrom - Flügel» im Bodeneffekt-Modus eine dritte Komponente und wird zum System «Luftstrom - Flügel - Boden». Die Verbindung zwischen der ursprünglichen und der neuen Komponenten kann man als «überkritisch» bezeichnen, weil außer Erhöhung des Gradient der Auftriebskraftänderung, eine erhebliche Druckpunktverschiebung stattfindet. Im Falle der Verschiebung des Druckpunkts zur Flügelhinterkante wird der unkompensierte kopflastiges Nickmoment gebildet, d.h. das BEF stellt ein wesentlich nichtlineares System dar.

Ein anderer Faktor, der Flugsicherheit verringert und unmittelbar mit der Längssteuerung zusammenhängt, der außerdem die Seefähigkeit und Brennstoffwirtschaftlichkeit verschlechtert, ist das Flugverfahren. Meistens wird bei den BEF dieselbe Vorgehensweise wie bei den Flugzeugen angewendet: zum Starten ist es notwendig, das BEF bis zur Abhebegeschwindigkeit zu beschleunigen und dabei den Längsneigungswinkel zu verändern, um die erforderliche Höhe der Auftriebskraft zu erzielen. Des Weiteren ist auf allen Flugphasen bis hin zur Landung eine entsprechende Veränderung des Längsneigungswinkels nötwendig. Das Problem liegt im hohen Gefährlichkeitsgrad der Manöver mit Veränderung des Längsneigungswinkels auf Höhen vergleichbar mit der Länge des Luftfahrzeugs. Dies wird sowohl durch die Unfälle mit BEF, als auch die vielen KatasVophen und Unfälle mit Flugzeugen bei der Ausführung von Starts und Landungen bestätigt. Der Statistik nach, fallen 85 % der Flugzeugunglücke auf den Start- und Landebetrieb.

Die nächste wichtige Eigenschaft der BEF ist die Seefähigkeit.
Einerseits ist sie durch die Entstehung großer Stößbelastungen bei Start und Wässerung unter Seegangsbedingungen eingeschränkt, was zur Schädigung oder Zerstörung der Konstruktion, aber auch zur Entstehung der Kräfte und Momente führen kann, die das Erreichen der Abhebegeschwindigkeit verhindern und die hydrodynamischen erforderlichen Bedingungen zur Gewährleistung einer sicheren Start- und Wässerungsausführung beeintrachtigen. Andererseits ist die Seefähigkeit durch die tatsächliche relative Höhe des Bodeneffekt-Fluges eingeschränkt, die von den geometrischen Parametern eines BEFs- seiner Rumpflänge und Flügeltiefe (mittlere Flächentiefe) abhängt. Die Lösung des Problems der Seefähigkeit, sowie der Längstabilität, liegt also im Bereich der Wahl von Methoden der Bildung von hydroaerodynamischen Kräften sowie des Aussuchens von Auslegungsschema.

Auch die Amphibienfähigkeit ist unmittelbar abhängig von der Auslegung der BEF. Von der Amphibienfähigkeit hängen wiederum die Anwendungsmöglichkeiten der BEF als alternativen Transportsysteme ab. Eine vollkommene Amphibienfähigkeit ermöglicht den Transportservice an den für die herkömmlichen Schiffe und Flugzeuge unzugänglichen Orten und ist somit eine sparsamere Alternative zu den Hubschraubern, aber mit einer größeren Reichweite. Abgesehen davon wird eine Einfachheit der praktischen Anwendung und in der technischen Wartung gewährleistet.

Somit kann eine prinzipielle Lösung der BEF- Sicherheit - sowie Effektivitätsprobleme nur im Falle der auf bestimmte Weise gewählten Auslegung, die das vorgegebene System der aerodynamischen Kräfte schaffen und eine Flugausführung nach sicheren Algorithmen gewährleisten lässt.

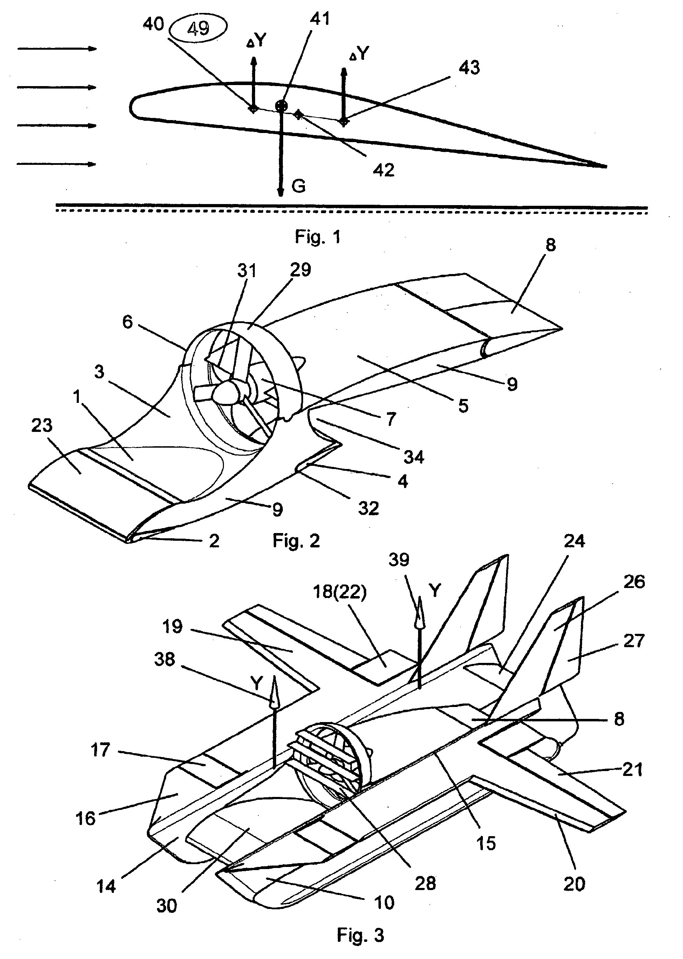

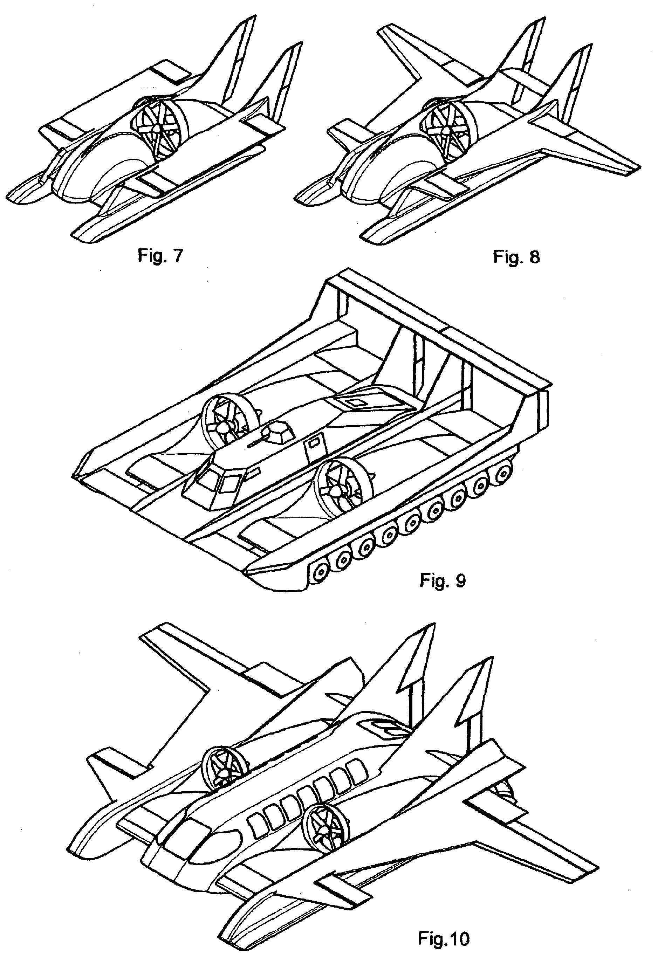

Der heutige Stand der Technik bietet eine Vielzahl der Auslegungsschemen, doch können unter denen, die umgesetzt und getestet wurden, folgende charakteristische Typen hervorgehoben werden:
- BEF nach dem Flugzeugschema von R.Alekseev, Typ des BEF KM, mit der Anblaserichtung der Antriebsstrahlen unter den Flügel - Abb. 65, [2], Patent RU 2076816 (gebaut in: Russland, Schweden, China);
- BEF nach dem Flugzeugschema von A. M. Lippisch mit einem gewölbeartigen Flügel «Umgekehrte Deltaform» - Patent US 3190582, Ju. Makarow - Patent RU 2185979 (gebaut in: BRD, USA, Australien, Taiwan, China, Russland);
- Motorboote - BEF nach dem Flügelschema des Typs «Tandem» und mit gleitenden Rümpfen eines Schnellboot -Typs: C. W. Weiland - Patent US 3244246, G. Joerg - Patent US 3908783, A. Blum - Patent US 5335742 (gebaut in: USA, BRD);
- BEF nach dem Schema «zusammengesetzter Flügel»: R. Bartini - Bodeneffektluftfahrzeug 14MP1P, (K. G. Udalov u. A.. «Samolet WWA-14», M., 1994, im Folgenden - [8]), mit Luftaufladung - ELA-01 (Zeitschrift «Technika Molodjoshi» Nr.8, 2005, Russland, S. 29-32, im Folgenden -[9]) und mit der Anblaserichtung unter den Flügel «lwolga-2» - W. Kalganov - Patent RU 2099217;
- BEF der ADP-Serie nach der «Entenbauweise» mit tragender Höhenflosse von A. Pantschenkov, (Abb. 7 «Ekranoplani Ukraini», die Zeitschrift «Awiatsija obschego nasnatschenija» Nr. 5 2000, im Folgenden - [11]), W. Surshikov u. A. - Patent RU 2224671;
- BEF nach dem Schema «Nurflügel»: Abb. 171, 172, 178 [2], OIIMF-2, Abb. 1 [11].

Aus dem Stand der Technik ist ebenso eine Bedingung der Gewährleistung der eigenen statischen und dynamischen Stabilität des BEF bekannt, bei der der Neutralpunkt von Anstellwinkel hinter dem Neutralpunkt von Höhe angebracht werden soll und der Massenmittelpunkt zwischen den beiden liegen soll, wobei seine Lage zwischen dem Neutralpunkt von Höhe und der Mitte des Abstandes zwischen den Neutrallagen beforzugt wird: Fig. 10 N. Komev, «COMPLEX NUMERICAL MODELING OF DYNAMICS AND CRASHES OF WING-IN-GROUND VEHICLES» 41 st Aerospace Sciences Meeting and Exhibit, 6-9 January 2003, Reno, Nevada, im Folgenden - [13], und S. 121-122[2].

Es sind Verfahren der praktischen Gewährleistung dieser Bedingungen bekannt: W. Archangel'skij - Patent RU 2018465, L- Nowolotskij - Patent RU 209722, aber auch der Bedingungen der Selbststabilisierung der BEF der Typen «Ente» und «Tandem» - Patent RU 2224671 und Patent US 3908783.

Es ist ein Verfahren der Erweiterung des nutzbaren Schwerpunktbereichs durch Platzierung zweier Flügel nach dem «Tandem»-Schema - A. Beloswet u. A - Patent RU2102287 bekannt.
Außerdem ist es bekannt, dass bei gleichen geometrischen Flughöhen und bei einer gleichen Fläche die Flügel kleinerer Streckung viel höhere Dämpfungscharakteristiken von Höhe haben, die dem einzelnen Derivativ der Auftriebkraft proportionell sind.

Es sind Verfahren der Bildung eines statischen Luftkissen (StLK):
- die Anblaserichtung unter den Flügel von der Marsch- oder Starttriebwerken in die vorne geöffnete Kammer, die unter dem Flügel oder Flügelmittelteil montiert ist - StLK eines geringeren Überdrucks, Abb. 65 [2], Patent RU 2099217;
- die Luftaufladung in die im Umfang geschlossene Kammer, die unter dem Flügelmittelteil oder unter einer speziellen Konstruktion von den zusätzlichen Triebwerken und Ventilatoren platziert ist, ELA-01 [2], W. Ignatjew - Patent RU 2174080, W. Morosow - Patent RU 2053903;
- die Luftaufladung in die im Umfang geschlossene Kammer von einem gesonderten Ventilator mit einer Rückverteilung der Kraftleistung der Triebwerke zwischen dem Ventilator und der Marschantrieb, W. Nasarow - Patent RU 21272202;
- die Luftaufladung in die im Umfang geschlossene Kammer mit dem vollen Strom des Marschantriebs durch die Drehung der Schraubendrehebene, O. Mikojan u. A. - Urheberbescheinigung US 1511170, A. Makienko u. A. - Patent RU 2139212;
- die Luftaufladung in die im Umfang geschlossene Kammer durch die Zufuhr eines Teils des Marschantriebstroms, Bodeneffektfahrzeug OIIMF-3 [11], Ju. Makarow - Patent RU 2185979 - 27.07.2002, R. Martirosow - Patent RU 2254250 - 20.06.2005, P. u. J. Rice - Patent US 6158540.

Es ist ein Verfahren der Schraubenschuberhöhung bis zu 30% durch die Anwendung eines «ringförmigen Flügelmittelteils» I. W. Ostoslawskij, W. R. Matweew Werke Prof.-N.-E.-Shukowskij-CAGI. Ausgabe 248 M. 1935, im Folgenden - [27].

Bekannt sind Verfahren der Erhöhung der Seetüchtigkeit:
- durch Vegrößerung der Maße des BEF;
- durch Anwendung der Umrissform mit einem großen Winkel der Aufkimmung und Schwimmstufen;
- durch Anwendung abdämpfender, ablenkbaren Wassergleitkufen;
- durch Anwendung eines statischen Luftkissens mit höherem Überdruck;
- durch Anwendung eines Senkrechtstarts.

Zur Beurteilung der bekannten Auslegungen nach dem Kriterium «natürlichen Stabilität» (oder «Selbststabilisierung») kann man folgenden anschaulichen Vergleich hinzuziehen. Im Zusammenhang damit, dass die Unterfläche und deren Profilform eine ausschlaggebende Rolle in der Ausformung der tragenden Flügeleigenschaften in der Bodeneffektnähe spielt (Abb. 95 u. p. 11 auf S. 86, [2]), gibt es, wie oben genannt, eine «überkritische» Verbindung eines Flügels mit der Erdoberfläche mittels dynamischen Luftkissens. Nach dem Wirkungsschema der Kräfte und Momente kann man das System «Luftstrom - Flügel - Boden» mit Radstütze des Landtransports vergleichen. Demnach werden folgende Auslegungen - «Flugzeug», «Nurflügel», «zusammengesetzter Flügel» - einem einachsigen Karren entsprechen, den man schiebt (oder zieht) und gleichzeitig das Gleichgewicht beibehält, mit der Massenmittelpunktlage in einem kleineren Bereich nahe der aus dem Auflagepunkt ausgehenden Vertikalen. Die Erdanziehungs-, Zug- oder Gleichgewichtskräfte bilden Momente um den Auflagepunkt. Eine Veränderung der Größen dieser Kräfte wird von einer Beeinträchtigung des vorherigen Gleichgewichts begleitet. Deshalb sind der einachsige Karren und die ihm entsprechenden Auslegungsschemen in der Längsrichtung prinzipiell unstabil.

Die Auslegungsschemen «Tandem» und «Ente» entsprechen einem zweiachsigen Karren mit der Massenmittelpunktlage zwischen den Auflagepunkten. Eine zweiachsige Karre besitzt eine prinzipielle, das heißt eine natürliche Stabilität, und dessen Längstrimmung hängt in praktischen Fällen nicht von dem Angriffspunkt der Zugkraft und deren Größenänderung ab. Angesichts des unterschiedlichen Entstehungscharakters der Stützkräfte von einem Landobjekt und einem Flugapparat gibt es bestimmte Bedingungen, bei denen die Schemen «Tandem» und «Ente» eigene Längsstabilität aufweisen, die der Stabilität eines zweiachsigen Karrens nahe liegt.

Demgemäß, ähnlich dem Bodentransport, können alle Auslegungen willkürlich in "einachsige" und «zweiachsige» («mehrachsige») aufgeteilt werden, allerdings sollte bei der Entwicklung der Luftfahrzeuge für den Bodeneffektbetrieb das Prinzip der «mehreren Stützen» («mehreren Achsen») vorrangig sein.

Aus dem oben genannten ausgehend kann man eine vergleichende Beurteilung bekannter Auslegungen aus der Sicht der Lösung von grundlegenden Problemen der BEF durchführen.

«Zweiachsige» Auslegungen «Tandem» und «Ente» besitzen natürliche Voraussetzungen für die Gewährleistung der Selbststabilität. Doch dieser Prinzip der BEF hat wesentliche Nachteile: Anlauferfordemis beim Start, Feineinstellung auf eine bestimmte Geschwindigkeit und Höhe oder ein schmaler Bereich deren Änderung, eine sehr geringe reale (gemäß der Gesamtlänge der Apparate) Höhe des Bodeneffektfluges, was ihre Seetüchtigkeit rasch verringert. Darüber hinaus fehlt die Amphibienfähigkeit oder sie ist eingeschränkt - es sind Slipanlagen mit einer festen Beschichtung und kleineren Aufstiegswinkel erforderlich. Die Möglichkeiten der Flugausführung außerhalb der Bodeneffektzone und Gewichtsentladung mit Hilfe des statischen Luftkissens werden nicht in Betracht gezogen. Diese Schemen haben eine minimale Variabilität.

Die Selbststabilisierung (die Selbsttrimmung in der Längssteuerung) auf den «einachsigen» Auslegungen zu gewährleisten ist viel schwieriger - das ist ihr grundlegendes Problem. Das Flugzeugschema mit dem tiefliegend angeordneten Flügel mit der Anblaserichtung unter den Flügel, nach dem die BEF KM, «Orlenok», «Lun'» (Abb. 65, Abb. 54, Abb. 55[2]), verfügt über keine Selbstrückstellung der Ausgangsbalance der Momente bezüglich des Massenmittelpunktes nach der Wirkung der zufälligen Störfaktoren, also gibt es eine fortschreitende Instabilität in der Längssteuerung. Mit anderen Worten kann ein stabiler Bodeneffekt-Flug nur mittels manueller Böenabminderung durch die Crew mithilfe der Balancekorrektur mittels der Höhenruderverstellung oder durch das automatische Steuerungssystem (ASS) erreicht werden.

Das nächste Problem - die Sicherheit des BEF bei der Ablösung aus dem Bodeneffekt - Fluges in den Freiflug und bei der Rückkehr aus dem Freiflug in den Bodeneffekt-Flug, die mit der Notwendigkeit der Bildung des hecklastigen Moments durch das Höhenruder für die Überführung des BEF in den Steigflug zusammenhängt. Je nach Entfernung von dem Bodeneffekt verschiebt sich das Druckzentrum nach vorne, was zu einer schwungvollen Abnahme des Kopflastmoments von der Auftriebskraft bei gleichzeitiger unkontrollierter Zunahme des Überflusses des hecklastigen Moments führt, die Geschwindigkeitsverlust, Strömungsabriss und Abkippen verursachen kann. Die Verwendung der vergrößerten Flosse, vergleichbar in der Fläche mit dem Hauptflügel, rettete die schweren BEF nicht vor dem Abstürzen. Aus diesem Grund ist die Verwendung der Flugzeugauslegung für die schweren und sehrschweren BEF ein konzeptioneller Fehler, was auch von R. Alexeew selbst indirekt zugegeben wurde.

Neben den Stabilitätsproblemen sinkt die Überlegenheit der BEF solcher Auslegung rapide, in Hinblick auf die Treibstoff-Ersparnis im Vergleich zu den herkömmlichen Flugzeugen aufgrund des hohen Treibstoffverbrauchs während des Starts. Die Seetüchtigkeit ist ungenügend. Dank langjährigen Forschungen und Entwicklungen in den USA wurde ein Projekt des superschweren Transportflugzeuges «Pelikan» vom Unternehmen Boeing entwickelt, nach dem traditionellen Flugzeugschema mit Erdstart und -landung. Das Flugzeug ist für lange Flüge, sowohl im Bodeneffekt-Betrieb, als auch in den Höhen von bis zu 6000 Metern vorgesehen, Patent US 6848650.

Die Flugzeugauslegung des BEF hat eine geringe Variabilität und ist eingeschränkt anwendbar, zum Beispiel für die BEF des Typs «A»: «Wolga-2» - Patent SU 1786768, «Aquaglide» Abb. 70[2]. Die Längsstabilität dieser BEF ist durch die Anwendung eines Flügels mit dem «S»-förmigen aerodynamischen Profil (das schlechteres Tragvermögen besitzt) und einer genauen Positionierung des Massenmittelpunktes, einer Feineinstellung auf den tiefliegenden Bodeneffekt-Flug, durch Anordnung der Triebschrauben vor dem Flügel mit der Anblaserichtung unter den Flügel, Verringerung der Tragfähigkeit, Einschränkung der Motorleistung und Verschlechterung der Seetüchtigkeit gewährleistet.

Das Flugzeugschema von A. Lippisch bedingt auch einen Anlauf beim Start, es ist fein eingestellt auf den Bodeneffekt-Betrieb, ungenügend stabil im Translationsflug und gefährlich im Freiflug, ungeeignet für hohe Geschwindigkeiten, unpraktisch in der Anwendung und Wartung, wird bei niedrigen Werten der Flächenbelastung auf den Flügel umgesetzt. Dieses Schema ist nicht optimal für schwere Apparate. Besitzt eine eingeschränkte Amphibienfähigkeit und minimale Variabilität.

Die Erfüllung der Bedingungen von statischer und dynamischer Stabilität wird bei den Flugzeugschemen mit einem Flügel dadurch erschwert, dass der Abstand zwischen Neutralpunkten im Vergleich zu der Profiltiefe gering ist, deshalb muss die Massenmittelpunktlage in einem engen Bereich genau positioniert werden. Andererseits besteht der Begriff des Neutralpunktes selbst nur für den Flug in Bedingungen des Bodeneffekts. Dies erschwert zusammen mit der Notwendigkeit der Nickbewegungsänderung die Flugausführung im Translationsflug und bei verschiedenen Störfaktoren. Bekannt sind Empfehlungen für die Flugausführung der BEF, gebaut nach dem Schema von A Lippisch, formuliert anhand der numerischen Modellierung der BEF-Bewegung und Unfälle - [13], die zeigen, dass die Erfüllung der Bedingungen für statische und dynamische Stabilität, bei einem stationären Flug, für die Gewährleistung der Sicherheit im Translationsflug ungenügend ist.

Das Schema «Nurflugel», so wie es versucht wurde umzusetzen (darunter das Projekt «Kolombia» in USA), ist Instabil. Es ist entweder Anwendung automatischer Steuerungs- und Dämpfungssysteme erforderlich, oder Einschränkung der Flugfähigkeit, sowie Anwendung wesentlicher stabilisierender oder zusätzlicher Tragflächen, dann aber wird es dem Schema «zusammengesetzter Flügel» ähnlich.

«Zusammengesetzter Flügel» (R. Bartini - WWA-14, MAI - ELA-01, W. Kalganow - «Iwolga-2») hat die besten Kennwerte bei den meisten Parametern, was durch die Flugtests und bis hin zur kommerziellen Nutzung herangeführtem BEF EK-12 nach dem russischen Patent Nr. 2099217, bestätigt wurde. Diese BEF zeigen die größten tatsächlichen (gemäß der Apparatlänge) Höhen des Bodeneffekt-Fluges.

Beispielsweise, bei der Ausführung der Testflüge WWA-14 wurde festgestellt, dass bei der aerodynamischen Bezugsflügeltiefe von 10,75m fing der Effekt des dynamischen Kissens schon auf der Höhe von 10-12m an sich zu zeigen und auf der Abfanghöhe 8m das dynamische Luftkissen war so dicht und stabil, dass das Flugzeug mit einem fließenden Abstieg (die Motoren im Leerlaufbetriebszustand) ohne Steuerung des Pilots den Flug fortsetzen konnte. Diese Auslegung ist optimal für verschiedene Bereiche der kommerziellen Nutzung und des Sondereinsatzes, d.h. sie besitzt eine maximale Variabilität. Weil der Flügelmittelteil eine rechtwinklige Form hat, kann man ein statisches Luftkissen leicht erzielen. Die Auslegung ist für beliebige Fluggeschwindigkeiten geeignet.

Allerdings, abgesehen davon, dass die Außenflügel großer Streckung die Längsstabilität verbessern, haben diese BEF keine Sebststabilität, bezeichnend für die «zweiachsigen» Schemen, deswegen sind sie im Falle starker Böhenstörungen oder Fehler in der Flugausführungstechnik, eines abrupten Nickens mit einer Ablösung aus der Bodeneffektzone, des Verlustes der Geschwindigkeit und der Steuerung nicht in vollem Umfang geschützt.

Außerdem ist die Konstruktion nach dem Patent RU 2099217 für das Ein-, bzw. Aussteigen der Fluggäste unbequem. Die Anblaserichtung unter den Flügel in den vorne offenen Raum führt zu einem intensiven Luftausstoß, gegen die Bewegungsrichtung. Beim Rolling auf dem Wasser und Boden, Auffahrt auf ein nicht ausgebautes Ufer und bei der Abfahrt davon ins Wasser kommt es zu einer starken Spritzwasser- und Staubentstehung in der vorderen Halbsphäre. Außer der Sichtverschlechterung kommt es zu eine mechanische Beschädigung der Konstruktionsoberflächen durch Sand und kleine Schotter und es wird ein zusätzlicher Schutz für die Luftfilter der Motoren benötigt. In Winterbedingungen kann ein trockener Neuschnee mit einer Sichtverschlechterung bis auf einige Meter aufgewirbelt werden, was die sichere Bewegung über der Erdoberfläche unmöglich macht. Bei einer Anblaserichtung unter den Flügel wird der Strahlimpuls von dem Mantelschraubenantrieb unrationell genutzt und es entsteht wegen der Anblasung der Oberfläche unter großen Winkel eine schädliche Druckerhöhung auf der oberen Frontseite des Flügels. Dies macht die Anwendung einer komplexen Mechanisierung der Flügelvorderkante erforderlich, was die Konstruktion verkompliziert und erschwert. Der intensive Luftausstoß, der unter dem Flügel rückwärts hervor kommt, lässt die Schaffung des Hochdruckluftkissens nicht zu. Trotz der Anblaserichtung unter den Flügel benötigt dieses Schema einen Anlauf beim Start und einen Auslauf bei der Landung.

Diesen Nachteil hat das BEF ELA-01 nicht, dessen statisches LK einen Start an der Stelle mit anschließendem Anlauf auf diesem bis zur Marschgeschwindigkeit ermöglicht. Das senkrecht startende Amphibium WWA-14 wurde von vornherein mit einer Anwendung der Anblaserichtung unter den Flügelmittelteil von zwölf darin schräg eingestellten Turbinen-Triebwerken entworfen. Die Tests des Senkrechtstart-Betriebs auf einer speziellen gasdynamischen Simulationsanlage mit sechs Turbinen-Triebwerken bestätigten seine praktische Ausführbarkeit.

Der nächstliegende Analog nach der Gesamtheit der Merkmale ist die technische Lösung nach dem Patent RU 2254250 C2 B 60 V 1/08.

### Darstellung der Erfindung

Das Ziel der präsentierten Erfindungsgruppe ist die Entwicklung selbststabilisierter Luftfahrzeuge und anderer Transportmittel in allen Gewichtsklassen, die eine erhöhte Sicherheit des Fluges und der Manöverausführung, eine erhöhte Tragfähigkeit und die Höhe des Bodeneffektfluges, reduzierte Baugröße, verbesserte Start-Lande(Wasserung)-Eigenschaften, Amphibienfähigkeit und Sparsamkeit, erweiterte Funktionalität und Bereich der Betriebsschwerpunktlage, erhöhter Komfort der Bedienung und Wartung aufweisen.

Die angegebenen Ziele werden durch eine gleichzeitige Anwendung an die Auslegungen «Nurflugel» und «zusammengesetzter Flügel» der von der eigentlichen Erfindungsgruppe vorgeschlagenen Methoden der Formierung der aerodynamischen Kräften, konstruktiver Lösungen und konzeptionell mit denen verbundener Methoden der sicheren Flugausführung erreicht.

Das Problem der Längsstabilität wird durch die Verleihung dem Flügelmittelteil (Tragfläche geringer Streckung) der Eigenschaft der natürlichen Stabilisierung, kennzeichnend für die «zweiachsigen» Schemen, also durch die Entwicklung von mindestens zwei sich gegenseitig bezüglich des Massenmittelpunktes ausbalancierenden Auftriebskräften, aber auch durch die Veränderung der Bedingungen für Wechselwirkung des Flügelmittelteils, der freien Anströmung und des Bodens gelöst. Hierfür werden in den Grenzen des in der Projektion auf die Horizontalfläche massenundurchlässigen Flügelmittelteils mit den aerodynamischen Endscheiben - Schwimmern (AES) Lokalzonen zur Entstehung der Auftriebskräfte entwickelt.

Die Lokalzonen werden mithilfe der entsprechenden Anzahl der Tragflächen geringer Streckung (TgS) gebildet, aus denen man den Flügelmittelteil der vorgegebenen Größen zusammensetzt. TgS platziert man entlang der Längsachse mit einer Überlappung in der horizontalen Ebene und symmetrisch in Bezug auf die Rumpfmittelebene. Die vordere(n) TgS rüstet man mit einer Vorderspreizklappe und Flaperons aus. Die hintere(n) TgS rüstet man mit Flaperons aus. Auf den Vorderkanten der zweiten und der nachfolgenden TgS (der zweiten und der nachfolgenden Gruppen der TgS) montiert man die Mantelschraubenantriebe (MSA). Dabei bringt man die Vorderkanten dieser TgS über den Vorderkanten der Flaperons der vorne stehenden TgS an, die man in den Ebenen der Abgabeschnitte der MSA anordnet. Somit bildet man zwischen den Unterseiten der hinteren TgS und den Oberseiten der Flaperons Luftkanäle, durch die man unter den Flügelmittelteil den unteren Teil (die unteren Teile) des Antriebsstrahls (der Antriebsstrahlen) der MSA leitet. Die MSA montiert man in den Einstellwinkeln, die gleich oder ähnlich den Einstellwinkeln der Flächen sind, auf denen sie montiert sind. Dies gewährleistet die Laminarströmung der dahinter sich befindenden Oberflächen und die vertikale Komponente der Schubkraft. Die untere Hälfte der Innenfläche der MSA verknüpft man fließend mit der Oberseite der vorderen TgS und den vertikalen Wänden der AES, da bei entsteht ein Halbringteilstück des TgS, das sich in die Oberseite der vorderen TgS fließend mit einer geradlinigen Erzeugenden entfaltet.

Dabei bilden die vordere TgS, MSA mit dem Triebwerk und die hintere TgS zusammen eine einheitliche Baugruppe - einen propulsiven Komplex, der, zusammen mit AES und den zusätzlichen Flächen geringer Streckung, einen propulsiv-tragenden Komplex des BEF darstellt. Die angegebene Baugruppe ist grundlegend für alle möglichen Varianten der auf der Basis der eigentlichen Erfindungsgruppe gebauten Transportmittel.

Beim Hinzufügen des Seitenleitwerks und der Höhenruder entsteht eine Konstruktion, die für die Schaffung der BEF vom Typ A notwendig und ausreichend ist. Durch Hinzufügen der Flächen großer Streckung - Außenflügel, die mit Querrudem, Landeklappen und Vorflügel ausgerüstet sind und die man an die Seitenstimfläche der zusätzlichen Flächen geringer Streckung montiert, bildet man einen propulsiv-tragenden Komplex der BEF von Typen B und C. Dabei wird die Zugehörigkeit zum jeweiligen Typ durch die Spannweite und die Fläche der Außenflügel, technische Regeln, die bei dem Bau und Typenzulassung angewendet wurden, definiert.

Die angegebene Baugruppe gewährleistet eine Formierung von drei verschiedenen Luftkissen unter sich: in den Grenzen deren Projektion auf eine Horizontalfläche - eines statischen Luftkissens (SLK), unter der vorderen TgS - dynamischen LK (DLK) und unter der hinteren TgS - statisch-dynamischen LK (SDLK).

In der Reiseleistung bildet sich über der angegebenen Baugruppe ein verstärktes Unterdruckgebiet mit einer verringerten Unebenheit in der Längsrichtung. Die Seitenabsperrungen der Luftkissen sind die Innenseiten der AES (oder die Seitenflächen von Rumpf und AES). Die Vorderspreizklappe der vorderen TgS ist die Vorderabsperrung des statischen LK, und dessen Flaperons leisten die Funktion der Hinterabsperrung des dynamischen LK und der Vorderabsperrung des statisch-dynamischen LK. Die Flaperons der hinteren TgS leisten bei der Ausführung des Starts, des Rollings und der Landung die Funktion der Hinterabsperrung des (der) statischen LK, und beim Flug die Funktion der Hinterabsperrung des (des) statisch-dynamischen LK. Dabei wird auf natürliche Weise ein wesentlich größerer Abstand zwischen den reellen Neutralpunkten von Höhe und von Anstellwinkel im Vergleich zu einem analogen Abstand zwischen den Neutralpunkten eines einteiligen Flügelmittelteils mit den äquivalenten geometrischen Größen gewährleistet. Dies erleichtert die Erfüllung der Bedingungen eigener statischer und dynamischer Stabilität und erweitert den Bereich der zulässigen Schwerpunktlagen, was zur Erhöhung der Flugsicherheit und der Transportfähigkeit führt.

Die Ausführung des Flügelmittelteils in Form der angegebenen Baugruppe oder aus solchen Gruppen zusammengesetzt, gewährleistet unterschiedliche Bedingungen für die Bildung der Auftriebskräfte und einen unterschiedlichen Charakter der Wechselwirkung des vorderen und hinteren Teils des Flügelmittelteils mit der Erdoberfläche. Die kinetische Energie einer frei anlaufenden Strömung wird von der vorderen TgS realisiert, unter der ein dynamisches Luftkissen entsteht. Dabei wird die hintere Oberfläche über der ganzen Spannweite durch ein Triebwerk belüftet, das mithilfe der Luftaufladung einen statischen Hochdruckbereich unter ihr bildet - ein statisches LK mit Luftdurchlauf durch die Hinterkante der Flaperons, die sich auf die bereits mit der vorderen TgS verdichtete Luft stützt. Somit wird, hinsichtlich der Formierung der Auftriebskräfte, das Hinterteil des BEF durch statisches und dynamisches Luftkissen oder, was dem genau gleich ist, mit einem statisch-dynamischen LK in der Luft gehalten.

Eine andere Flugvariante bei einer entsprechenden Triebwerksleistung wird der Betrieb sein, bei dem die Antriebsstrahlen der Triebwerke, infolge von Koanda-Effekt, die Strahlklappen bilden werden, die aufgrund der Vergrößerung der Effektivlänge der TgS-Tiefen, Verwölbung derer Profile und der Rückstellkräfte der Antriebsstrahlen die Tragfähigkeit des zusammengesetzten Flügelmittelteils ohne wesentliche Vergrößerung der Widerstandskraft erhöhen werden.
Dies entspricht einer konstruktiven Vergrößerung der Ersatzflügeltiefe und führt zu Steigerung der Höhe des Bodeneffektfluges, das heißt zu Erhöhung der Seetüchtigkeit und Sicherheit, oder lässt das Power Setting beim Beibehalten der laufenden Höhe verringern, also die Sparsamkeit verbessern.

Abgesehen davon, ändert die Absaugung des Mantelschraubenantriebs von Luftmassen auf der vorderen, teilweise halbringförmigen TgS, sowohl die Form der Längsverteilung der Luftverdünnung als auch ihre Größe im Vergleich zu diesen Charakteristiken des flachen Flügels ähnlicher Spannweite bei einer freien Umströmung drastisch. Wie oben angegeben, wurde durch die Forschungen von CAGI [26] ein Zuwachs der Schubkraft um 30% bewiesen, den der ringförmige Flügelmittelteil gewährleistet, und es wurden Fazite über den gleichen Effekt beim halbringförmigen Flügelmittelteil gezogen. Diesen Empfehlungen entsprechend, ist die Ringfläche der MSA nach dieser Erfindungsgruppe fließend mit dem halbringförmigen Teil der vorderen TgS verknüpft und entfaltet sich fließend weiter, nach vorn, in die Oberseite der vorderen TgS. Beim Vorhandensein der vertikalen Seitenabsperrungen (AES und Rumpf) gewährleistet dies eine Ausdehnung des halbringförmigen Bereichs und eine Vergrößerung des Ansaugeffekts über der vorderen TgS. In der Summe mit der vertikalen Komponente des Schubkraftzuwachses vergrößert sich aufgrund des ringförmigen Bereichs der TgS ein Teil der Gesamtschubkraft der vorderen TgS, die auf der letzten entsteht.

Auf diese Bildungsweise der Umströmung der TgS des zusammengesetzten Flügelmittelteils werden verschiedene Bedingungen der Wechselwirkung vorderer und hinterer des Flügelmittelteils mit anlaufender Strömung und dem Boden gewährleistet. Das heißt, es wird das Ziel der Minderung der «schädlichen» Komponenten im dynamischen System «Luflstrom-Flügel-Boden» und der Aufrechterhaltung der «nützlichen» erreicht.

Mithilfe der angegebenen Methode der Formierung der Auftriebskräfte kann man die Luftfahrzeuge mit einer erhöhten Sicherheit bei einem Variantenreichtum der konstruktiven Ausführung erschaffen, die in vollem Grad den konkreten Nutzungsbedingungen entsprechen und folgende Eigenschaften haben werden:
- erhöhte Sicherheit des Fluges und der Manöverausführung;
- verbesserte Massenverteilung des Apparats im Umriss der Horizontalfläche;
- erhöhte Formsteifigkeit, die in allen drei Achsen das Kräftepolygon darstellt, was eine Reduktion des Eigengewichts der Konstruktion erlaubt;
- Erweiterung des Bereichs der Betriebsschwerpunktlagen, infolge von der Erweiterung der Möglichkeiten der Längstrimmung;
- Fehlen der Verluste in der Austrimmung, charakteristisch für herkömmliche Flugzeugschemen;
- Verbesserung der Momentencharakteristiken bezüglich der Querachse infolge der Anordnung der Triebwerke mit Mantelluftschrauben nahe des Massenmittelpunktes sowohl in der Längsrichtung als auch in der Höhe und das Fehlen des weit zurück gesetzten, hoch angebrachten Höhenleitwerks und der weit nach vorne gesetzten Unterlüftungs- oder Marschtriebwerke;
- verbesserte Tragfähigkeit;
- erweiterte Funktionalität;
- erhöhte Manöverfähigkeit;
- Fehlen der Staub- und Spritzwasserbildung in der vorderen Hemisphäre.

Im Falle der Mehrtriebwerksauslegung kompensieren sich die Momente der Schubkräfte der Triebwerke der vorderen und hinteren Gruppen (und deren vertikalen Komponenten) gegenseitig teilweise oder ganz. Da die Mantelschraubenantriebe die Einstellwinkel haben, liegen die Vektorlinien der Schubkräfte oberhalb und unterhalb des Massenmittelpunkts. Das heißt, eine gleichzeitige Vergrößerung oder Verminderung des Betriebs aller Triebwerke hat eine minimale Auswirkung auf die Austrimmung des BEF. Eine solche Anordnung der Triebwerke erhöht die Tragfähigkeit des Flügelmittelteils und die Manöverfähigkeit (Beschleunigungsfähigkeit) des BEF in der Vertikalen. Die Schubcharakteristiken sind aufgrund der Anwendung, wie oben angegeben, von halbringförmigen TgS («Effekt Bartini») und aufgrund der aufeinanderfolgenden Vergrößerung (Multiplikation) der Geschwindigkeit von dem Luftstrom, der durch die Triebwerke durchströmt, verbessert.

Eine Besonderheit der Luftfahrzeuge bei der gegebenen Erfindungsgruppe ist, wie oben erwähnt, die erhöhte Profiltiefe der äquivalenten Tragfläche, die den Bodeneffekt realisieren lässt. Dies ist das Ergebnis von maximaler Nutzung der Gesamtlänge des Luftfahrzeugs (des Rumpfs) und das Resultat der Wirkung von Strahlklappen. Die gegebene Besonderheit vergrößert die tatsächliche Bodeneffektflughöhe im Vergleich zu BEF derselben Länge, die nach anderen Auslegungen ausgeführt wurden. Außerdem bildet der Flügelmittelteil, zusammengesetzt aus relativ dünnen TgS, in Strömen der Triebwerke angeordnet sind, die die Luftschicht von der Oberseite einsaugen und sie im scharfen Winkel unter die Unterseite leiten, eine Druckdifferenz, die den Wert derselben Höhe an einem Flügel mit gleichen Maßen und einem großen Profildickenverhältnis übersteigt, dessen Form nahe der Approximationslinie ist, die von der Nase des Profils der vorderen TgS bis zu dem hinter dem Schwanz des Profils der hinteren TgS liegenden Punkt durchläuft - durch die Hinterkanten der Flaperons der TgS und oben durch die oberen Hälften des MSA. Dabei hat ein zusammengesetzter Flügelmittelteil einen wesentlich geringeren Widerstand, weil, erstens, der tatsächliche Gesamtflächeninhalt des größten Querschnitts der TgS und der Antriebe geringer als die Fläche des größten Querschnitts eines äquivalenten durchgehenden Flügels ist, und zweitens, bei einem zusammengesetzten Flügelmittelteil nur die vordere TgS mit der freien Anströmung zusammen wirkt, drittens, die Auswirkung der Antriebe zu einem anderen Charakter der Umströmung und der Verminderung von Form- und Auftriebswiderständen im Vergleich zu einem äquivalenten durchgehenden Flügel, führt.

Wenn man die Funktion eines durchgehenden Flügelmittelteils in einem Strom als passive Art der Auftriebskraftbildung bezeichnet, wird die Funktion eines zusammengesetzten Flügelmittelteils mit der vorgeschlagenen Belüftungsmethode zur aktiven Art mit dem verbesserten aerodynamischen Ergebnis.

Für die Gewährleistung der Amphibienfähigkeit und Außenlandungsfähigkeit bei allen BEF der gegebenen Erfindungsgruppe ist eine Start-Lande-Anlage realisiert - das größtmögliche, statische Hochdruckluftkissen (statische LK). Das vorhandene Fahrwerk in Form vom Luftkissen der vergrößerten Fläche reduziert die Einheitsbelastung auf das Luftkissen wesentlich. Dies reduziert die notwendige Höhe des Differenzdrucks im statische LK und dementsprechend die notwendige Leistung der Triebwerke während des Starts, was die Sparsamkeit des Starts und der Bewegung auf dem LK verbessert. Das Fahrwerk auf dem LK der vergrößerten Fläche verbessert die Start-Lande-Charakteristiken und erhöht die Gesamtsicherheit des Fluges. Im Einzelnen erhöht sich die Sicherheit sowohl der vorgesehenen Landungen auf beliebige ebene Landesgebiete oder Gewässer, als auch der Ausführung von Notlandungen beim Auftreten der Ausnahmefälle während des Fluges.

Die technische und wirtschaftliche Effektivität der statischen LK sind gewährleistet durch: die Anwendung der fast gesamten Leistung der Marschantriebe für die statische Luftentladung, das Fehlen der zusätzlichen Antriebe und Ventilatoren, das Fehlen der Drehklappen, Schirmplatten, Spreizklappen und Rohrleitungen für die Lenkung der Triebwerkstrahlen (mit Ausnahme von dem Fall der Ausführung des Senkrechtstarts, Landung), die volle Auslastung des Impulses der Triebwerkstrahlen für die Bildung des Differenzdrucks im Hohlraum der statischen LK bei einer unveränderten Lage der Antriebe und Triebwerke.

Wie oben angegeben, entstehen aufgrund der Einstellwinkel der Antriebe die vertikalen Komponenten der Auftriebskräfte, die sich mit den aerostatischen und aerodynamischen Auftriebskräften summieren. Dies erleichtert den Start und die Bewegung auf dem statischen LK, aber auch verbessert die Stabilität und Lenkbarkeit in diesen Betrieben.

Eine zusätzliche volllenkbare horizontale Steuerfläche, ausgeführt in der Spannweitenrichtung der hinteren (letzten) TgS und montiert über deren Flaperons mit der Möglichkeit der TgS- Umströmung mit dem oberen Stromteil des MSA, gewährleistet zusätzliche Auftriebskraft und Lenkbarkeit, aerodynamische Bremsung und Schubumkehr.

Zusätzlich zu den Maßnahmen für die Gewährleistung der natürlichen statischen und dynamischen Längsstabilität ist eine volle Schwingungsdämpfung beim Nicken durch die Steuerung der Werte von vorderen und hinteren Auftriebskräften gewährleistet. Der vorderen - als Funktion von der Nicklage nach dem Typ der tiefen negativen Rückkopplung, und der hinteren nach dem Typ der positiven Rückkopplung. Die Steuerung der Werte von vorderen und hinteren Auftriebskräften wird durch die automatische dynamische Steuerung des Winkelausschlags der Flaperons entsprechend der vorderen und hinteren TgS realisiert. Da eine solche Steuerung durch eine herkömmliche mechanische Leitung, die die gegebenen Konstruktionselemente - Höhenruder und Flaperons der TgS - verbindet, realisiert werden kann, also ohne Anwendung eines komplexen automatischen Steuerungs- und Dämpfungssystems (ASS und ADS), kann dies als eine weitere Komponente der Eigenschaft der natürlichen Längsstabilität und Dämpfung betrachtet werden. Gleichzeitig kann das System dynamischer Steuerung der Flaperonslage auch mithilfe der bekannten Elemente ASS ausgeführt werden.

Die Erweiterung der Funktionalität, das heißt die Erweiterung des Aufgabenbereiches, der von der Familie der Luftfahrzeuge auf der Basis der gegebenen Erfindungsgruppe gelöst wird, wird sowohl durch das Vorhandensein des Start- und Landungswerk auf dem statischen Luftkissen und hohe flugtechnische Parameter, als auch durch eine Vielzahl der Varianten einer konkreten Ausführung auf der Grundlage des Basisprinzips gewährleistet. Da das Basisprinzip technisch in Form einer Basiskonstruktionsgruppe realisiert ist, kann auf der Grundlage dieser Gruppe, eine Reihe der Einheitsbausteine hergestellt werden, die die Basis dafür schaften durch eine dreidimensionale und quantitative Auslegung Bodeneffektfahrzeuge für die Lösung eines umfangsreichen Bereiches, praktischer Aufgaben zu entwickeln. Die Typen der verwendeten aerodynamischer Profile der TgS, ihre relative Dicke, die Einstellwinkel der TgS und MSA hängen von dem Verwendungszweck des Bodeneffektfahrzeugs ab. Für die mehr beladenen und langsamlaufenden werden erhöhte Profildicken, Einstellwinkel und vergrößerte Durchmesser der MSA verwendet. Außerdem erweitert sich, das Einsatzgebiet aufgrund der Möglichkeit der BEF, gebaut auf der Grundlage der vorgeschlagenen technischen Lösungen, einen Pseudosenkrecht- oder Senkrechtstart und -landung durchzuführen. Dabei werden die Pseudosenkrechtstart - Landung ohne jegliche wesentliche Veränderungen der Basisvarianten gewährleistet und für die Senkrechtstart - Landung werden eine Vergrößerung der Durchmesser der TgS, der Triebwerksleistung und eine Gewährleistung des Schwenks der TgS (oder eines Teils der TgS) mit den Antrieben um ihre Querachsen in die vertikale Lage, erforderlich. Sparsamkeit, Effektivität und Sicherheit des Schwebezustands im Vergleich zu den Hubschaubem steigt wesentlich, aufgrund sowie des Fehlens eines komplexen und schweren Hauptgetriebes, Heckrotors und der Heckrotorwelle, als auch des Fehlens der sich weit über den Außenabmessungen der Karosserie hinaus drehenden Hauptrotorblätter, dank der Anwendung von vier oder mehreren Antrieben für die Bildung des Senkrechtschubs, aber auch der großen Fläche der horizontalen Tragflächen, unter denen Lufthochdruckgebiete entstehen. Dabei wird ein solches BEF eine wesentlich größere Reichweite des Horizontalflugs, höhere Geschwindigkeit und bessere Sparsamkeit aufweisen. Die Variabilität der gegebenen Erfindungsgruppe lässt Transportmittel für solche Funktionen schaffen, die zur Zeit nur für herkömmliche Schiffe kennzeichnend sind.

Der nächste Faktor, der die Flugsicherheit und das Anwendungsgebiet der BEF unmittelbar beeinflusst, ist das Flugverfahren. Bei praktisch allen gebauten BEF wird ein Flugzeug-Flugverfahren angewendet, das eine ebene Strecke des Anlaufs beim Start, eine Veränderung der Nicklage zum Erreichen der nötigen Auftriebskraft auf allen Flugetappen und bei Manöverausführung, sowie einen Auslauf nach der Landung beinhaltet. Abweichend davon ist ein Stichpunkt des vorgeschlagenen Verfahrens die Ausführung aller Flugelemente und -etappen auf den Höhen, die niedriger als die ungefährlichen sind (oder auf den Höhen, die für die BEF-Flüge ausgewählt sind - bis 150m über dem Meeresspiegel), mit einem konstanten, der Null gleiche Nicklage. Die Sicherheit erhöht sich dadurch, dass, einerseits, die Flugführungstechnik auf den gefährlichsten Flugstrecken - bei der Landung, bei der Manövrierung im Bodeneffekt-Betrieb und im Translationsflug vereinfacht wird. Dies führt zur Senkung der emotionalen Spannung des Piloten und ist an und für sich ein positiver Faktor. Andererseits, eine ständige horizontale der Landelage entsprechende Lage des BEF in einem Bodeneffekt- oder Bodeneffekt-nahen-Flug, vereinfacht wesentlich die Arbeit der Crew bei der Ausführung einer sowohl geplanten, als auch einer gezwungenen Landung, und bei einer Korrektur der Auswirkung von Außenstörungen und Fehler in der Flugführungstechnik. Zumal sich selbst die Möglichkeit der fehlerhaften Handlungen der Crew bei einer solchen Flugausführung verringert. Eine ständige Horizontallage des Rumpfs erhöht den Komfort eines langen Aufenthaltes der Fluggäste und der Crew an Bord und ebenso die Flugsicherheit beim Lastentransport. Das Flugausführungsverfahren mit einer konstanten Nicklage ist mit den bei der gegebenen Erfindungsgruppe vorgeschlagenen Verfahren der Bildung von aerodynamischen Kräften und den Konstruktionslösungen für die Realisierung dieser Verfahren konzeptionell verbunden. Das heißt, die Auslegungen und konkreten Konstruktionen der BEF sind so, dass sie keine Veränderung des Nickens bei der Flugausführung, vom Start bis zur Landung, erfordern.

Die Erhöhung des Nutzungskomforts wird durch die Möglichkeit der Herstellung von Ausgangstüren und Beladungsöffnungen, erreicht die praktische und sichere Wege und Möglichkeiten des Ein- und Ausstiegs der Fluggäste, Beladens - Abladens der Fracht, sowohl auf Land, als auch flott gewährleisten. Die Auslegungsmöglichkeiten erlauben eine Entwicklung der BEF mit einer geradelinigen Scheuerleiste in der Anlegekonfiguration für die Gewährleistung des Anlegens an die existierenden Hafenanlagen oder an die herkömmlichen Schiffe.

Der Wartungskomfort wird durch das Fehlen der hoch angeordneten Triebwerke, Geräte und Betankungsstutzen, die einen täglichen Zugang erfordern, gewährleistet, die Wartung kann ohne spezielle Anlagen - alle möglichen Leiter oder Hilfsmittel, und in flott durchgeführt werden. Bei den hochschweren BEF kann der Zugang zu den Triebwerken vom Inneren des Flügels her gewährleistet werden.

Für qualitative Kontrolle der Flug- und Stabilisierungsfähigkeiten eines auf der Grundlage der gegebenen Erfindungsgruppe gebauten BEF wurde ein Freiflugmodell des BEF entwickelt und getestet. Der Flügelmittelteil des Modells ist aus drei TgS mit einer Überlappung in der Horizontalfläche zusammengesetzt. Die vordere TgS ist mit einer frei aufgehängten Klappe ausgerüstet, die durch eine Stange und zwei Hebel mit der Achse des Bughöhenruders -Anstellwinkelgeber (AWG) verbunden, dessen Hälften in den Frontteilen der zusätzlichen TgS frei aufgehängt sind. Das Modell ist mit pfeilförmigen Außenflügel ausgestattet. Für die Längstrimmung besitzt die hintere TgS eine Möglichkeit der Veränderung des Einstellwinkels und der Änderung des Klappenausschlagwinksi, der nach der Einstellung fixiert bleibt. Da das Modell selbstfliegend (ohne Antrieb) ist, gibt es nur eine optimale Fluggeschwindigkeit, eine optimale Schwerpunktlage und ein optimaler Winkel zwischen den Flächen der Klappe der vorderen TgS und des Bughöhenruders, die die besten Flugcharakteristiken gewährleisten. Der Flügelmittelteil des Modells hat eine Länge der äquivalenten Tiefe von 310 mm. Die Schwerpunktlage - 37% nach der mittleren Flügeltiefe des Flügelmittelteils.

Bei einem horizontalen Start von der Bodenoberfläche mithilfe einer Gummifluzeugschleuder steigt das Modell (ohne Vergrößerung des Nickens) auf die Höhe von 300-500mm, fliegt stabil eine gewisse Strecke auf einer konstanten Höhe, danach fliegt es mit Geschwindigkeitsverlust sanft herunter (ohne Veränderung der Nicklage) und landet in der Horizontallage. Es fehlt das Nicken, das für die herkömmlichen Flugzeugschemen bei einer falsch gewählten Schwerpunktlage oder einer Überhöhung der optimalen Startgeschwindigkeit kennzeichnend ist. Dabei sieht man genau die horizontale Flugstrecke im Bodeneffekt-Betrieb, dessen Höhe, in allen Fällen die Tiefe des Flügelmittelteils übersteigt.

Bei einem Flug auf der Höhe, die 2-3 Mal die Tiefe des Flügelmittelteil übersteigt und einem Durchflug über der Grenze einer stufenartigen Erhöhung des Bodens, die die tatsächliche Flughöhe verringert, wird eine sprunghafte Vergrößerung der Nicklage beobachtet, was auf einen für diese Auslegung maßgeblichen Bodeneffekt auf den Höhen hindeutet, die die Tiefe des zusammengesetzten Flügelmittelteils überschreiten.

Deutlich zeigt sich die Auswirkung des Winkels zwischen den Flächen der Klappen der vorderen TgS und des Bughöhenruders. Bei einer Verkleinerung dieses Winkels verringert sich die Flughöhe und bei der Vergrößerung steigt sie.

Es wurde eine volle Schwingungsdämpfung in der Längssteuerung bestätigt.

Die Gesamtstrecke, die das Modell (mit Auslauf von 2 - 3 m) vom Start bis zum vollständigen Stippen zurücklegt, überschreitet die Flughöhe um zwei Potenzen und beträgt 25 - 30 m.

### Kurzbeschreibung der Zeichnungen

Die Erfindung wird durch die Zeichnungen mit Darstellung von einigen Varianten konkreter Ausführung erläutert. Die Figuren zeigen das Folgende:
- Fig. 1: - Das Schema der gegenseitigen Positionierung von Massenmittelpunkt, Neutralpunkt von Höhe und Neutralpunkt von Anstellwinkel, das eigene statische und dynamische Stabilität gewährleistet.
- Fig. 2: - Basiskonstruktionsgruppe (BKG). Gesamtansicht.
- Fig. 3: - Der propulsiv-tragenger Komplex des Bodeneffektfahrzeugs. Gesamtansicht.
- Fig. 4: - Propulsivkomplex. Zusammenstellungs-Schnittzeichnung. Auftriebsklappensystem in der Lage für die Bildung des statischen Luftkissens. Gesamtansicht.
- Fig. 5: - Umströmungsschema des Propulsivkomplexes im Betrieb des statischen Luftkissens.
- Fig. 6: - Umströmungsschema des Propulsivkomplexes im Betrieb des Bodeneffektfluges.
- Fig. (7 - 10): - Varianten der Bodeneffektfahrzeuge mit einer BKG in der Längsrichtung. Gesamtansichten.
- Fig. 7: - Leichtes Mehrzweck-Bodeneffektfahrzeug des Typs «A». Verglasung ist auf Fig. 9 (a - c) dargestellt.
- Fig. 8: - Leichtes Mehrzweck-Bodeneffektfahrzeug. Typen «B» und «C».
- Fig. 9: - Patrouillen-Bodeneffektfahrzeug des Typs «A». Die Fahrwerkverkleidung ist nicht dargestellt.
- Fig. 10: - Leichtes oder mittleres Transport-Bodeneffektfahrzeug. Typen «B» und «C».
- Fig. 11 (a): - Bodeneffektfahrzeug nach der Fig. 7. Seitenansicht.
- Fig. 11 (b): - Bodeneffektfahrzeug nach Fig. 7. Draufsicht. Fig. 11 (c) - Bodeneffektfahrzeug nach Fig. 7. Frontansicht, Maßstab vergrößert.
- Fig. 12 (a): - Bodeneffektfahrzeug nach Fig. 8. Seitenansicht.
- Fig. 12 (b): - Bodeneffektfahrzeug nach Fig. 8. Draufsicht.
- Fig. 12 (c): - Bodeneffektfahrzeug nach Fig. 8. Frontansicht.
- Fig. 13 (a): - Bodeneffektfahrzeug nach Fig. 9. Seitenansicht.
- Fig. 13 (b): - Bodeneffektfahrzeug nach Fig. 9. Draufsicht.
- Fig. 13 (c): - Bodeneffektfahrzeug nach Fig. 9. Frontansicht.
- Fig. 14: - Bodeneffektfahrzeug nach Fig. 8. Gesamtansicht von unten.
- Fig. 15: - Bodeneffektfahrzeug nach Fig. 9. Gesamtansicht von unten.
- Fig. 16 (a): - Bodeneffektfahrzeug nach Fig. 10. Seitenansicht.
- Fig. 16 (b): - Bodeneffektfahrzeug nach Fig. 10. Draufsicht.
- Fig. 16 (c): - Bodeneffektfahrzeug nach Fig. 10. Frontansicht.
- Fig. 16 (d): - Bodeneffektfahrzeug nach Fig. 10. Gesamtansicht.
- Fig. 16 (e): - Bodeneffektfahrzeug nach Fig. 10. Gesamtansicht von unten.
- Fig. 17: - Gesamtansicht des Propulsivkomplexes des Steuerbords mit zwei BKG. Der Rumpf ist nicht dargestellt. Mechanisierung in der Lage des Reiseflug-Betriebs.
- Fig. 18: - Gesamtansicht nach Fig. 17. Mechanisierung in der Lage von Senkrechtstart (-landung).
- Fig. 19: - Umströmungsschema des Propulsivkomplex nach Fig 17. Bodeneffekt-Betrieb.
- Fig. 20: - Umströmungsschema des Propulsivkomplexes nach Fig. 18. Senkrechtstart-Betrieb.
- Fig. 21: - Umströmungsschema des Propulsivkomplexes nach Fig. 17. Betrieb des statischen Luftkissens.
- Fig. 22: - Mittleres oder schweres Bodeneffektfahrzeug mit Propulsivkomplex nach Fig. 17. Typen «B» und «C». Gesamtansicht.
- Fig. 23: - Bodeneffektfahrzeug nach Fig. 22. Gesamtunteransicht. Mechanisierung für den Reiseflug-Betrieb.
- Fig. 24 (a): - Bodeneffektfahrzeug nach Fig. 22. Seitenansicht.
- Fig. 24 (b): - Bodeneffektfahrzeug nach Fig. 22. Draufsicht.
- Fig. 24 (c): - Bodeneffektfahrzeug nach Fig. 22. Frontansicht.
- Fig. 25: - Bodeneffektfahrzeug nach Fig. 22. Gesamtansicht von unten. Mechanisierung in der Lage für das statische Luftkissen.
- Fig. 26: - Bodeneffektfahrzeug nach Fig. 22. Gesamtansicht von hinten.
- Fig. 27: - Mittleres oder schweres Bodeneffektfahrzeug mit Propulsivkomplex. Typen «B» und «C». Gesamtansicht.
- Fig. 28 (a): - Bodeneffektfahrzeug nach Fig. 27. Seitenansicht.
- Fig. 28 (b): - Bodeneffektfahrzeug nach Fig. 27. Draufsicht.
- Fig. 28 (c): - Bodeneffektfahrzeug nach Fig. 27. Frontansicht.
- Fig. 28 (d): - Bodeneffektfahrzeug nach Fig. 27. Gesamtansicht von unten. Beispilform und die Grenze des dynamischen Luftkissens.
- Fig. 29: - Bodeneffektfahrzeug nach Fig 27. Gesamtansicht von unten. Mechanisierung für den Reiseflug-Betrieb.
- Fig. 30: - Bodeneffektfahrzeug nach Fig. 27. Gesamtansicht von unten. Mechanisierung in der Lage für das statische Luftkissen.
- Fig. 31: - Freiflugmodell, Gesamtansicht.
- Fig. 32: - Freiflugmodell. Gesamtansicht. Linke Flächen und aerodynamische Endscheiben sind nicht dargestellt.
- Fig. 33 (a): - Modell nach Fig. 31. Seitenansicht. Schnitt.
- Fig. 33 (b): - Modell nach Fig. 31. Draufsicht.
- Fig. 33 (c): - Modell nach Fig. 31. Frontansicht.
- Fig. 34: - Mechanischer Systemantrieb der Selbststabilisierung und Dämpfung. Gesamtansicht des Propulsivkomplexes des Backbords.
- Fig. 35: - Schema der Umströmung im stationären Flug.
- Fig. 36: - Betrieb des Selbststabilisierungssystems bei einer Vergrößerung des Nickwinkels.
- Fig. 37: - Betrieb des Selbststabilisierungssystems bei einer Verringerung des Nickwinkels.

### Ausführung der Erfindung

Wie oben angegeben, können auf der Grundlage der gegebenen Erfindungsgruppe Bodeneffektfahrzeuge im ganzen Bereich der Gewichtsklassen bei einer Vielzahl der Varianten konkreter Konstruktionsausführung hergestellt werden. Aus diesem Grund werden zuerst die Konstruktionen beschrieben, die ein einheitliches Basisprinzip realisieren und die Elemente enthalten, die für Bodeneffektfahrzeuge dieser Erfindungsgruppe kennzeichnend sind.

Propulsiv-tragender Komplex des Bodeneffektfahrzeugs enthält zwei Flächen geringer Streckung (TgS) - die vordere TgS 1, mit einer Vorderklappe 2, einem halbringförmigen Bereich 3 der Oberseite und Flaperons 2, und die hintere TgS 5, mit einem Mantelschraubenantrieb (MSA) 6, einem Triebwerk 7 und Flaperons 8. Die Seitenkante der TgS 9 sind durch aerodynamische Scheiben - Schwimmern (ASS) 10 verbunden. Der Einstellwinkel der vorderen TgS 1 gleicht dem mittleren besten Anstellwinkel des angewendeten aerodynamischen Profils für den errechneten Bereich der Reiseflughöhen im Bodeneffekt-Betrieb unter Berücksichtigung der Wirkung der Absaugung des Luftstroms und der grenznahen Schicht von ihrer Oberseite her. Der Einstellwinkel der hinteren TgS 5 kann kleiner, gleich oder größer als der Anstellwinkel der vorderen TgS 1 sein und wird durch Anforderungen an die flugtechnischen Charakteristiken jedes einzelnen Bodeneffektfahrzeugs bestimmt. Dabei sind unter TgS Hohlräume eines statischen LK 11, dynamischen LK (DLK) 12 und statisch-dynamischen LK (StDLK) 13 gebildet.

Die Innenflächen 14 ASS 10 dienen als Seitenabsperrungen der Luftkissen. Bei Bewegung im Betrieb des statischen LK, dient die Frontklappe 2 als seine vordere Absperrung und die Flaperons 8 der hinteren TgS 5 - als seine hintere Absperrung. Während des Fluges leisten die Flaperons 4 der vorderen TgS 1 die Funktion der hinteren Absperrung des dynamischen LK und gleichzeitig die Funktion der vorderen Absperrung des statisch-dynamischen LK, dabei fungieren die Flaperons 8 der hinteren TgS 5 als hintere Absperrung des statisch-dynamischen LK. Die Hinterkanten der Flaperons 4 und 8 in der Neutrallage, die dem Standardbetrieb entspricht, können in derselben oder in verschiedenen Horizontalflächen liegen. Deren gegenseitige Ausrichtung hängt von dem Typ des Bodeneffektfahrzeugs, dessen Verwendungszweck, der Belastungsdichte an der Tragfläche, der Gesamtauslegung, die die relative Größe der Elemente beinhaltet, die den propulsiv-tragenden Komplex bilden, und der Anzahl der angewendeten Basiskonstruktionsgruppen entlang der Längsachse ab.

An den Oberkanten 15 der Endscheiben - Schwimmern 10 sind zusätzliche Tragflächen geringer Streckung (zTgS) 16 montiert. In der Frontseite der zTgS 16 sind die Bughöhenruder 17 (Elevons) realisiert, und im Heckteil die Heckhöhenruder 18 (Elevons). Die Heckhöhenruder 18 können als Elevons von Tragflächen großer Streckung (Außenflügel 19) - dienen, die an der Seitenkante der Heckteile der zTgS 16 montiert sind. Die Außenflügel sind mit den Nasenklappen 20, Elerons 21 und Elevons 22 ausgerüstet. Die Außenflügel 19 sind so angeordnet, dass die Projektion des resultierenden Druckmittelpunkts der Außenflügel 19 und der zTgS 16 auf die Längsachse zwischen dem Massenmittelpunkt und der Heckkante der hinteren TgS 5 liegt. Dies verbessert die statische Längsstabilität, weil sie den Neutralpunkt nach Anstellwinkel des gesamten Tragesystems des Bodeneffektfahrzeugs verschiebt. Dabei erweitert sich der Bereich der zulässigen Schwerpunktlagen.

Auf den Oberseiten der TgS, mit der Stirnseite der vorderen TgS 1 beginnend, sind ein oder mehrere Interzeptors 23 platziert. Die Interzeptors 23 gewährleisten bei deren Belüftung durch den ein- oder ausgehenden Strahl des Mantelschraubenantrieb 6 (MSA), zusätzliche Auftriebskräfte bei geringen horizontalen Geschwindigkeiten - beim Start, Rolling, Steigflug mit einem großen Steigwinkel und beim Schweben.

Über den Flaperons der hinteren TgS 5 mit einer Verschiebung in das Heck, ist eine vollschwenkbare Steuerfläche 24 des Flügelmittelteils 25 installiert. Die Fläche 24 lässt einen Zuwachs der Gesamtauftriebskraft auf allen Flugetappen erzielen. Beim Rolling auf dem statischen LK gewährleistet die Fläche 24 eine Anfangstrimmung (horizontale Rumpflage) und lässt die Steuerung der horizontalen Geschwindigkeit zu und kann bei der Landung eine Funktion der Bremsklappe oder des Arbeitselementes vom Schubumlenker leisten.

Ein Doppelseitenleitwerk 26 mit Seitenrudern 27 ist auf den Heckspitzen der AES 10 installiert.

Vor dem MSA 6, in den Grenzen seiner Scheibe, sind Horizontalflächen 28 der Schubvektorsteuerung installiert, die ein Flügelprofil haben. Die Flächen 28 sind schwenkbar in einer Gitterform montiert, so dass ihre Hinterkanten auf einer Ebene liegen, parallel zur Ebene der Vorderkante des Rings des MSA 6.

Entscheidend für die Notwendigkeit der Anwendung von Interzeptors 23, der vollschwenkbaren Steuerfläche 24 und der Steuerflächen 28 von Schubvektoren sind der Verwendungszweck des Bodeneffektfahrzeugs, seine Beladung und die Nutzungsbedingungen. Beispielsweise, können leicht beladene Hochgeschwindigkeitsbodeneffektfahrzeuge mit einem hohen Leistung-zu-Gewicht-Verhältnis ohne diese genutzt werden.

Die Unterhälfte der Innenfläche des Rings 29 ist fließend mit der Oberfläche 30 der vorderen TgS 1 und der Innenfläche 14 der AES mit Bildung von einem halbringförmigen Bereich 3 der TgS 1 verknüpft, der sich fließend nach vorne in die Oberfläche 30 der vorderen TgS 1 mit einer linearen Erzeugenden entfaltet. Die Unterhälfte der Hinterkante des Rings 29 ist fließend mit der Innenfläche 14 der AES 10 in Richtung «in den Heck» so verknüpft, dass ein Schwenk der Elevons 4 ausgehend von der Neutrallage nach oben gewährleistet wird.

Das Verhältnis zwischen dem Durchmesser des Eingangsschnitts des Rings 29 und der Spannweite der Oberfläche 30 der vorderen TgS 1 kann kleiner, größer oder gleich eins sein. Das Verhältnis zwischen dem Durchmesser des Ausgangsschnitts des Rings 29 und der Länge der mit ihm verknüpften Vorderkante 31 der hinteren TgS 5, kann kleiner, größer oder gleich eins sein. Diese Verhältnisse hängen von der Gesamtauslegung und den konstruktiven Lösungen ab, die möglichst den Anforderungen an die technischen Charakteristiken eines konkreten Bodeneffektfahrzeugs entsprechen. Die Vorderkante 31 der hinteren TgS 5 kann sowohl auf der Ebene des Ausgangsschnitts des Rings 29, als auch in dem Ring angeordnet sein. Diese Anordnung wird durch die Aufgabe der Gewinnung der besten Betriebscharakteristiken eines konkreten MSA in allen Betrieben definiert. Die Vorderkante 31 der hinteren TgS 5 ist scharf. Die Vorderkante 32 der Flaperons 4 der vorderen TgS 1 ist auf der Ebene des Ausgangsschnitts des Rings 29 angeordnet. Die Oberfläche der Flaperons 4 bei ihrer Neutrallage ist mit der erzeugenden Innenfläche des Rings 29, die in der Rumpfmittelebene liegt, tangential verknüpft. Zwischen der Unterseite 33 der hinteren TgS 5 und den Oberseiten der Flaperons 4 ist ein Luftkanal 34 gebildet, durch den man unter das Flügelmittelteil den unteren Teil des Antriebsstrahls 35 des MSA 6 lässt. MSA 6 montiert man mit einem Einstellwinkel, der gleich oder nahe dem Einstellwinkel der hinteren TgS 5 ist, der die beste Umströmung ihrer Oberflächen gewährleistet.

Auf der Oberseite 30 und unter dem Interzeptor 23 sind Ansaugöffnungen (oder Spalten) des Ejektionssystems der Grenzschicht (nicht angezeigt) realisiert, deren Auslassöffnungen (oder Spalten) auf der Innenfläche des Rings 29 hinter der Rotationsscheibe der Schraube des MSA ausgeführt sind.

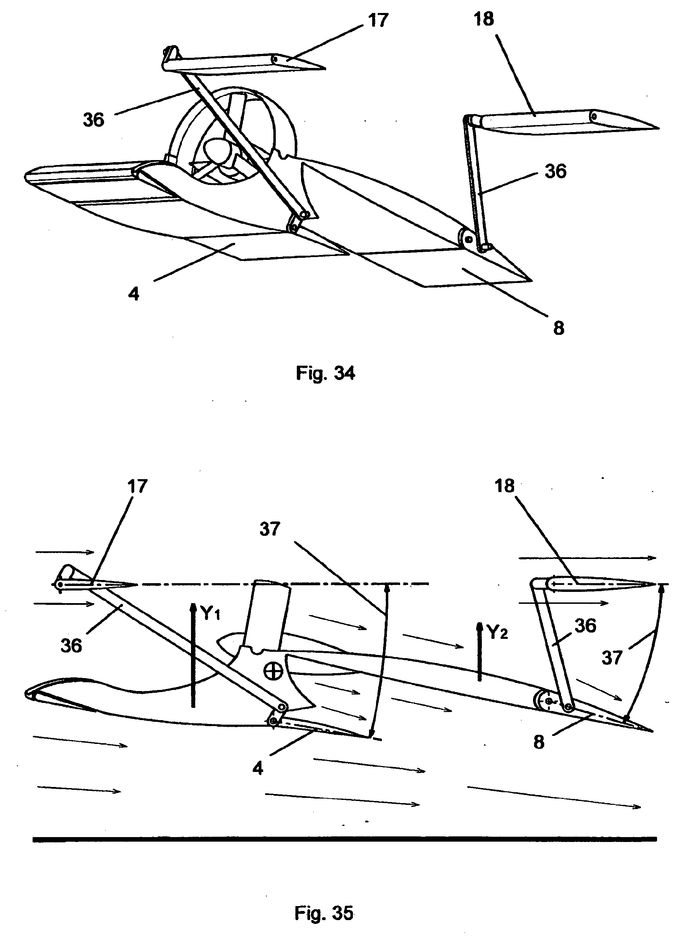

Das System der automatischen Stabilisierung und Schwingungsdämpfung nach dem Nicken (Fig. 34 - 37) beinhaltet einen herkömmlichen Anstellwinkelgeber (AWG), Übertragungskanal der Steuersignale (elektrische oder optische Kabel), elektrische oder hydraulische Betätigungseinrichtung(en) (aufgezählte Komponente nicht angezeigt) und ein Arbeitsorgan - Flaperons 4 der vorderen TgS.

Dieses System kann in einer Variante ausgeführt werden, in der die Funktion des Anstellwinkelgebers das freie Bughöhenruder 17 erfüllt, das sich selbsttätig nach der Strömung einstellt. Gleichzeitig kann es sowohl die Funktionen der Betätigungseinrichtung, als auch der Antriebsmaschine erfüllen. In diesem Fall wird die Übergabe der steuernden Krafteinwirkung auf die Flaperons 4 der vorderen TgS, beispielsweise mittels einer herkömmlichen mechanischen Leitung 36 erfüllt.

Das Steuersystem der Flaperons 4 der vorderen TgS ermöglicht die Steuerung des Winkels 37 zwischen der Neutrallage-Ebene (nach Neigung) der Flaperons-Lage und der Neutrallage-Ebene des AWG. Die Steuerung des Winkels 37 wird durch die Veränderung des Anstellwinkels der Neutrallage der TgS-Flaperons und durch die Fixierung im Steuersystem eines Winkelwerts 37 im Falle, zum Beispiel, eines Fly-by-wire-Steuersystems realisiert. Im Falle einer Verbindung des AWG (Höhenruder 17) und der TgS-Flaperons 4 durch eine mechanische Leitung, erfolgt die Nachjustierung durch Veränderung der Länge der mechanischen Leitung. Der Übertragungskanal des Steuersignals (mechanische Leitung) hat ein Ausschaltmechanismus (Trennung) der AWG und TgS-Flaperons 4 (Ausschaltmechanismus nicht angezeigt). In diesem Falle wird die Steuerung der TgS-Flaperons 4 nach dem Typ der schwebenden Elevons realisiert.

Der Höhenruder 17 kann in Form von zwei Elevons ausgeführt sein, dann kann jedes Elevon des Ruders beim Erfüllen einer Funktion des AWG eine eigene Verbindung mit entsprechenden TgS-Flaperons 4 (Fig. 34) haben. Auf diese Weise kann eine der Varianten des Querkanals der Steuerung von TgS-Flaperons 4 umgesetzt werden.

Bei der AWG-Steuerung (des Bughöhenruders 17) werden die Flaperons 4 der vorderen TgS auf dieselbe Seite geschwenkt, wie auch der AWG. Dies gewährleistet eine Steuerung der Größe der vorderen Auftriebskraft 38 als Funktion des Nickwinkels nach dem Prinzip der tiefen negativen Rückkopplung. Die Längstrimmung wird dabei durch Flaperons der hinteren TgS 5 und die Ruderfläche 24 des Flügelmittelteils gewährleistet.

Das System der automatischen Stabilisierung und Schwingungsdämpfung nach dem Anstellwinkel kann ein zusätzliches Steuersystem der hinteren Auftriebskraft 39 miteinschließen. Das Arbeitsorgan dieses Systems sind die Flaperons 8 der hinteren TgS, und die Funktion des AWG können der vorhandene AWG für die Flaperons 4 der vorderen TgS, oder eben so ein zusätzlicher AWG, oder aber ein freies, sich selbsttätig nach der Strömung einstellendes Heckhöhenruder 18, ausführen. Das zusätzliche System wird konstruktiv ähnlich dem primären, ausgeführt aber mit einer Auslenkung des AWG und der Flaperons 8 der hinteren TgS in entgegengesetzte Richtungen. Dies gewährleistet eine Steuerung der Höhe der hinteren Auftriebskraft 38 als Anstellwinkelfunktion nach dem Typ der positiven Rückkopplung.

Auf Fig. 34 - 37 sind der Grundaufbau und das Funktionsprinzip des Systems der Autostabilisierung und Dämpfung dargestellt als Beispiel der Variante mit einer einfachen mechanischen Leitung zwischen den TgS-Flaperons und den Höhenrudern, die die Funktion der Anstellwinkeigeber erfüllen.

Fig. 35 - Umströmungsschema im stationären Flug. Ruder 17 und 18 (AWG) werden nach der Strömung eingestellt.
Nach der Trimmung fixiert sich der Winkel 37 im Steuerungssystem. Das System ist ausbalanciert.

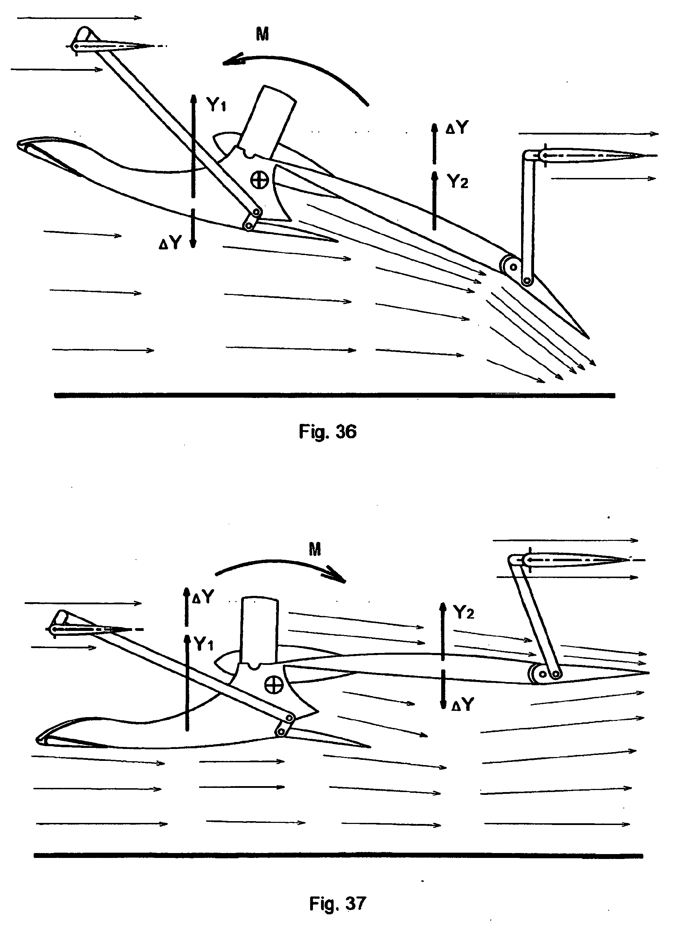

Auf Fig. 36 - Hochreißen. Der Anstellwinkel der Ruder wird positiv. Der Flugstau erhöht den Druck auf den Unterflächen der Ruder 17 und 18. Dieser Druck schwenkt die Ruder um ihre Achse und die Ruder stellen sich wieder in der Strömungsrichtung ein. Mittels des Steuergestänges schwenkt das Ruder 17 die Flaperons 4 nach oben und das Heckruder 18 - die Flaperons 8 nach unten. Die dabei auf den TgS entstehenden Anstiege der Auftriebskräfte △Y bilden das Rückkehrmoment.

Auf Fig. 37 - Sturzbewegung. Die Wirkungsweise ist dieselbe, wie auf Fig. 36, aber in die Gegenrichtung. Der Anstellwinkel der Ruder 17 und 18 wird negativ und der Druck auf deren Oberseiten erhöht sich. Wieder in der Strömungsrichtung einstellend, lenken die Ruder 17 und 18 die Flaperons 4 nach unten und die Flaperons 8 nach oben aus. Auf den TgS entstehen Anstiege der Auftriebskräfte △Y, die ein Rückkehrmoment bilden und das System in die Ausgangstage bringen.

Auf Fig.1 ist eine Bedingung der Gewährleistung eigener statischer und dynamischer Stabilität des Bodeneffektfahrzeuges dargestellt, bei der der Neutralpunkt von Höhe 40 vor dem Massenmittelpunkt 41 angebracht werden muss. Dabei muss der Massenmittelpunkt 41 zwischen dem Neutralpunkt von Höhe 40 und der Mitte 42 des Abstands zwischen dem Neutralpunkt von Höhe 40 und dem Neutralpunkt von Anstellwinkel 43 liegen.

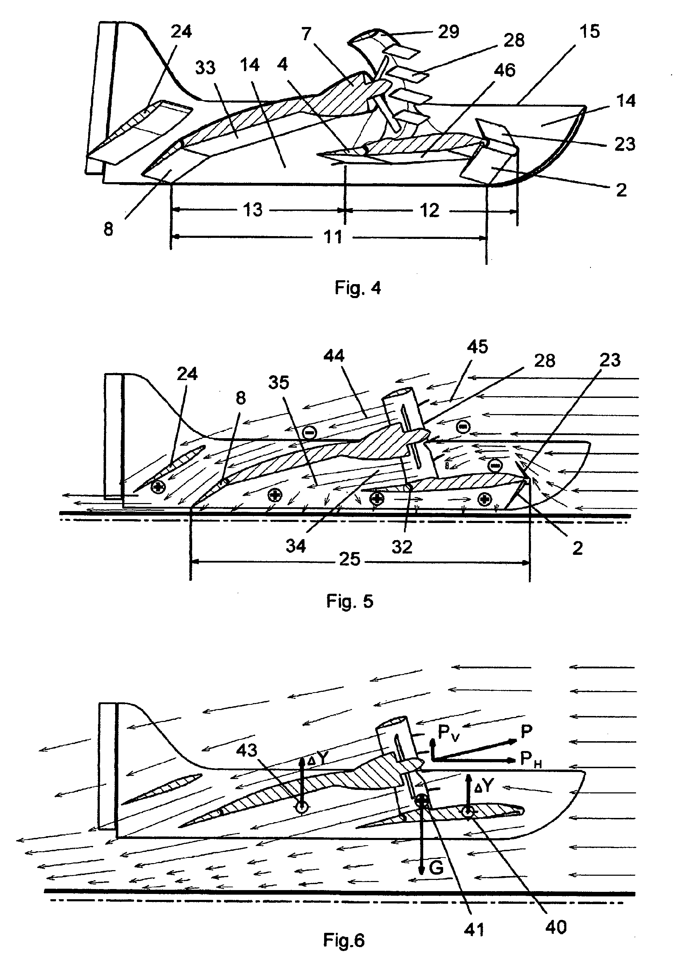

Die Funktion des propulsiv-tragenden Komplexes im Betrieb des statischen LK ist auf Fig.5 dargestellt. Für die Durchführung des Starts und die Bewegung auf dem statischen LK werden die vordere Spreizklappe 2 und die Flaperons 8 der hinteren TgS in die extreme Tieflage ausgelenkt, bei der ihre Hinterkanten auf dem Boden liegen und dabei zusammen mit den Innenflächen 14 der AES eine geschlossene Absperrung des statischen LK bilden. Der Interceptor 23 und die Flächen 28 der Steuerung von Vektorschüben werden auf die Winkel ausgelenkt, die einen maximalen Anstieg der Auftriebskraft gewährleisten, aus. Die vollenkbare Ruderfäche 24 des Flügelmittelteils wird so eingestellt, dass die die Längstrimmung (Horizontalität des Rumpfs) für die Nominalschwerpunktlage im Betrieb des statischen LK gewährleistet ist. Die Flaperons 4 der vorderen TgS werden in die Neutrallage gebracht oder nach oben bis zur Horizontallage deren Unterflächen ausgelenkt. Beim Triebwerk wird der Startbetrieb eingestellt, und der Start und Anlauf werden auf dem statischen LK durchgeführt. Der Strahl 35 der unteren Hälfte des MSA 6 bildet im Hohlraum des statischen LK einen überschüssigen statischen Druck. Der Strahl 44 der oberen Hälfte des MSA 6 bildet über der hinteren TgS einen Unterdruckbereich und bei der Umströmung der vollenkbaren Ruderfläche 24 eine aerodynamische Kraft, deren Höhe und Richtung der Schwerpunktlage und Startbedingungen entsprechend eingestellt werden.

Der Luftstrahl 45 über der vorderen TgS 1, der durch MSA 6 angesaugt wird, bildet eine zusätzliche Auftriebskraft mittels der vergrößerten effektiven Oberseitenwölbung und der erhöhten relativen Profildicke der vorderen TgS, die durch den Interceptor 23 gewährleistet werden.

Eine zusätzliche Auftriebskraft wird durch Entladung auf der Oberseite 30 gebildet, die infolge der Absaugung einer Grenzschicht durch das System deren Ejektion auf die Innenfläche des Rings 29 entsteht.

Eine zusätzliche Auftriebskraft entsteht auf den Vektorschublenkebenen 28, die mit der angesaugten Strömung 45 unter dem Anstellwinkel belüftet werden, der dem Winkel der maximalen Auftriebskraft ihrer Profile entspricht. Diese Auftriebskraft wird durch unmittelbare Arbeit des MSA gebildet und wird an seine Elemente angelegt, deswegen summiert sie sich mit der vertikalen Komponente der Schubkraft **Pv**, was zu einer Abweichung der Resultierenden der Schubkraft **P** führt.

Wärend des Anlaufs des BEF nimmt man die vordere Spreizklappe 2 und den Interceptor 23 der Geschwindigkeitserhöhung entsprechend sanft zurück, und die Flaperons 8 der hinteren TgS und die Flächen 28 werden in die Lage für den Bodeneffektflug oder für eine weitere Höhenzunahme eingestellt. Im Laufe der stabilen Bewegung auf dem statischen LK werden die Flaperons 4 der vorderen TgS und die Ruderfläche 24 in die Lage für die vorgegebene Höhe des Bodeneffektfluges oder eine Höhenzunahme versetzt. Da die Einstellwinkel der TgS 1, TgS 5 und MSA 6 ziemlich groß sind, ist keine Vergrößerung der Nicklage für eine Höhenzunahme erforderlich. Deshalb wird die Höhenzunahme bei einer Waagerechtstellung des Rumpfs durchgeführt. Die erforderliche Auftriebskraft wird durch die entsprechenden Ablenkwinkel der TgS-Flaperons und durch das Power Setting gewährleistet. Durch die Höhenruder wird die Horizontalität des Rumpfs gehalten. Die Längsstabilität wird sowohl durch die Flaperons 8, als auch die Ruderfläche 24 gewährleistet, deren Wirkung der Wirkung einer Höhenrudertrimmklappe eines herkömmlichen Flugzeugs entsprechen wird. Beim Erreichen der Reisegeschwindigkeit auf der vorgegebenen Bodeneffektflughöhe wird für den Triebwerk ein entsprechendes Betriebsverhalten eingestellt. Nach der Ausführung der Längstrimmung wird das System der automatischen Stabilisierung und Dämpfung (SD) eingeschaltet.

Es ist möglich Konstruktionen zu schaffen, die einen Start bei der eingeschalteten SD gewährleisten, wenn die nötigen Winkel zwischen AWG und TgS-Flaperons vor dem Start voreingestellt sind.

Die Flüge in den Höhen, die die Sicherheitshöhe übertreten, können mit einer «flugzeugartigen» Steuerung durchgeführt werden, d.h. mit einer Veränderung der Nicklage durch die Höhenruder und das Auftriebsklappensystem des Flügelmittelteils, das die höchste aerodynamische Qualität gewährleistet.

Auf Fig. 6 ist die Umströmung des propulsiv-tragenden Komplexes im Bodeneffekt-Betrieb und eine ungefähre Lage des Massenmittelpunktes 41, sowie der Neutralpunkte von Höhe 40 und von Anstellwinkel 43 dargestellt. Man sieht, dass nur die Unterfläche der vorderen TgS 46 mit der störungsfreien Anlaufströmung in Berührung kommt. Dank der Belüftung der hinteren TgS 5 wird ein Luftkeil des dynamischen Luftkissens mit einer großen Strömungsabschrägung eines gesteigerten Dicken gebildet. Dies ist mit einer Vergrößerung der Profilwölbung des Mittellflugelteils vergleichbar und lässt für die gegebene Konstruktion einen sparsamen Flug auf größerer Höhe zu.

Die zusätzlichen Flächen geringer Streckung (zTgS) 16 tragen ebenso einer Vergrößerung der Bodeneffektflughöhe bei. Neben einer Vergrößerung der Ausdehnung des gesamten Flügels verhindern sie einen Überstrom der Luft aus dem Überdruckbereich unter dem Flügelmittelteil in den Unterdruckbereich über ihm. Auf den zTgS bilden sich Auftriebskräfte von den induktiven Wirbeln, und der induktive Widerstand verringert sich. Dies erhöht die aerodynamische Qualität des gesamten Tragkomplexes. Dabei bildet sich über ihm ein 3-dimensionaler Unterdruckbereich mit einer verringerten Unregelmäßigkeit in der Längsrichtung.

Die Höhenzunahme oder Abstieg aus dem horizontalen Flug führt man durch gleichzeitige Erhöhung oder Senkung der Größen von vorderen und hinteren Auftriebskräften, wofür man den Ablenkwinkel der TgS-Flaperons, der Außenflügel-Elevons gleichzeitig vergrößert oder verkleinert und (oder) das Power Setting vergrößert (verkleinert).

Es ist bekannt, dass in Notfällen ein effektiveres Manöver des Bodeneffektfahrzeugs zum Vermeiden einer Kollision mit Bodenhindernis ist das Manöver in der Vertikalebene mit einem Austritt aus der Bodeneffektzone und einer anschließender Rückkehr in diese Zone.

Für die Flugzeugauslegungen ist so ein Manöver mit Vergrößerung der Nicklage, Störung der Trimmung und Schwierigkeit der Steuerung auf den Übergangsstadien verbunden. Bei hohen Geschwindigkeit und Größe der Nicklage kann dies zu einem Austritt auf die überkritischen Anstellwinkel und Verlust der Lenkbarkeiten führen. Aufgrund dessen ist in solchen Fällen ein hohes Niveau der Fliegerausbildung des Piloten erforderlich.

Die Durchführung von einem solchen Manöver bei den Bodeneffektfahrzeugen der eigentlichen Erfindungsgruppe läuft auf eine Ablenkung der Flaperons aller TgS, der Elevons und Klappen der Außenflügel und der Ruderfläche des Flügelmittelteils (und es kann drei bis zehn und mehr davon geben) nach unten mittels eines Steuerhebels aus. Die Höhenzunahme geschieht bei der Horizontallage des Rumpfs, und die Vertikalgeschwindigkeit hängt von der Geschwindigkeit und der Ablenkgröße der Flaperons ab. Es wird eine dynamische Höhenzunahme ohne die Leistungszunahme der Triebwerke geben, und die Geschwindigkeitsabnahme wird nicht gefährlich sein, weil sie bei einem vergrößerten Auftriebskoeffizient der Tragflächen geschieht. Dabei bleiben die Anstellwinkel der nicht umströmenden Flächen wesentlich geringer als die Kritischen. Nach dem Erreichen der Höhe der dynamischen Zunahme, wenn die Antriebsschubkraft nicht ausreichen sollte, würde ein sicherer Abstieg mit einer Null-Nicklage und anschließendem Eintritt in die Bodeneffektzone und eine Fortführung des Fluges folgen.

Eine Variante für die Durchführung eines Schnellmanövers von Höhe kann eine technische Lösung sein, bei der sich das Power Setting beim Überschreiten eines gewissen Gradienten der Flaperons-Ablenkung automatisch erhöht.

Bei der Durchführung eines solchen Manövers schaltet sich das oben geschilderte System der Autostabilisierung und Dämpfung automatisch aus. Infolge dessen kontern sich die möglichen Nickablenkungen von dem Nullwert durch die Höhenruder. Die nach der eigentlichen Erfindung vorgeschlagenen Auslegungen der Bodeneffektfahrzeuge und der gegenwärtige Stand der Technik ermöglichen das Erschaffen der Systeme mit Kreiselstabilisierung, die die Durchführung eines vertikalen Schnellmanövers beim eingeschalteten Autopiloten, der Null-Nicken gewährleistet, zulassen.

Bei einem Flug im Bodeneffekt-Betrieb werden koordinierende Wendungen (ohne Gleiten) mit einer nötigen Neigung und Höhenbeibehaltung geführt, zu diesem Zweck werden die TgS-Flaperons des der Wendungsrichtung gegenüberliegenden Bords auf einen größeren Winkel abgelenkt, zusätzlich wird der Nickwinkel mit Außenflügel-Elerons korrigiert.

Die Landung aus dem Bodeneffektflug wird durch eine Verringerung der Triebwerksleistung und einen Abstieg des BEF bis zur tiefst möglichen (gemäß der Außenbedingungen) Flughöhe durchgeführt. Proportional der Geschwindigkeitsabnahme werden die vordere Spreizidappe, die TgS-Flaperons, aerodynamische Bremsen und Wendegetriebe mit einer Überführung des BEF in den Bewegungsbetrieb auf dem statischen LK abgelenkt. Den Rolling wird auf dem statischen LK oder eine Landung (Wässerung) mit einer minimalen oder Null-Fortschrittsgeschwindigkeit durchgeführt.

Die Landung wird von beliebigen Flughöhen mit Anwendung der Steilbahn des Abstiegs bis hin zum Sackflug bei einer horizontalen Rumpflage durchgeführt. Dafür wird auf der laufenden Flughöhe oder beim Abstieg ein minimales Power Setting eingestellt, dass die Lenkbarkeit gewährleistet, die TgS-Mechanisierung wird dabei in die Lage, entsprechend der Bewegung auf dem statischen LK abgelenkt. Die räumliche Lage des BEF und die Abstiegbahn (Senkrechts- und Vorschubgeschwindigkeit) werden mit Hilfe der Steuerruder, der Ablenkung der TGS-Flaperons und des Power Settings korrigiert. Der Senkrechtstart oder der Schwebebetrieb werden mittels gleichzeitiger Überführung der Vektorrichtungen von resultierenden Schubkräften der Triebwerke in eine Senkrechtlage realisiert. Zu diesem Zweck werden die TgS (oder Teile der TgS) um die Querachsen gedreht, auf denen die Triebwerke montiert sind, bis zu der Senkrechtlage der Schubkräfte, das Antriebssystem wird dabei auf die Startnennleistung geführt. Eine 3-dimensionale Ortsänderung und Stabilisierung der BEF werden mithilfe der TGS-Flaperons, Ruder, Änderung der Vektorrichtungen der Triebwerk-Schubkräfte und deren Größe umgesetzt.

Auf Fig. 7 - 10 wird die Variabilität der eigentlichen Erfindungsgruppe dargestellt. Es sind Gesamtansichten einiger möglichen Varianten der Bodeneffektfahrzeuge mit Anwendung einer Basiskonstruktionsgruppe und eines Triebwerks in der Längsrichtung abgebildet.

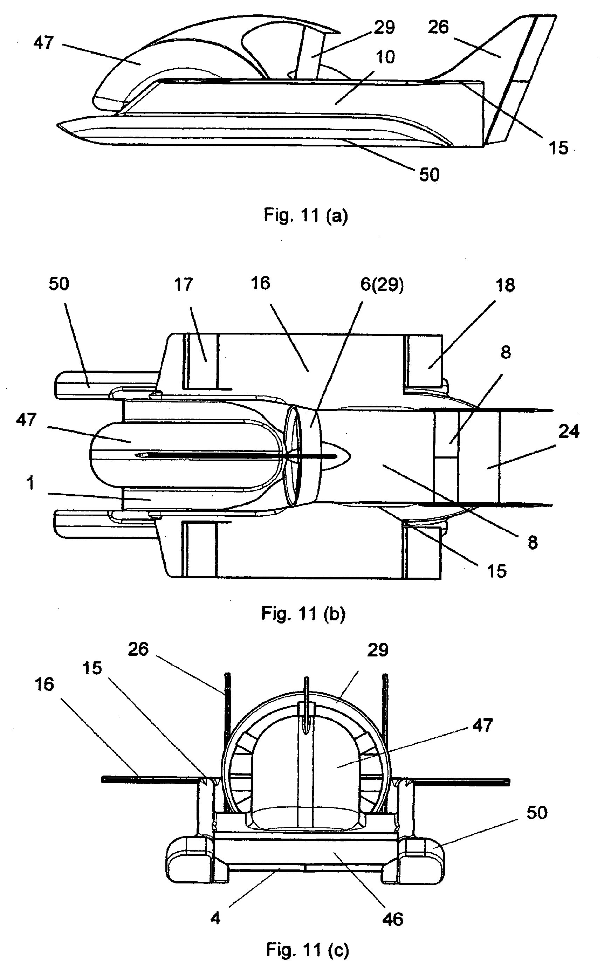

Auf Fig. 11 (a - c) sind drei Projektionen eines leichten Mehrzweckbodeneffektfahrzeugs vom Typ «A» nach Fig. 7 dargestellt. Die Verglasung ist auf Fig. 9 (a - c) abgebildet. Der Kabinenraum 47 für den Pilot und Fluggäste ist auf der vorderen TGS installiert und leicht zugänglich zum Ein- bzw. Aussteigen durch die Seitentüren 48 (Lukenöffnungen). Die Verglasung 49 gewährleistet eine ungehinderte Flugsicht in der oberen Hemisphäre. Die Schwimmer AES können beispielsweise als aufblasbare Rümpfe 50 ausgearbeitet werden.

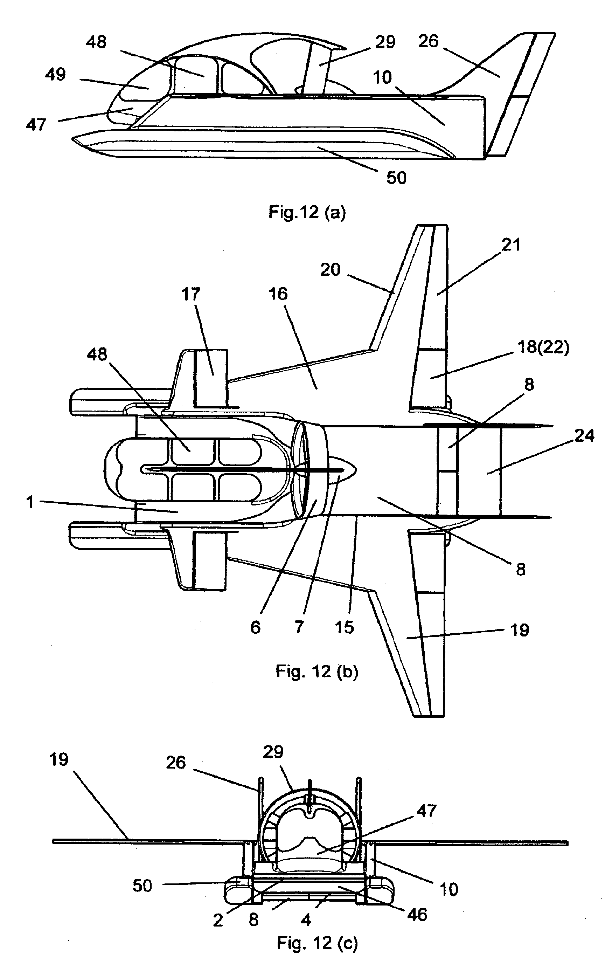

Auf Fig. 12 (a - c) sind drei Projektionen eines leichten Mehrzweckbodeneffektfahrzeugs von Typen «B» und «C» nach Fig. 8 dargestellt, das durch das Hinzufügen der Außenflügel 19 zum BEF nach Fig. 7 erzeugt ist. Als Variante so einer Auslegung kann die Anwendung statt eines MSA 6 - zweier nebeneinander angebrachten MSA, mit einem geringeren Ringdurchmesser betrachtet werden. Dies erlaubt die Spannweite der TGS zu vergrößern (die Gleitzahl zu erhöhen) und die Höhe des Angriffspunkts der Schubkräfte zu verringern.

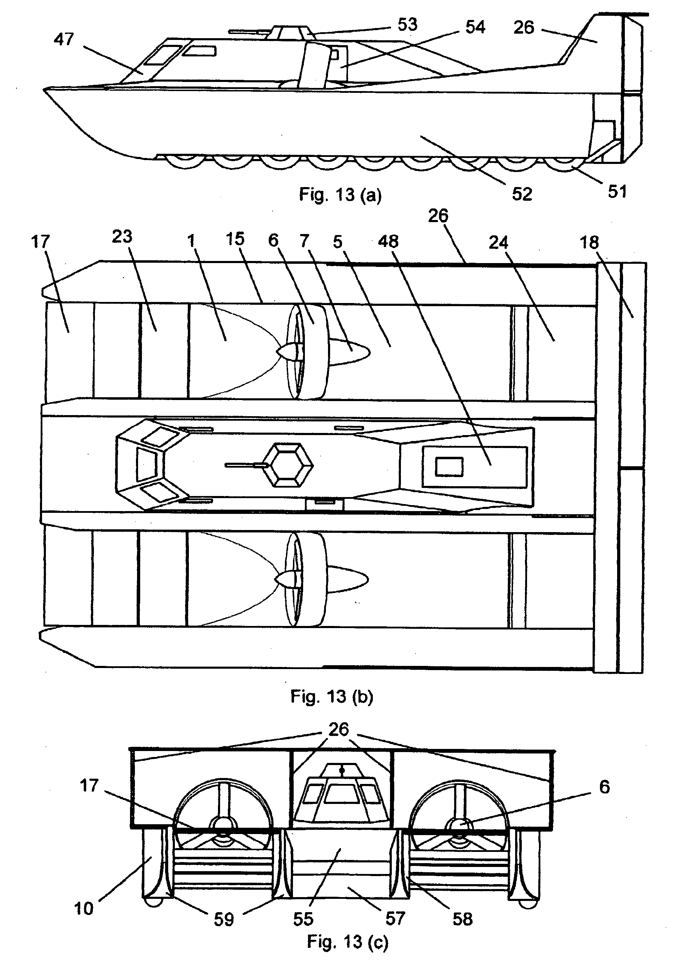

Auf Fig. 13 (a - c) sind drei Projektionen eines Streifen-Bodeneffektfahrzeugs vom Typ «A» nach Fig. 9 abgebildet, das für Grenz- und Zollschutz, sowie Naturschutz (Fischfang) und andere Dienste geeignet ist. Für die Verbesserung der Amphibienfähigkeit, der Bewegung auf dem Boden bei der verringerten Schubkraft der Triebwerke und dem verringerten Druck auf den Boden können die Schwimmer AES beispielsweise in Form eines mehrachsigen Radfahrwerks ausgearbeitet werden. Die Räder sind in Form von erleichterten Niederdruckpneumatiks 51 mit einem geringen relativen Durchmesser der Naben ausgeführt und außen durch die Hauben 52 abgedeckt. Auf dem Dach des Kabinenraumes ist eine automatische Maschinenkanone 53 mit Fernsteuerung installiert. Die Eingangstür (Luke) 48 ist an der Hinterwand der Kabine 47 ausgeführt, und die zusätzlichen (Not-) Luken 54 an deren Seitenwänden. Die Kabine kann gepanzert sein. Der Rumpf 55 ist in Form Rumpf - Boot mit fester Seitenschürzen 58 ausgearbeitet. In dem Heckteil des Lufttunnels 56 ist eine gedämpfte Heckspreizklappe 57 installiert. Die Kiele der festen Seitenschürzen 58 und Schwimmer AES 10 sind in Form von Wassergleitkufen 59 angefertigt und befinden sich auf einer Ebene.

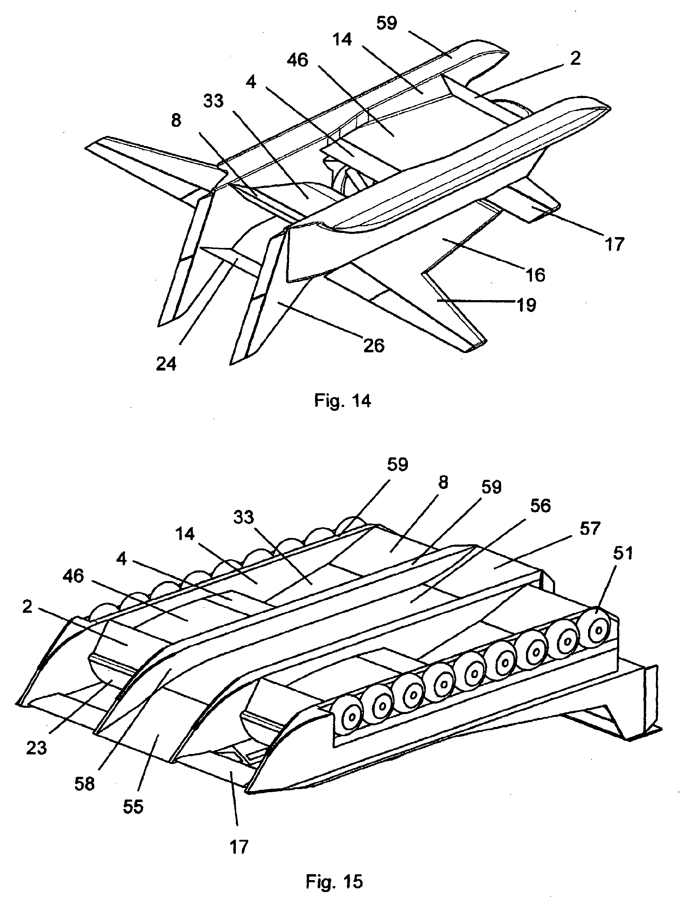

Auf Fig. 14 und Fig. 15 sind BEF nach Fig. 8 und Fig. 9 abgebildet. Eine Gesamtansicht von unten in der Lage der Mechanisierung der Propulsivkomplexe für den Betrieb des statischen LK.

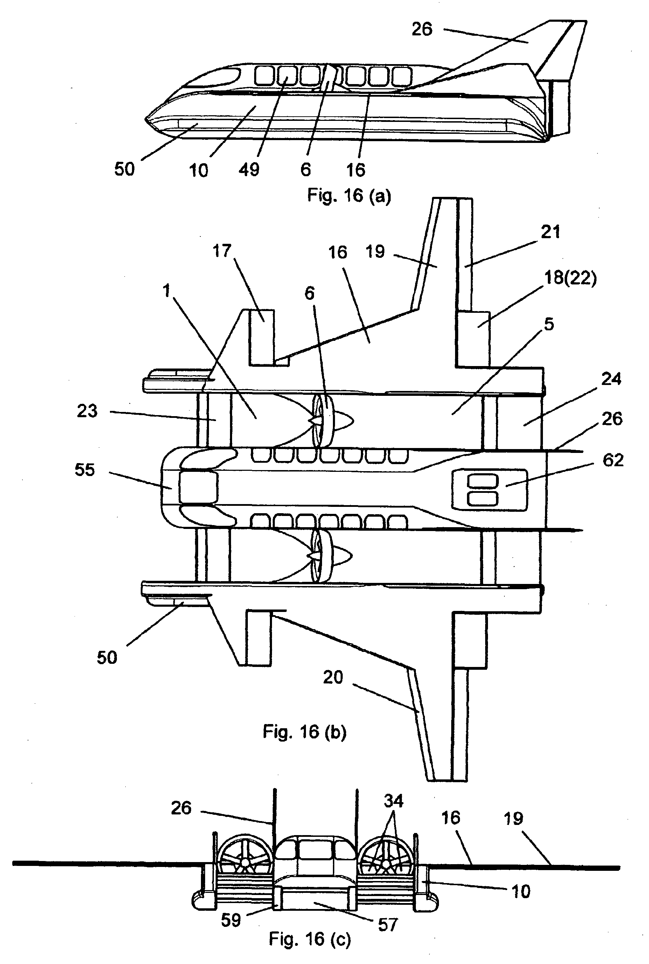

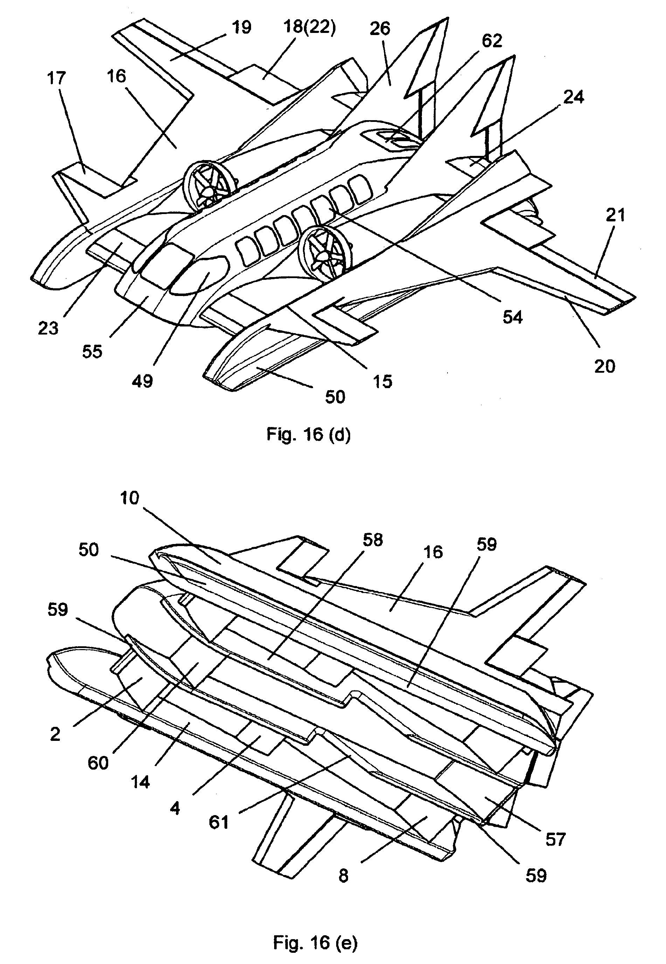

Auf Fig. 16 (a - c) sind drei Projektionen eines BEF der Typen "B" und "C" nach Fig. 10 abgebildet. Anhand dieser Auslegung können Bodeneffektfahrzeuge für den allgemeinen und Spezialeinsatz gebaut werden. Gewichtsklassen: von leichten (ab 0,5t) zu mittelschweren (50 - 100t). Der Rumpf 55 kann in Gleitrumpfform sowie den festen Seitenschürze- Formen ausgeführt sein. Die Vorsteven der Rümpfe können vor oder hinter der vorderen TgS angebracht werden. Die Kiele der Rümpfe, ausgeführt in Form von Wassergleitkufen 59, können als Tragflächen bei dem Stand auf dem Boden dienen und auf einer Ebene mit den Tragflächen AES liegen. Der Lufttunnel 56 ist mit einer Vorderklappe 60 und einer Heckspreizklappe 57 ausgestattet. Die Linien der Kielflossen der festen Schürzen 58 haben Aufstiegsbereiche 61 in den Grenzen der Längen von statisch-dynamischen Luftkissen der zweiten und der weiteren TGS. Die Aufstiegsbereiche 61 dienen als Luftkanäle, durch die der Drucküberfluss in den Lufttunnel 56 bei der Bildung eines statischen LK übergeben wird. Zwischen dem Doppelleitwerk 26 befindet sich ein Heckeinstieg 62.

Auf Fig. 16 (d - e) sind Gesamtansichten des Bodeneffektfahrzeugs nach Fig. 10 mit der Bezeichnung der Elemente dargestellt. Auf der Ansicht von unter - Mechanisierung in der Lage für den Betrieb des statischen LK.

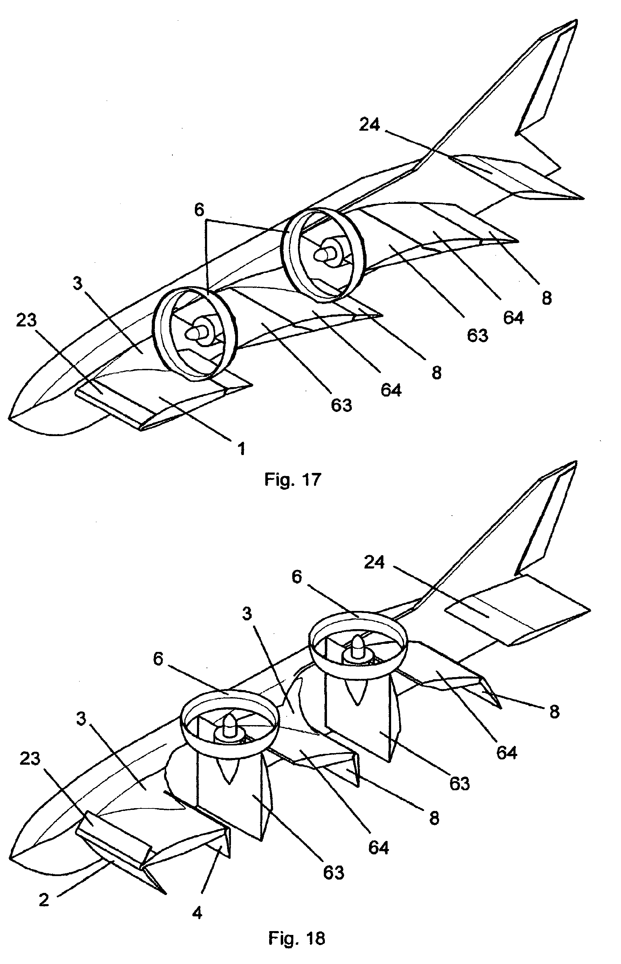

Auf Fig. 17 ist eine Gesamtansicht des Propulsivkomplexes (PK) des Steuerbords mit zwei Basiskonstruktionsgruppen (BKG) und zwei Triebwerken dargestellt. Der Rumpf und die zusätzliche Flächen sind nicht dargestellt. Mechanisierung in der Lage des Reiseflug-Betriebs.
Die Konstruktion zur die Ausführung eines Senkrechtstarts vorgesehen. Außerdem ist eine Möglichkeit der Auslegung der BKG in der Längsrichtung dargestellt. In der Querrichtung sind auch Auslegungen mit zwei und mehr BKG möglich. Auf diese Weise kann man einen Propulsivkomplex für die superschweren Bodeneffektfahrzeuge zusammenstellen. In der Konstruktion nach Fig. 17 sind die zweite und die dritte TGS gleich ausgeführt. Jede von ihnen beinhaltet drei Teile: einen Drehteil mit Triebwerk 63, eine Festhälfte 64 und ein Flaperon 8.

Auf Fig. 18 ist eine Mechanisierung des PK nach Fig. 17 dargestellt, die in der Lage für Senkrechtstart, - Landung abgelehnt ist.

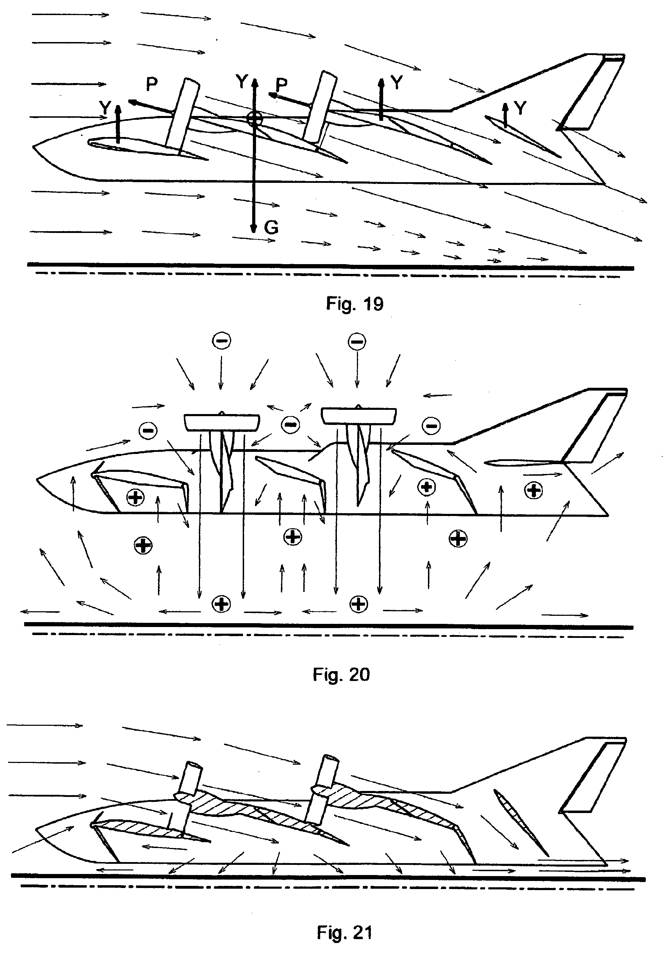

Auf Fig. 19 ist ein Schema der Umströmung des PK nach Fig. 17 im Betrieb des Bodeneffekts abgebildet.

Fig. 20 - ein Schema der Umströmung des PK nach Fig. 18. Senkrechtstart-Betrieb.

Fig. 21 - Schema der Umströmung des PK nach Fig. 17.

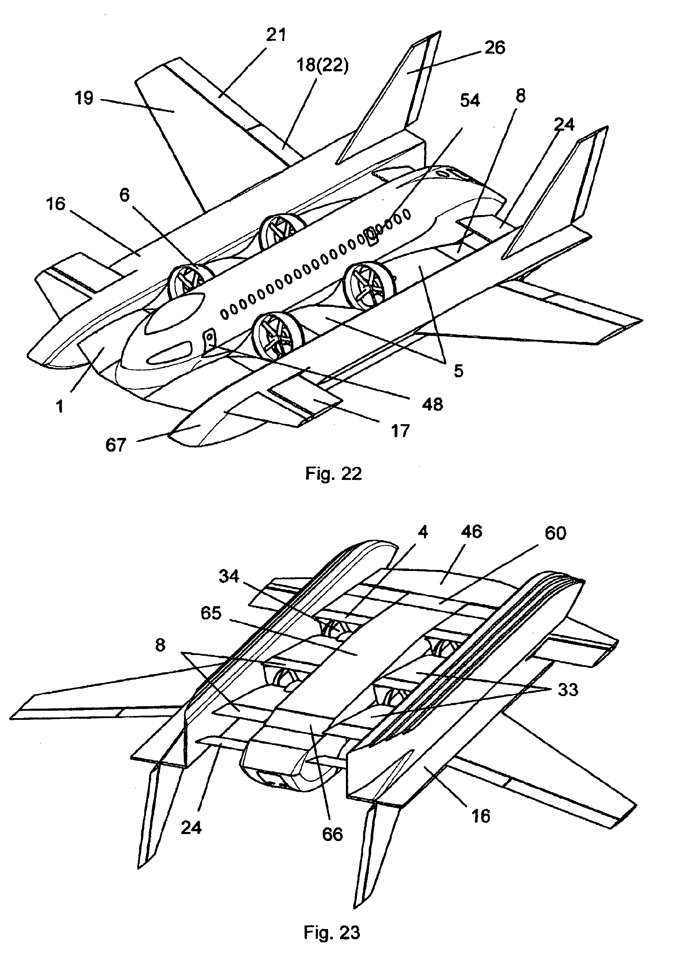

Auf Fig. 22 ist eine Auslegung (2 x 2) eines mittelgroßen oder eines schweren Bodeneffektfahrzeugs mit PK nach Fig. 17 dargestellt. Typen «B» und «C». Gesamtansicht. In dieser Konstruktion ist die Unterfläche des Rumpfs 65 als eine Verlängerung der Unterfläche der vorderen TGS in Form einer flachen Tragfläche mit einer Bugspreizklappe 60 und einer Heckklappe 66 ausgearbeitet.
Die Heckklappe 65 bildet zusammen mit den Elevons der hinteren TGS 8 die Hinterabgrenzung der statischen LK, und während des Flugs wird flächenbündig mit dem Gleitboden eingeklappt. Die Schwimmfähigkeit des BEF wird durch die AES gewährleistet, die in Form von harten aerodynamisch günstigen Gleithalbrümpfen 67 ausgearbeitet sind.

Auf Fig. 23 - ein Bodeneffektfahrzeug nach Fig. 22. Gesamtansicht von unten. Mechanisierung in der Lage des Reiseflug-Betriebs.

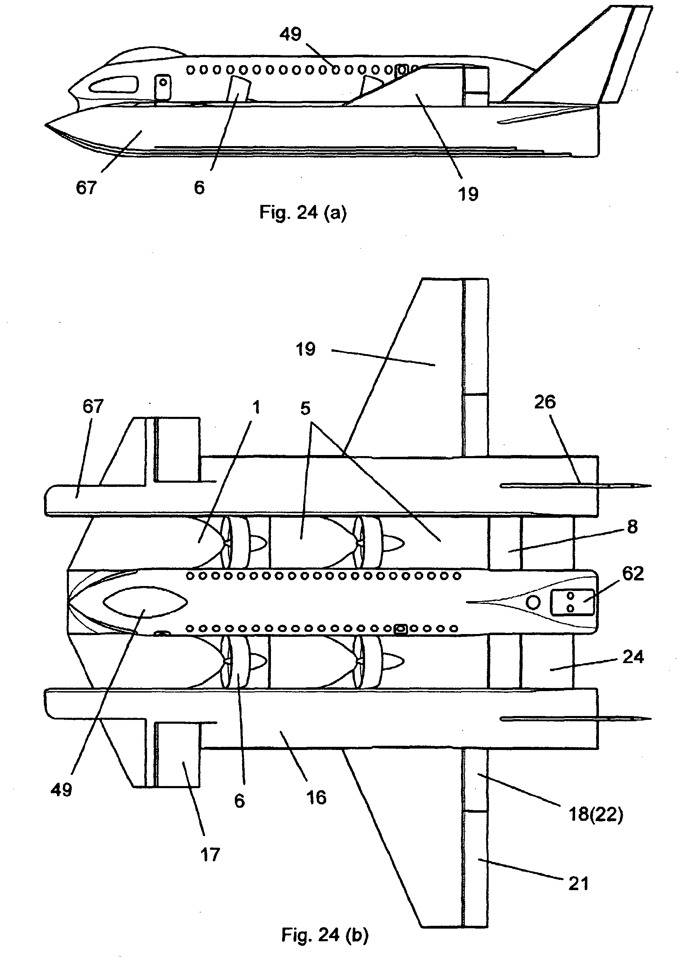

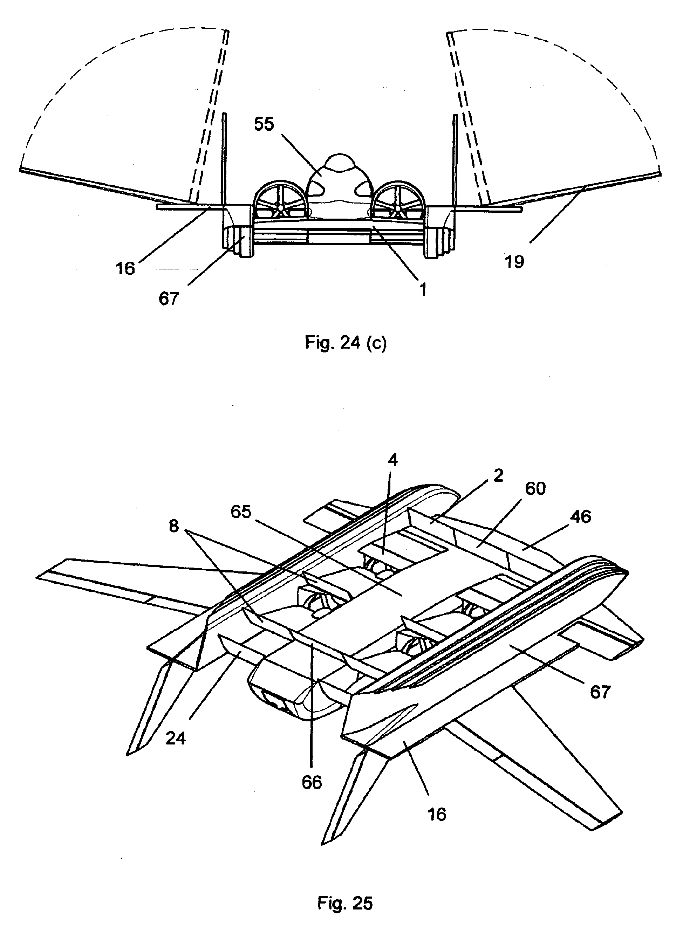

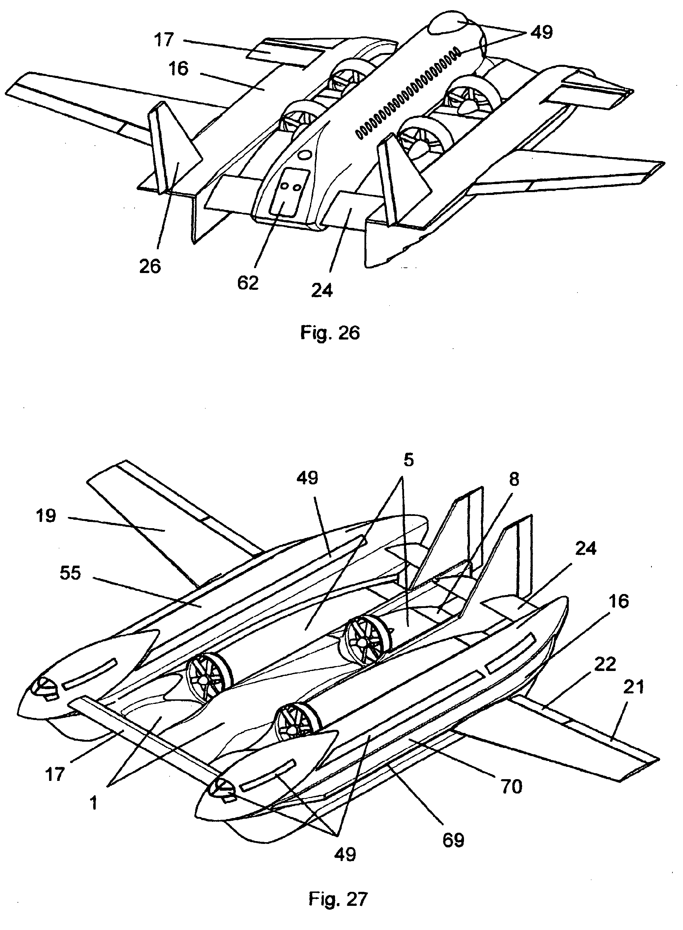

Auf Fig. 24 (a - c) sind drei Projektionen eines Bodeneffektfahrzeugs nach Fig. 22 dargestellt. Auf der Frontansicht (Fig. 24(c)) ist eine Bahn und die Lage der Außenflügel beim Aufstieg in die Anlegekonfiguration abgebildet. Die Mechanisierungslage für das statische LK ist auf Fig. 25 abgebildet. Auf Fig. 26 Gesamtansicht von hinten.

Auf Fig. 27 ist die Gesamtansicht einer Auslegungsvariante für ein mittelgroßes oder schweres Bodeneffektfahrzeug abgebildet, in der zwei Basisrümpfe 55 die Funktionen der aerodynamischen Scheiben - Schwimmern ausführen. Sie realisiert ein dreistelliges Stützschema. Die Anzahl der MSA kann viel höher sein. Die MSA können einzeln oder in Gruppen angeordnet sein, an den Seiten eines Dreiecks oder auf einer Parabel. Dabei können die Antriebsstrahlen der MSA unter dem gemeinsamen Rumpf ein Kuppelförmiges dynamisches LK bilden. In der horizontalen Ebene kann die Grenzlinie 68 eines solchen LK eine Dreieck-, Treppen-Dreieck- oder Parabelform mit einer nach hinten gerichteten Spitze haben. Dies ist der umgekehrten Pfeilung der hinteren Kante der Tragfläche gleich, unter der ein dynamisches LK entsteht. Es ist bekannt, dass so eine Form der Hinterkante die Längsstabilität eines durchgehenden Flügels geringer Streckung im Bodeneffekt-Betrieb erhöht. Aus diesem Grund erlaubt die Auslegung des Bodeneffektfahrzeugs nach Fig. 27 eine zusätzliche Komponente der Längsstabilität von der Seite des dynamischen LK bekommen. Eine Auslegungsvariante nach Fig. 27 ist die Anordnung des MSA an den Seiten des Dreiecks, dessen Spitze nach vorne gerichtet ist. In diesem Fall werden zwei dynamische LK, in der horizontalen Ebene in Form von rechtwinkligen Dreiecken, gebildet, deren Katheten mit der Vorderkante des Flügelmittelteils und den Innenflächen der AES übereinstimmen. Eine Besonderheit dieser Auslegung ist das Vorhandensein eines geradelinigen Rumpfbords und dem Kimmreling 69 bei den gehobenen Außenflügeln 19. Dies erlaubt die Nutzung der bestehenden Häfen als Verkehrsnetzknoten der Bodeneffektfahrzeuge.
Das Anlegen und die Behandlung der Ladung sowie das Bedienen der Passagiere vereinfachen sich wesentlich, und, was sehr wichtig ist, - die Sicherheit der Durchführung dieser Operationen wird erhöht. Dabei wird die Oberseite 70 der zusätzlichen TgS 16 als bequemes Deck benutzt.

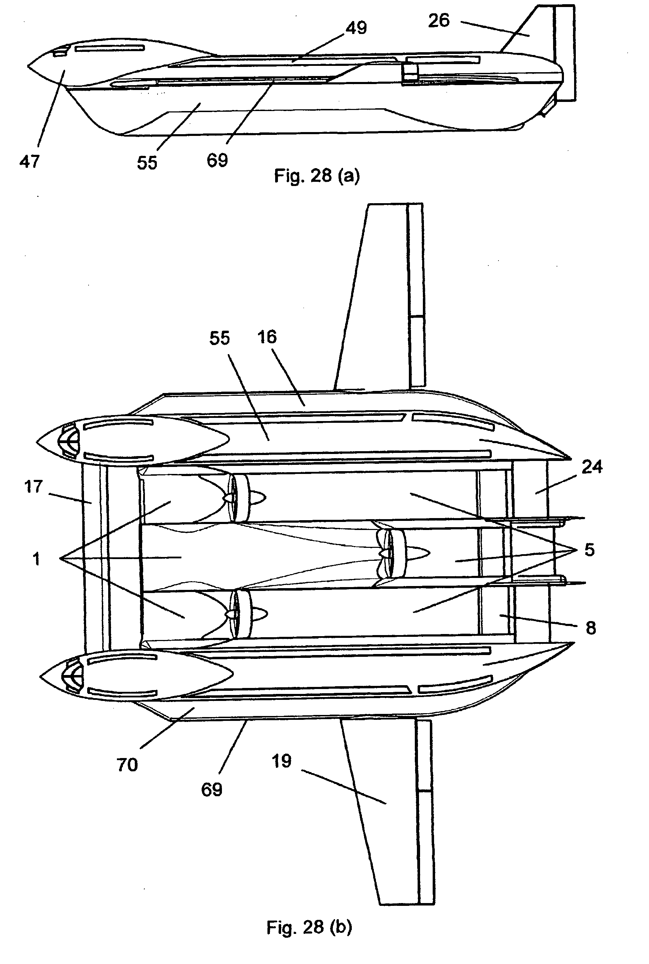

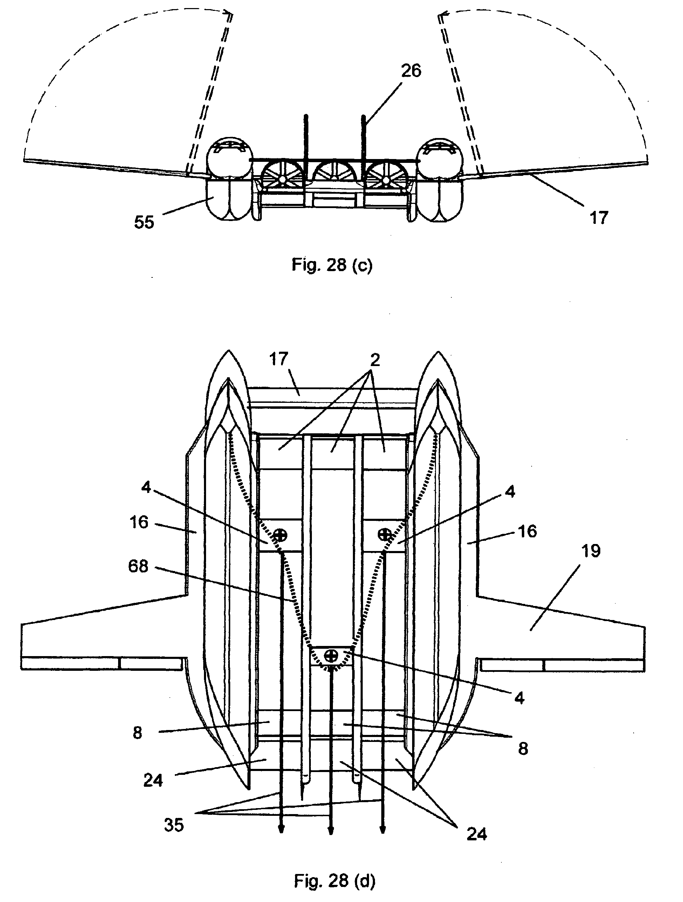

Auf Fig. 28 (a - c) sind drei Projektionen des Bodeneffektfahrzeugs nach Fig. 27 abgebildet.

Auf Fig. 28 (d) -Ansicht von unten. Es ist eine annährende Grenzlinie 68 des dynamischen LK angezeigt.

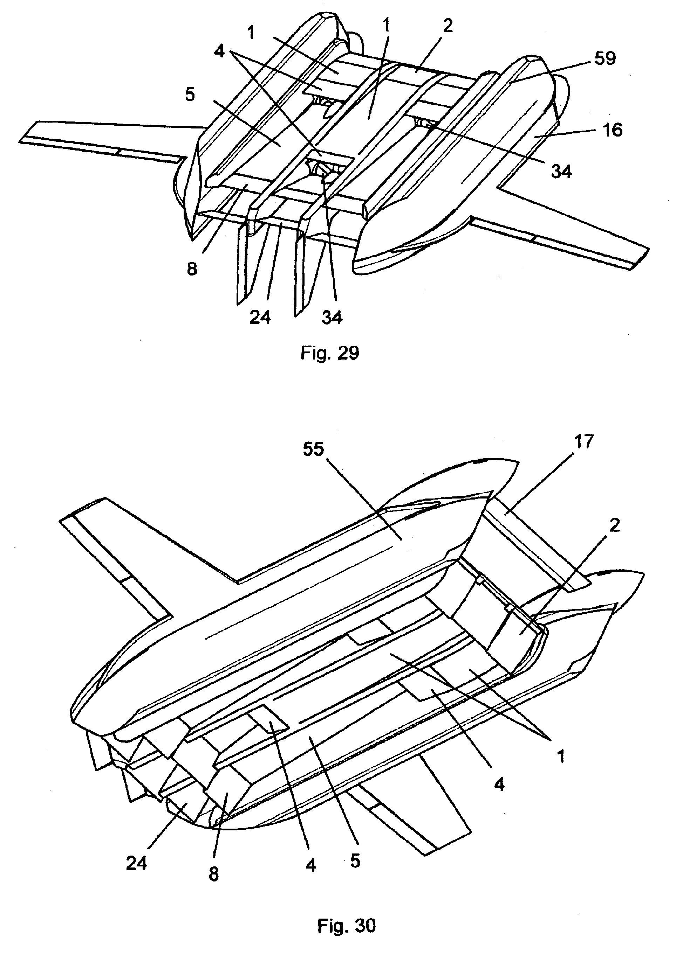

Die Mechanisierungslagen für den Reiseflug-Betrieb und für das statische LK sind auf Fig. 29 und Fig. 30 dargestellt.

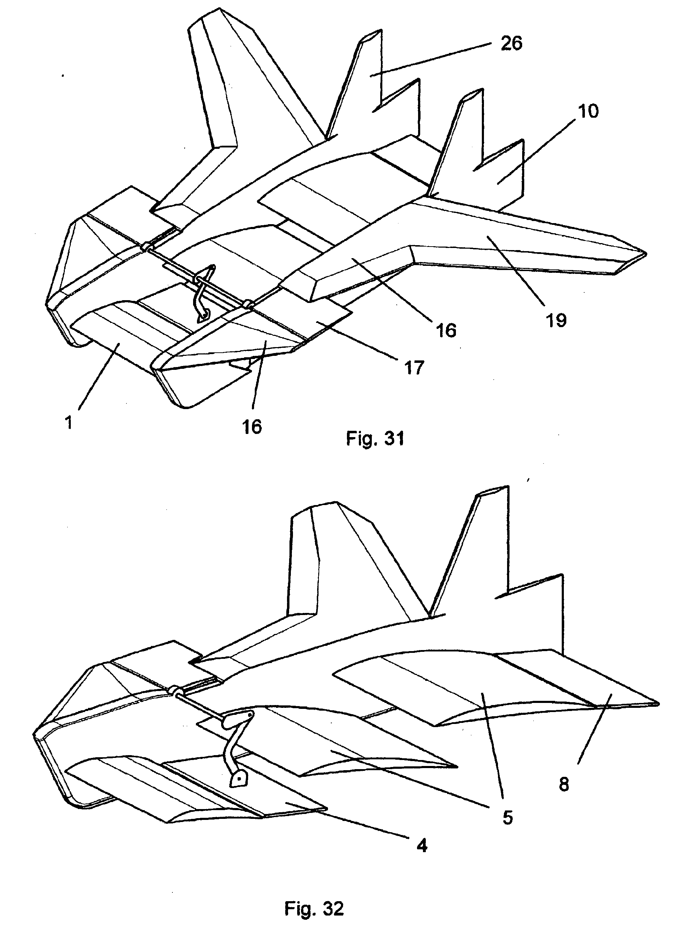

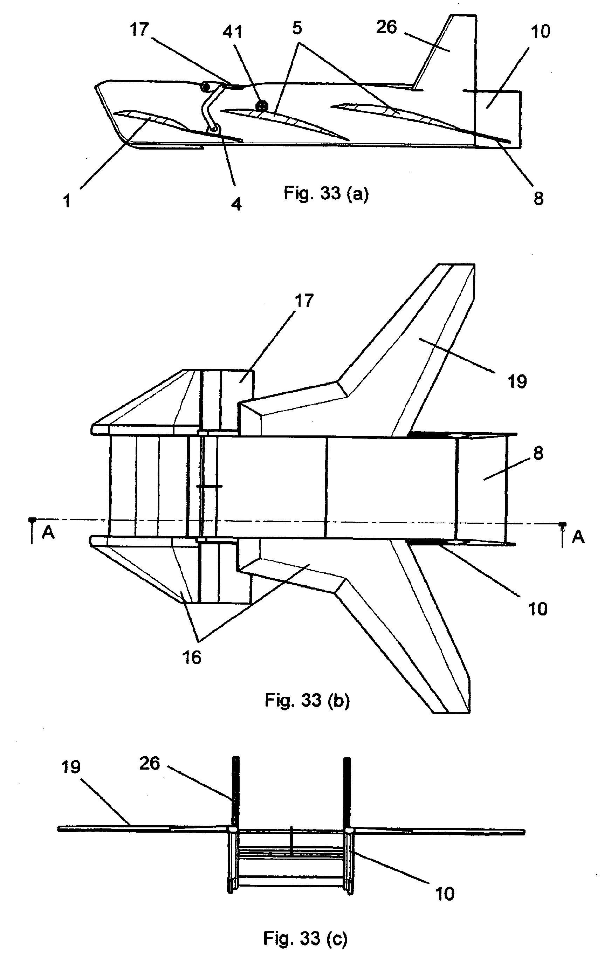

Auf Fig. 31, Fig. 32 und Fig. 33 (a - c) ist die Konstruktion eines Freiflugmodells abgebildet, in der einige prinzipielle Vorschläge der eigentlichen Erfindungsgruppe umgesetzt sind.

Der Offenbarungsgrad der Methoden und Varianten des Grundaufbaus der Bodeneffektfahrzeuge für ihre Umsetzung genügt zur die Anwendung der Erfindungsgruppe in der Industrie mit dem Erzielen der Ergebnisse.

### Liste der Bezeichnungen

1 - vorgere Tragfläche geringer Streckung(TgS);
2 - Vorderspreizklappe;
3 - halbringförmiges Oberflachenstück der TgS;
4 - Flaperons vordere TgS;
5 - hintere und nachfolgende TgS;
6 - Mantelschraubenantrieb (MSA);
7 - Triebwerk;
8 - Flaperons hintere (nachfolgende) TgS;
9 - Endfläche der TgS;
10 - aerodynamische Endscheibe - Schwimmer (AES);
11 - Kammer statisches Luftkissen;
12 - Kammer dynamisches Luftkissen;
13 - Kammer statisch - dynamisches Luftkissen;
14 - Innenfläche aerodynamischer Endscheibe - Schwimmer;
15 - Oberkante der Endscheiben;
16 - zusätzliche Tragfläche geringer Streckung(TgS);
17 - Bughöhenruder;
18 - Heckhöhenruder;
19 - Außenflügel;
20 - Vorflügel;
21 - Querruder;
22 - Elevon des Außenflügels;
23 - Interzeptor;
24 - Steuerfläche des Flügelmittelteil;
25 - Flügelmittelteil;
26 - Doppelleitwerk (Vierleitwerk);
27 - Seitenruder;
28 - Leitebene des Schubvektor;
29 - Mantel des MSA;
30 - Oberseite vorderer TgS;
31 - Vorderkante hinterer (nachfolgender) TgS;
32 - Vorderkante des Flaperons vordere TgS;
33 - Unterfläche hintere TgS;
34 - Luftkanal;
35 - Antriebsstrahl der untere Hälfte MSA;
36 - mechanische Steuerleitung;
37 - Einstellwinkel zwischen die Flaperonsprofitsehnen TgS und Profilsehne den Anstellwinkelgeber;
38 - vordere Auftriebskraft;
39 - hintere Auftriebskraft;
40 - Neutralpunkt von Höhe;
41 - Massenmittelpunkt;
42 - Mittelpunkt zwischen Neutralpunktlagen;
43 - Neutralpunkt von Anstellwinkel;
44 - Antriebsstrahl der oberen Hälfte MSA;
45 - Ansaugluftstrom MSA;
46 - Unterfläche vordere TgS;
47 - Kabine;
48 - Einsteigeluke;
49 - Cockpit- und Passagierraumverglasung;
50 - Schwimmer - aufblasbarer Rumpf;
51 - Niederdruckpneumatik;
52 - aerodynamische Verkleidung;
53 - Maschinenkanone;
54 - Notluke;
55 - Rumpf;
56 - Lufttunnel;
57 - Heckspreizklappe;
58 - feste Seitenschürze;
59 - Wassergleitkufe;
60 - Bugspreizklappe des Rumpfes;
61 - Aufstiegbereich der festen Seitenschürze;
62 - Heckeinstieg;
63 - Drehteil der TgS mit dem Antrieb;
64 - Festhälfte der TgS;
65 - Unterseite der Rumpf (der Gleitboden);
66 - Heckklappe;
67 - Schwimmer - hart Halbrumpf;
68 - annährende Grenzlinie des dynamischen LK;
69 - Kimmreling;
70 - Oberseite zusätzliche TgS - das Deck;
**Y -** Auftriebskraft;
**Y₁ -** vordere Auftriebskraft;
**Y₂ -** hintere Auftriebskraft;
△**Y -** Zuwachs der Auftriebskraft;
**G -** Schwerkraft (das Gewicht).
**P -** Antriebsschubkraft;
**Pv -** vertikale Komponente der Schubkraft;
**P_{H} -** horizontale Komponente der Schubkraft;
**M -** rückstellendes Moment.

### Quellenverzeichnis

1. N. I. Belavin "Ekranoplans". L.: Sudostroenie.
2. A. I. Maskalik u. a. "Ekranoplans - Transportmittel des XXI Jahrhunderts", St.Pb.: Sudostroenie, 2005.
3. Patent RU 2076816
4. Patent US 3190582
5. Patent RU 2185979
6. Patent S 3908783
7. Patent US 5335742
8. K.G. Udalow u. a. «Flugzeug WWA-14», M., 1994.
9. Zeitschrift «Technik der Jugend» Nº8, 2005, Russland, S. 29-32.
10. Patent RU 2099217
11. Artikel «Ekranoplans der Ukraine», Zeitschrift «Luftflotte der allgemeinen Bestimmung» Nº 5, 2000, Ukraine.
12. Patent RU 2224671
13. Komev, «COMPLEX NUMERICAL MODELING OF DYNAMICS AND CRASHES OF WING-IN-GROUND VEHICLES» 41 st Aerospace Sciences Meeting and Exhibit, 6-9 January 2003, Reno, Nevada.
14. Patent RU 2018465
15. Patent RU 209722
16. Patent RU 2224671
17. Patent RU 2102287
18. Patent RU 2174080
19. Patent RU 2053903
20. Patent RU 21272202
21. Erfinderzeugnis SU 1511170
22. Patent RU 2139212
23. Patent RU 2185979
24. Patent RU 2254250
25. Patent US 6158540
26. Patent US 6848650
27. I. W. Ostoslawskij, W. R. Matweew Werke Prof.-N.-E.-Schukowski-CAGI. Ausgabe 248 M., 1935.
28. Patent SU 1786768
29. Patent RU 2254250 C2 B 60 V 1/08.
30. Patent US 3244246

## Patentansprüche

1. Verfahren zur komplexen Erhöhung von Aerodynamik- und Transporteigenschaften eines Bodeneffektfahrzeugs (BEF), das die Bildung der notwendigen Auftriebskraft mit Hilfe eines Hochdruckgebiets zwischen der Tragfläche geringer Streckung (TgS) und dem Boden miteinschließt, sowie durch das Ausblasen (Absaugung) des Lüftstroms von der Oberseite der TgS, Gewährleistung der Vorwärtsbewegung mit Hilfe der Marschantriebe, Längs-, Quer- und Kurssteuerung, **dadurch gekennzeichnet, dass**
- **verändert man** den natürlichen Abhängigkeitscharakter zwischen der Größe der Auftriebskraft und der Lage der Neutralpunkte der Tragfläche geringer Streckung von Anstellwinkel und der Flughöhe mittels Bildung in der Längsrichtung von mindestens zwei Lokalzonen der Entstehung der Auftriebskräfte - der vorderen (38) und der hinteren (39), mit deren Angriffspunkten auf der Längsachse, dementsprechend vor und hinter dem Massenmittelpunkt (41) (MM), auf der Basis von mindestens zwei TgS - der vorderen TgS (1), mit Vorderklappe (2), halbringförmigem Bereich der Oberseite (3) und Flaperons (4), der hinteren TgS (5), mit dem Mantelschraubenantrieb (MSA) (6), Triebwerk (7) und Flaperons (8), und aerodynamischen Scheiben - Schwimmern (AES), vereinenden die Endflächen der TgS (9);
- für die **man** verschiedene Bedingungen des Windabflusses mit den Luftströmen **bildet**, mit Entstehung eines statischen Luftkissen (LK) (11), eines dynamischen Luftkissen (12) und eines statisch-dynamischen Luftkissen (13) unter der TgS, und eines Unterdruckgebietes mit verringerter Nichtlinearität in der Längsrichtung über dem BEF, bei gegenseitiger Kompensation der Momente von vorderen und hinteren Auftriebskräften in Bezug auf den Massenmittelpunkt (41), und der Lage des Neutralpunkts von Höhe (40) vorne, und des Neutralpunkts von Anstellwinkel (43) hinter dem Massenmittelpunkt (41);
- den **man** zwischen dem Neutralpunkt von Höhe und der Mitte des Abstands zwischen den Neutralpunkten **platziert**;
- wofür **man** eine natürliche Zusammenwirkung der störungsfreien Anlaufströmung der Luft mit der Unterseite der vorderen TgS (46) **zulässt**;
- **man verringert** diese Zusammenwirkung mit der Oberseite der vorderen TgS (30) mithilfe der Absaugung einer Luftschicht über der ganzen Spannweite durch die Marschtriebwerke (6), und **verhindert** eine solche Zusammenwirkung mit der Unter- (33) und Oberseite der hinteren (nachfolgenden) TgS durch die Belüftung deren Oberflächen über der gesamten Spannweite mit den Marschtriebwerken (6);
- **man steuert** die Größen der vorderen und hinteren Auftriebskräfte durch die Änderung der Ablenkungswinkel der Flaperons der TgS und (oder) durch die Betriebsänderung des Triebwerks (der Triebwerke);
- zusätzlich **stabilisiert man** den Flug und **dämpft** die Längsschwankungen, durch eine automatische Größenänderung der vorderen Auftriebskraft (38) als Funktion des Längsneigungswinkels nach dem Prinzip der tiefen negativen Rückkopplung;
- die **man** mit Hilfe der dynamischen Steuerung der Lage von Flaperons der vorderen TgS **realisiert**, auf die Betätigungseinrichtungen deren eine Steuereinwirkung von dem Anstellwinkelgeber (AWG) übertragen wird;
- mit Hilfe des Triebwerks (der Triebwerke) **bildet man**: die Längsbewegung, das Ausblasen und das Absaugen von den Oberseiten der Tragflächen, eine Gewichtsentladung des BEF mittels eines Überdrucks in dem statischen und statisch-dynamischen Luftkissen, eine zusätzliche Gewichtsentladung mittels der vertikalen Komponente der Schubkraft (Schubkräfte), eine zusätzliche Lenkbarkeit und zusätzliche Schubkraft (Schubkräfte) aufgrund des «Bartini-Effekts» und der Multiplikation der Stromgeschwindigkeit, der durch die Triebwerke durchgeht.

2. Verfahren nach Anspruch 1, **dadurch gekennzeichnet, dass** man zusätzlich den Flug **stabilisiert** und die Längsschwankungen durch eine automatische Größenänderung der hinteren Auftriebskraft (39) als Funktion des Längsneigungswinkels nach dem Prinzip der positiven Rückkopplung **dämpft**;
- die **man** mit Hilfe der dynamischen Steuerung der Lage von Flaperons der hinteren TgS **realisiert,** auf die Betätigungseinrichtungen deren eine Steuereinwirkung des Anstellwinkelgebers übertragen wird.

3. Verfahren nach Anspruch 1, **dadurch gekennzeichnet, dass** man dem BEF eine zusätzliche Auftriebskraft in allen Fahrbetrieben mitteilt und die Induktionswiderstandskraft aufgrund der Verringerung der transversalen Luftüberströme und aufgrund der Nutzung kinetischer Energie der transversalen Induktionswirbel **verringert;**
- wofür man die Spannweite der TgS **vergrößert,** durch das Montieren zusätzlicher Flächen geringer Streckung (zTgS) (16) auf den Oberkanten aerodynamischer Scheiben, mit der Bildung über dem BEF einer dreidimensionalen Luftunterdruckzone mit einer verringerten Unregelmäßigkeit in der Längsrichtung.

4. Verfahren nach Anspruch 3, **dadurch gekennzeichnet, dass** man die Längs- und Querlenkbarkeit des BEF **verbessert;**
- dafür **montiert man** auf der zTgS ein Bughöhenruder (17) (oder die Front-Elevons) und ein Heckhöhenruder (18) (oder die Heckelevons).

5. Verfahren nach Anspruch 1, **dadurch gekennzeichnet, dass** man den Flug **stabilisiert** und die Schwingungen nach dem Nicken mittels der automatisch erzeugenden Momente der aerodynamischen Kräfte, deren Angriffspunkt sich im Heckteil des BEF befindet, **dämpft;**
- wofür **man** über den Flaperons der hinteren (letzten) TgS, in der Strömung der MSA, eine volllenkbare Ruderfläche (24) **montiert** und auf deren Ausführungsmechanismen eine Steuereinwirkung von dem Anstellwinkelgeber (AWG), die der Änderungsgröße des Anstellwinkels proportional ist, **überträgt.**

6. Verfahren nach Anspruch 3 oder 4, **dadurch gekennzeichnet, dass** man für das BEF eine Mehrbetriebsfähigkeit, zusätzliche Längs- und Querstabilität und Lenkbarkeit **gewährleisten;**
- wofür **man** den Heckteil der zTgS in Form von Flächen großer Streckung - Außenflügel (19) **ausführt,** die man mit Zusatzflügetn (21), Elevons (21) und Klappen (oder Elevons) (22) **ausrüstet;**
- dabei **platziert man** die Projektion des resultierenden Druckmittelpunkts der Konsolen und zTgS auf die Längsachse zwischen dem MM und der hinteren Kante der hinteren TgS.

7. Verfahren nach Anspruch 1, **dadurch gekennzeichnet, dass** man das Bodeneffektfahrzeug mit zusätzlichen Funktionen **ausstattet -** Senkrechtstart und Schwebebetrieb - durch die Gewährleistung der Verschiebung von Schubkraft-Vektoren des MSA senkrecht nach oben und der Umlenkung deren Antriebsstrahlen senkrecht nach unten, unter das BEF;
- wofür **man** die TgS oder einen Teil der TgS (63) zusammen mit den Triebwerken, die auf ihnen montiert sind, um ihre Querachsen **wendet,** die Flaperons der TgS in die senkrechte Lage nach unten, und die Interceptoren in die Lage für den Start **ablenkt.**

8. Bodeneffektfahrzeug, in dem die Verfahren nach einem der Ansprüche 1 bis 7 ausgeführt sind, das den Rumpf beinhaltet, sowie mindestens einen Triebwerk, eine Tragfläche geringer Streckung (TgS) mit den Endscheiben - Schwimmern (AES), einfahrbare Vorder- und Hinterabgrenzung des statischen Luftkissens, Mittel der Stabilisierung und Steuerung, **dadurch gekennzeichnet ist,**
- **dass** die Tragfläche geringer Streckung in Form von einem Flügelmittelteil geringer Streckung (25) ausgeführt ist, der in der Längsrichtung aus mindestens zwei TgS zusammengesetzt ist - der vorderen TgS (1) mit einer Vorderspreizklappe (2) und den Flaperons (4) und der hinteren TgS (5) mit den Flaperons (8);
- **dass** die Endflächen der TgS (9) sind durch aerodynamische Endscheiben - Schwimmer (10) verbunden;
- **dass** die Oberkanten der aerodynamischen Scheiben (15) sind oberhalb der Oberseiten der TgS platziert, mit Entstehung über der TgS eines Längskanals mit erhöhtem Luftunterdruck;
- **dass** dabei sind gebildet: unter dem Flügelmittelteil in den Grenzen seiner Projektion auf die horizontale Ebene - die Kammer des statischen Luftkissen (11), unter der vorderen TgS - die Kammer des dynamischen Luftkissen (12), und der hinteren (und nachfolgenden) TgS - die Kammer des (der) statisch-dynamischen Luftkissen (13), deren Umschließungen durch die Innenflächen der Schwimmer (14), die Seiten- und (oder) Unterflächen des Rumpfs (65), die Vorderspreizklappe (2) und Flaperons der TgS gebildet sind;
- **dass** wobei die Steuersysteme der Flaperons der vorderen und hinteren TgS mit einer Option der parallelen Steuerung der Auslenkung, sowohl von der eigenen Befehlshebel, als auch vom Anstellwinkelgeber (von der Anstellwinkelgeber) (AWG) nach dem Selbststabilisierungs- und Dämpfungssystem (...systeme) realisiert ist, der mit einem Subsystem der Steuerung des Winkels (37) zwischen der Neutrallage-Ebene (nach der Querlage) der Flaperons und der Neutrallage-Ebene des AWG ausgeführt ist;
- **dass** die TgS des Flügetmittelteils sind mit den Einstellwinkein und mit einer Überlappung in der horizontalen Ebene montiert, dabei ist die Vorderkante (31) der hinteren Fläche (der nachfolgenden Flächen) über den Vorderkanten (32) der Flaperons der vorderen Fläche(n) platziert, indem ein Luftkanal (Luftkanäle) (34) gebildet wird, durch den (die) in die Kammer der Luftkissen Triebwerkstrahl(en) (35) der unteren Hälfte des Mantelschraubenantriebs (-antriebe) (MSA) gerichtet wird, der Ring dessen (deren) (29) auf der Vorderkante(n) (31) der hinteren (nachfolgenden) TgS (5) montiert ist, und der Triebwerk (die Triebwerke) (7) im Anschluss an den MSA in inneren Volumen der TgS (5) montiert ist (sind);
- **dass** wobei die Spannweite der TgS (5) gleich, kleiner oder größer als der Innendurchmesser des Rings (29) MSA ausgeführt ist, und die Spannweite der vorderen TgS (1) den Außendurchmesser des Rings überschreiten kann;
- **dass** die Innen- und Außenflächen des Rings (der Ringe) fließend mit den inneren Flanken- und Oberseiten der AES, den Flankenseiten und der Oberseite des Rumpfs, und den Oberseiten der vorderen (vorangehenden) TgS verbunden sind, mit der Entstehung auf ihr (ihnen) eines halbringförmigen Flächenbereichs (3), der sich in die Oberseite (30) der TgS mit einer geradelinigen Erzeugenden entfaltet;
- **dass** dabei ist eine Basiskonstruktionsgruppe gebildet, die die vordere TgS, MSA, den Triebwerk und die hintere TgS beinhaltet, die zusammen mit AES (oder mit AES und der Rumpfseitenwand, oder mit den Rumpfseitenwänden), mit zusätzlichen TgS und Konsolen einen propulsiv - tragenden Komplex des Bodeneffektfahrzeugs bildet.

9. Bodeneffektfahrzeug nach Anspruch 8, **dadurch gekennzeichnet, dass** der Einstellwinkel der vorderen TgS (1) gleicht dem mittleren besten Anstellwinkel des angewendeten aerodynamischen Profils für den errechneten Bereich der Reiseflughöhen im Bodeneffekt-Betrieb unter Berücksichtigung der Wirkung der Absaugung des Luftstroms und der grenznahen Schicht von ihrer Oberseite.

10. Bodeneffektfahrzeug nach Anspruch 8, **dadurch gekennzeichnet, dass**
- die Tiefe der vorderen TgS 0,2 - 0,65 einer äquivalenten Tiefe des Flügelmittelteils - des Abstands von der Vorderkante der vorderen TgS (1) bis zur Hinterkante der hinteren TgS (5) - beträgt,
- die volllenkbare Ruderfläche (24) eine Tiefe hat, die 0,15 - 0,5 der Tiefe der hinteren TgS (5) entspricht,
- der Einstellwinkel der vorderen TgS (1) gleicht dem mittleren besten Anstellwinkel des angewendeten aerodynamischen Profils für den errechneten Bereich der Reiseflughöhen im Bodeneffekt-Betrieb unter Berücksichtigung der Wirkung der Absaugung des Luftstroms und der grenznahen Schicht von ihrer Oberseite,
- die Flaperons der vorderen TgS (1) schlitzartig ausgeführt sind und die Drehachse der Flaperons befindet sich im Bereich 5 - 30% deren Tiefe,
- die Flaperons der vorderen TgS (1) mit einer 5 - 30% kleineren Spannweite, als die der vorderen TgS (1), ausgeführt sind,
- die Vorderkanten der zweiten und nachfolgenden TgS (5) auf der Ebene, parallel zu der Bezugsebene des Flugapparats? platziert sind, und deren geometrischen Parameter und Einstellwinkel können entweder gleich oder verschieden sein,
- die Vorderkanten der TgS stufenweise angeordnet sind - die nachfolgende höher als die vorangehende, mit einem entsprechenden Zuwachs der Tiefen der nachfolgenden Flächen und deren Einstellwinkel,
- die Hinterkanten der Flaperons (4) und (8) in der Neutrallage, entsprechend dem Rechnungsbetrieb, in der selben oder in verschiedenen Horizontalflächen liegen können und ihre Zuordnung von den Anforderungen an die flugtechnischen Charakteristiken eines bestimmten BEF bestimmt wird,
- das Bughöhenruder (17) in der störungsfreien Strömung vor der vorderen TgS platziert und an den Innenwänden der Buge (14) der AES (10) oder zwischen den Bugen der AES und des Rumpfs montiert ist, dabei ist die Höhenlage des Ruders über der Bezugsebene, grösser als seine aerodynamische Tiefe und
- das Bughöhenruder (17) und das Heckhöhenruder (18) die Funktion des AWG für die Flaperons (4) der vorderen TgS und (oder) für die volllenkbare Ruderfläche (24) leisten und mit ihnen mittels einer mechanischen (oder elektrischen, oder hydraulischen, oder gemischten) Steuerleitung verbunden ist, die mit einer Option einer ferngesteuerten Änderung des Einstellwinkels zwischen den Ebenen des Ruders und der Flaperons und mit einer Option der vollständigen Entkopplung ausgeführt ist

11. Bodeneffektfahrzeug nach Anspruch 8, **dadurch gekennzeichnet, dass** es aus zwei Basiskonstruktionsgruppen, zwei AES und einem Rumpf (55), zusammengesetzt ist, der mit Längsschnitten in Form von aerodynamischen Flügelprofilen ausgeführt ist, sowie mit einer Flankenverglasung der Gastkabine (49), einer Einstiegtür (48), Notluke(n) (54) und einem Doppelleitwerk (26), zwischen den Kielflossen dessen ein Heckeinstieg (62) angebracht ist.

12. Bodeneffektfahrzeug nach Anspruch 11, **dadurch gekennzeichnet, dass** sich das Flügelmittelteil zwischen zwei Basisrümpfen befindet und in der Querrichtung aus mindestens drei Basiskonstruktionsgruppen zusammengesetzt ist, mit mindestens drei Triebwerken, die auf den Vorderkanten der hinteren TgS jeder Gruppe montiert sind, wobei die Tiefe der vorderen TgS der mittleren Gruppe höher oder niedriger als die Tiefen der vorderen TgS der Flankengruppen ist, mit der Bildung in der horizontalen Ebene eines Dreipunktschemas der Schub- und Auftriebskräfte.

13. Bodeneffektfahrzeug nach Anspruch 8, **dadurch gekennzeichnet, dass** das Flügelmittelteil aus zwei oder mehr Konstruktionsgruppen zusammengesetzt ist, sowohl in der Längs-, als auch in der Querrichtung, die hintere TgS jeder vorangehenden Gruppe dient dabei als die vordere TgS der nachfolgenden Gruppe.

14. Bodeneffektfahrzeug nach Anspruch 8 **dadurch gekennzeichnet**, das die unteren Schwimmerteile in Form eines mehrachsigen Fahrwerks ausgeführt sind, gebildet durch die aufeinander folgend platzierten erteichterten Niederdruckpneumatik (51) mit einem geringen relativen Durchmesser der Naben, wobei der Großteil der Reifen von jeder Bordseite in der Höhe von außen durch die gemeinsamen aerodynamischen Hauben (52) abgedeckt sind.

15. Verfahren der Flugausführung, in dem die Verfahren nach einem der Ansprüche 1 bis 7 und BEF nach einem der Ansprüche 8 bis 14 ausgeführt sind, das die Veränderung der Auftriebskraft, der Ruderkräfte der Längs-, Quer- und Kurssteuerung, sowie die Veränderung der Schubkräfte des Triebwerks (der Triebwerke) beinhaltet, **dadurch gekennzeichnet, dass** mit dem Ziel der Erhöhung der Flugsicherheit auf den Höhen, die für die Flüge der Bodeneffektfahrzeuge vorbestimmt sind, alle Flugphasen und Manöver führt man mit einem konstanten, der Null gleichen, Längsneigungswinkel, der der horizontalen Lage des Rumpfs entspricht;
- die **man** mit der Längstrimmung des BEF durch die Veränderung der Größe der hinteren Auftriebskraft **gewährleistet** (oder durch eine synchrone direkt-umgekehrte Veränderung der Größen der vorderen und hinteren Auftriebskräfte), mit Hilfe einer entsprechenden Veränderung der Ablenkwinkel von Flaperons der TgS, und (oder) durch die Veränderung der Triebwerk-Betriebe;
- dabei **führt man** zuerst auf der vorgegebenen Flughöhe eine Längstrimmung durch die Ablenkung der Flaperons der hinteren TgS oder der volllenkbaren Ruderfläche (24) auf den nötigen Winkel durch;
- danach **fixiert man** im Selbststabilisierungs- und Dämpfungssystem «AWG - Flaperons der hinteren TgS» den entstandenen Winkel zwischen den Ebenen des AWG und der Flaperons-Ebene;
- **man gibt** die Flughöhe durch die Ablenkung der Flaperons der TgS auf den entsprechenden Winkel und durch die Wahl des Triebwerke-Betriebs vor;
- und zur Stabilisierung dieser Höhe **fixiert man** im Selbststabilisierungs- und Dämpfungssystem «AWG - Flaperons der vorderen TgS» den dabei entstandenen Winkel zwischen der Ebene des AWG und der Flaperons-Ebene;
- **man führt** einen Mikrosenkrechtstart und die Vorwärtsbewegung auf dem statischen Luftkissen bei der Auftriebshilfen der TgS und Außenflügel, entsprechend der Bewegung auf dem statische Luftkissen und der Startleistung der Triebwerke durch;
- gemäß der Beschleunigung des BEF bis zur Reiseflug-Geschwindigkeit **fährt man** die Auftriebshilfen der TgS und Außenflügel sanft in die Lage für den Steigflug oder Horizontalflug **ein;**
- aus dem Horizontalflug heraus **führt man** den Steigflug oder den Abstieg durch gleichzeitige Steigerung oder Senkung der Größen der vorderen und hinteren Auftriebskräfte, wofür **man** den Ablenkwinkel der Auftriebshilfen TgS und Außenflügel gleichzeitig **vergrößert** oder **vermindert,** und (oder) den Triebwerk-Betrieb **vergrößert (vermindert);**
- bei einem Flug im Bodeneffekt-Betrieb **führt man** koordinierte Wendungen (ohne seitliches Ausgleiten) mit einem erforderlichen Quemeigungswert und Höhenbeibehalten;
- **man führt** die Landung aus dem Bodeneffektflug heraus durch eine sanfte Verringerung der Triebwerksleistung und einen Abstieg des BEF bis zur tiefstmöglichen (gemäß den Außenbedingungen) Flughöhe durch;
- proportional der Geschwindigkeitsabnahme **lenkt man** die Vorderspreizklappe, die TgS-Flaperons, die Mittel der aerodynamischen Bremse und Schubumkehr, mit einer Überführung des BEF in den Bewegungsbetrieb auf dem statischen Luftkissen **ab;**
- **man führt** die Bodenbewegung auf dem statischen Luftkissen oder eine Landung (Wässerung) mit einer minimalen oder Null- Vorwärtsbewegung durch;
- **man führt** eine Landung von beliebigen Flughöhen mit Anwendung der steile Abstiegsbahn bis hin zum Sackflugstand bei einer horizontalen Rumpflage durch;
- wofür **man** auf der laufende Flughöhe oder beim Abstieg ein minimales Power Setting **einstellt,** das die Lenkbarkeit gewährleistet, und die Auftriebshilfen TgS und Außenflügel in die Lage, entsprechend der Bewegung auf dem statischen Luftkissen **ablenkt;**
- **man korrigiert** die räumliche Lage des BEF und die Abstiegsbahn (Senkrecht- und Vorwärtsgeschwindigkeit) mit Hilfe der Steuerungsorgane, der Ablenkung der TGS-Flaperons und des Power Settings;
- **man führt** den Senkrechtstart oder den Schwebeflug durch, mittels gleichzeitiger Überführung der Vektorrichtungen der resultierenden Schubkräfte der Triebwerke in die vertikale Lage;
- dafür **wendet man** um die Querachsen die TgS (oder Teile der TgS), auf denen die Triebwerke montiert sind, bis zur vertikalen Lage der Schubkräfte und bringt das Antriebssystem zur Startleistung;
- **man führt** eine 3-dimensionale Ortsänderung und Stabilisierung der BEF mit Hilfe der TGS-Flaperons, Ruder, Änderung der Vektorrichtungen der Triebwerk-Schubkräfte und deren Größe durch;
- auf Sicherheitshöhe **führt man** den Flug «flugzeugartig» durch, d.h. mit einer Steuerung des Anstellwinkels durch Höhenruder, dabei stellt man die TgS-Flaperons in die Lage entsprechend der maximalen Gleitzahl ein.

## Claims

1. Method to allow integrated increase in aerodynamic and cargo-carrying characteristics of wing-in-ground-effect craft (WIG craft), comprising generation of required lift force (LF) using a high air pressure region between load-carrying low-asped ratio wing (LAW) and supporting surface, and also by way of blowing off (suction of) flow from LAW upper surface, and creation of progressive motion using thrust propulsion units, pitch, roll and yaw controls, differing in that natural character of dependence of magnitude of lift force and locations of focuses of low-aspect-ratio wing on angle of attack and height of the flight is changed via creation, in longitudinal direction, of at least two local regions of lift force generation, i.e. forward region (38) and rear region (39), with points of application thereof positioned on longitudinal axis, accordingly, ahead of and behind the center of gravity (41) (CG), through use of at least two LAWs - the forward LAW (1), with leading edge flap (2), semiannular section of upper surface (3) and flaperons (4), the rear LAW (5), with the shrouded-screw propufsor (SSP) (6), engine (7) and flaperons (8), and aerodynamic plate-floats (APF) (10) joining wing-end surfaces of LAW (9), for which different conditions of flow of air streams around them are created, with formation of static (S) (11), dynamic (D) (12) and static-and-dynamic (SD) (13) air cushions (AC) under LAW, and creation of low air pressure region with reduced irregularity in the longitudinal direction above WIG craft, with mutual compensation of moments of the front and the rear lift forces relative to the center of gravity (41), and positions of the focus in terms of height (40) ahead of, and of the focus in terms of angle of attack (43) behind, the center of gravity (41), which is positioned between the focus in terms of height and the point (42) of midway between the focuses, for which purpose natural interaction of undisturbed free approach air with lower surface of the forward LAW (46) is allowed, while interaction of the same with its upper surface (30) is reduced through suction of air layer over its entire span with thrust propulsion units, and interaction thereof with lower (33) and upper surfaces of rear (next) LAWs is prevented by blowing off their surfaces over the entire span with thrust propulsion units (6), and magnitudes of forward and rear lift forces are controlled through variations of deflection angles of LAW flaperons and/or propulsion unit(s) power setting, the flight being additionally stabilized and pitch fluctuations being damped through automatic variation of forward lift force magnitude as a function of pitch angle as strong reversed feedback, the variations being effected by way of dynamic control of positions of forward LAW flaperons to actuating devices of which control inputs from angle of attack sensor (AAS) are transmitted, the propulsion unit(s) being used to create progressive motion, blow off and suck flow from upper surfaces of load-carrying planes, remove weight load from WIG craft with use of excess pressure in static and dynamic air cushions and additionally remove weight load through use of vertical component of thrust force(s), and secure additional controllability and additional thrust force(s) due to the "Bartini effect" and multiplication of velocity of flow passing through the propulsion units.

2. Method under item 1 differing in that the flight is additionally stabilized and pitch fluctuations are damped through automatic variations of magnitude of the rear lift force (39) as a function of pitch angle in the form of positive feedback, which are effected using dynamic control of positions of the rear LAW flaperons, to actuating devices of which control inputs from angle of attack sensor are transmitted.

3. Method under item 1 differing in that WIG craft is given additional lift force in all modes of movement, and induced drag force is reduced through reduction of side air overflows and through use of kinetic energy of side induced vortexes, for which purpose LAW span is increased by way of mounting additional low aspect ratio wings (ALAW) (16) on upper edges of wing-end aerodynamic plate-floats (APF) (15), with creation of spatial region of depression with reduced irregularity in the longitudinal direction above WIG craft.

4. Method under item 3 differing in that longitudinal and lateral controllability of WIG craft is improved, for which purpose nose elevator (17) (or nose elevons), or nose elevator(17) (or nose elevons) and tail elevator (18) (or tail elevons) are mounted on ALAWs.

5. Method under item 1 differing in that the flight is additionally stabilized and pitch fluctuations are additionally damped with automatically created moments of aerodynamic forces with point of application located in the area of tail section of WIG craft, for which purpose all-moving tail plane (24) is mounted above flaperons of the rear (last) LAW, within the boundaries of SSP slipstream, on actuating devices of which control inputs from angle of attack are transmitted that are directly proportional to the degree of angle of attack variations.

6. Method under items 3. and 4. differing in that WIG craft is given mufti-mode operation capability, additional longitudinal and lateral stability and controllability, for which purpose the tail portion of ALAW is executed in the form of high-aspect-ratio planes - outer wings (19), which are provided with slats (20), ailerons (21) and flaps (or elevons) (22), the projection of resultant center of pressure of the outer wings and ALAW being positioned on the longitudinal axis between the center of gravity and trailing edge of the rear LAW.

7. Method under item 1 differing in that WIG craft is given additional functions - vertical take-off and hovering mode -through capability of moving SSP thrust force vectors directly upwards and directing SSP slipstreams (jets) straight downwards to under the WIG craft, for which purpose LAW, or a part thereof (63), with propulsion units mounted thereon, are moved about their lateral axes, LAW flaperons are deflected to straight downwards position, and spoilers are deflected to take-off position.

8. Wing-in-ground effect craft in which the methods under items 1-7 are embodied, comprising fuselage, at least one propulsion unit, load-carrying low-aspect-ratio wing (LAW) with wing-end aerodynamic plate-floats (APFs), retractable forward and rear enclosures of static air cushion, and stabilization and control devices, differing in that the load-carrying low-asped-ratio wing is executed in the form of low-aspect-ratio center wing (CW, 25), which is composed, in the longitudinal direction, of at least two LAWs - the forward LAW (1) with leading-edge flap and flaperons and the rear LAW (5) with flaperons, LAW wing-end surfaces (9) being joined by wing-end aerodynamic plate-floats (APFs), upper edges of wing-end aerodynamic plate-floats (15) being positioned higher than upper surfaces of LAWs, with creation of longitudinal air duct with low air pressure above LAW and with formation of the following: Under the CW, within the boundaries of its projection onto the horizontal plane - static air cushion (SAC, 11) cavity, under the forward LAW - dynamic air cushion (DAC, 12) cavity, under the rear (and subsequent) LAW - cavity(-ies) for static-and-dynamic air cushion(s) (SDAC, 13), enclosures of which are composed of internal surfaces of the floats (14), side and/or lower surfaces of the fuselage (65) and flaperons of LAW, the system for control of forward LAW flaperons being designed with capability of parallel control of deflection both with its own control stick and from angle of attack sensor (AAS) through automatic longitudinal stabilization and damping channel which is designed to include a subsystem for control of angle (37) between the plane of neutral (in terms of roll) position of flaperons and the plane of neutral position of AAS, LAWs of the center wing are mounted with setting angles of attack and with covering (overlap) in the horizontal plane, the leading edge (31) of the rear (subsequent) wing (subsequent wings) being positioned above the leading edges (32) of flaperons of the forward wing(s) thus creating air duct(s) (34) through which slipstream(s) (35) from lower half of shrouded-screw propulsor(s) (SSP), the ring(s) (29) of which is (are) mounted on leading edge(s) (31) of the rear (subsequent) LAW(s) (5), is directed into the cavities for air cushions, and the engine(s) (7) is (are) mounted following the SSP within the inner volume(s) of LAW(s) (5), the span of LAW (5) being equal to, less than or more than the inner diameter of the SSP ring (29), and the span of the forward LAW (1) may exceed outer diameter of the ring, and internal and external surfaces of the ring(s) being smoothly adjoined to internal side surfaces and upper edge surfaces of APF, side and upper surfaces of fuselage and upper surfaces of the forward (previous) LAW(s) with creation of a semi-annular (3) surface area thereon which unfolds into the upper surface (30) of LAW with rectilinear generator, and thus a single base structural group is formed comprising the forward LAW, SSP, engine and the rear LAW which, in combination with APF (or with APF and fuselage side, or with sides of fuselages), with additional LAWs and outer wings, makes up the propulsive canying system of WIG craft.

9. Wing-in-ground effect craft under item 8 differing in that setting angle of the forward LAW (1) is equal to mean best angle of attack of the applied aerofoil for design range of cruise heights of ground effect flight, subject to the effects of suction of the flow and boundary layer from its upper surface.

10. Wing-in-ground effect craft under item 8 differing in that
- the chord of the forward LAW is 0.2 to 0.65 of equivalent chord of center wing - the distance from the leading edge of the forward LAW (1) to the trailing edge of the rear LAW (5),
- the chord of the center wing all moving tailplane (24) is 0.15 - 0.5 of the chord of the rear LAW (5),
- flaperons of the forward LAW (1) are of slot type, and axis of rotation is positioned within 5-30% of their chord,
- flaperons of the forward LAW (1) have span that is 5-30% smaller than span of forward LAW (1),
- leading edges of the second and subsequent LAWs (5) are arranged in the plane parallel to the main plane of aerial craft, and geometrical parameters and setting angles thereof may be either similar or different,
- leading edges of LAW are arranged stepwise, next one being positioned higher than the previous one, with respective increase in chords of subsequent wings and in setting angles thereof,
- trailing edges of flaperons (4) and (8) in neutral position that corresponds to the design mode of the flight may lie in the same horizontal plane or in different horizontal planes, and mutual alignment thereof is determined by requirements to performance of a specific WIG craft,
- the nose elevator (17) is positioned within undisturbed stream ahead of the front LAW and is mounted on internal surfaces (14) of APF (10) or on each side between internal surfaces of APF and fuselage, the height of the elevator position above the main plane being greater than mean aerodynamic chord of the elevator and
- nose elevator (17) and tail elevator (18) serves as AAS for flaperons of the LAWs and (or) for center wing all moving tailplane (24) and are linked therewith by means of push-pull mechanical (or electrical or hydraulic or combined) control linkage which is of design that allows for possibility of remote variation of setting angle between the planes of the rudders and the flaperons, and for possibility of complete disengagement thereof.

11. Wing-in-ground effect craft under item 8 differing in that it is composed of two base structure groups, two APFs and fuselage (55) which is made with longitudinal sections in the form of aerodynamic wing aerofoils, with side windows of passenger cabin (49), entrance door (48), emergency hatch(-es) (54) and two-fin vertical tail (26), between the fins of which a passenger-and-cargo door is arranged (62).

12. Wing-in-ground effect craft under item 11 differing in that CW is positioned between two main fuselages and is composed, in the lateral direction, of at least three base structure groups, with at least three propulsors mounted on the leading edges of the rear LAW in each group, chord of the forward LAW of the middle group being greater or lesser that chords of forward LAW of the side groups, with arrangement in the horizontal plane of three-point configuration of thrust and lift forces.

13. Wing-in-ground effect craft under item 8 differing in that SW is composed, both in longitudinal and in lateral directions, of two base structure groups, the rear LAW of each previous group being the last LAW of the next group.

14. Wing-in-ground effect craft under item 8 differing in that lower surfaces of the floats represent multi-axle wheeled landing gear comprised of lightened low-pressure tyres arranged in a row (51), most tyres on each side being covered on the outside with common aerodynamic fairings (52) over the height.

15. The method of flying wherein the methods under items 1-7 and WIG craft under items 8 - 14 are implemented and embodied, which includes variation of lift force, forces from control elements used for controlling pitch, roll and yaw and forces of propulsor(s) thrust, characteristic in that with the aim of increasing flight safety level at heights designated for WIG flight operations all phases of flight and maneuvers are performed with constant pitch angle equal to zero which corresponds to horizontal attitude of fuselage which is maintained through longitudinal balance of the WIG craft by way of varying magnitude of the rear lift force (or with synchronously reverse variations of magnitudes of the forward lift force and the rear lift force) through corresponding variations of angles of LAW flaperons deflection, and/or variations of power setting of engines, where, firstly, balancing is performed at specified height with deflection of flaperons of the rear LAW or the stabilator (all-moving tailplane) (24) to necessary angle, and then the resulting angle between AAS and flaperons is set in the system for self-stabilization and damping "AAS - rear LAW flaperons", and flight height is set by way of deflecting LAW flaperons to corresponding angle and through selection of engine power setting, and for stabilization of this height the resulting angle between AAS plane and plane of flaperons is set in the channel of longitudinal stabilization and damping "AAS - forward LAW flaperons", and micro-vertical take off and progressive motion on SAC are performed with LAW high-lift devices in position corresponding to movement on SAC and take-off engine power and, as WIG craft accelerates to cruise speed, LAW high-lift devices are gradually retracted into position for climb or level flight, and from level flight climb or descent are performed by way of simultaneous increasing or decreasing magnitude of the front and the rear lift forces, for which purpose deflection angles of LAW flaperons and outer wing elevons are simultaneously increased or decreased and/or engine power setting is increased (decreased), and during flight in ground effect mode coordinated turns are performed (without sliding) with necessary roll and with current height maintained, and landing from ground effect flight is performed by way of gradually decreasing engine power and WIG craft descending to minimum possible (subject to environmental conditions) flight height, and in proportion to deceleration the nose flap, LAW flaperons, aerodynamic deceleration and reversing devices are deflected, WIG craft being placed in SAC movement mode, and taxiing on SAC or landing (water touchdown) is performed at minimum or zero ground speed, and landing from any height is performed using steep descent path up to parachuting with horizontal attitude of fuselage, for which purpose at current flight height or during descent minimum engine power is set that is sufficient to support controllability, and LAW high-lift devices are deflected to position corresponding movement on SAC, and WIG craft attitude and descent path (vertical speed and ground speed) are adjusted with use of controls, deflections of LAW flaperons and engine power settings, and vertical take-off or hovering are operated by way of simultaneously putting vectors of resultant forces of thrust of propulsion units into vertical position, for which purpose LAWs (or parts thereof) on which propulsion units are mounted are rotated about their lateral axes up to vertical position of thrust forces, and engines are set to take-off power, and spatial motion and stabilization of WIG craft are performed with use of LAW flaperons, elevators and rudders, varying directions and magnitudes of propulsion units thrust forces, and, at safe heights, flight is realized "in airplane fashion", i.e. with angle of attack controlled with elevator, LAW flaperons being set to position that corresponds to maximum aerodynamic quality.

## Revendications

1. Le moyen d'amélioration générale des caractéristiques aérodynamiques et de transport de l'écranoplane (EP) comprenant la création d'une capacité de soutien (CS) nécessaire à l'aide d'une zone de pression élevée se trouvant entre le plan porteur à petit allongement (PPA) et le plan d'appui, ainsi qu'à l'aide du soufflage (aspiration) du flux de la surface supérieure du PPA, l'assurance d'un mouvement de translation à l'aide des propulseurs de marche, la conduite en tangage, en gîte et en cap qui est différente, car elle change le caractère naturel des dépendances de la valeur de la capacité de soutien et de la position des foyers du plan porteur à petit allongement à partir de l'angle d'attaque et de l'attitude du vol au moyen de création de deux zones locales au moins formant des capacités de soutien- avant (38) et arrière (39) dans la direction longitudinale avec les points de leur application à l'axe longitudinal respectivement en avant et en arrière du centre de masse (41) (CM), à la base de deux PPA au moins - PPA avant (1), à volet avant (2), à partie semi-circulaire de la surface supérieure (3) et à flaperons (4), PPA arrière (5), à propulseur à hélices circulaires (PHC) (6), à moteur (7) et à flaperons (8) et à flasques aérodynamiques - flotteurs (FAF) (10) réunissant les bouts du PPA (9), pour lesquels sont créées les conditions différentes de léchage par les flux d'air avec la formation des coussins d'air (CA) statique (CASt) (11), dynamique (CAD) (12) et stato-dynamique (CASD) (13) sous le PPA, et d'une zone de raréfaction de l'air à une inégalité réduite dans la direction longitudinale au-dessus de l'EP à la compensation réciproque des moments des capacités de soutien avant et arrière par rapport au centre de masse (41), et dans la position du foyer en altitude (40) en avant et du foyer en angle d'attaque (43) en arrière du CM (41), qui est situé entre le foyer en altitude et le point (42) du milieu de la distance entre les foyers ; pour cela, une interaction naturelle du flux incident non perturbé de l'air avec la surface inférieure du PPA avant (46) est admise ; cette interaction avec sa surface supérieure (30) est diminuée à l'aide de l'aspiration de la couche d'air sur toute l'envergure par les propulseurs de marche pour exclure cette interaction avec les surfaces inférieure (33) et supérieure du PPA arrière (suivantes) au moyen du soufflage de leurs surfaces sur toute l'envergure par les propulseurs de marche (6) ; les valeurs des capacités de soutien avant et arrière sont commandées à l'aide de changement des angles de déviation des flaperons du PPA et (ou) par changement du mode de fonctionnement du (des) propulseur(s) en stabilisant complémentairement le vol et en amortissant les vibrations en tangage à l'aide du changement automatique de la valeur de la CS avant comme d'une fonction d'angle de tangage selon le type de contre-réaction négative profonde qui est effectué à l'aide de la commande dynamique de la position des flaperons du PPA avant dont les mécanismes exécutifs sont commandés par le transmetteur d'angle d'attaque (TAA), à l'aide du (des) propulseur(s) qui créent : un mouvement de translation, le soufflage et l'aspiration du flux des surfaces supérieures des plans porteurs, une décharge en poids de l'EP au moyen d'une surpression dans les coussins d'air statique et stato-dynamique, une décharge en poids complémentaire au moyen d'une composante verticale de la force (des forces) de traction, une manoeuvrabilité complémentaire et une force (des forces) de traction complémentaire(s) grâce à « l'effet Bartini » et à la multiplication de la vitesse du flux passant à travers les propulseurs.

2. Le moyen décrit dans le p. 1 se diffère par la stabilisation complémentaire du vol et l'amortissement des vibrations en tangage au moyen du changement automatique de la valeur de la CS arrière (39) comme d'une fonction d'angle de tangage selon le type de réaction positive qui est effectué à l'aide de la commande dynamique de la position des flaperons du PPA arrière dont les mécanismes exécutifs sont commandés par le transmetteur d'angle d'attaque.12/05/2014

3. Le moyen décrit dans le p. 1 se diffère par ce fait qu'une capacité de soutien complémentaire est appliquée à l'EP pour tous les modes de vol et que la force de résistance inductive est réduite grâce à la réduction des écoulements latéraux de l'air et grâce à l'utilisation de l'énergie cinétique des tourbillons inductifs latéraux ; pour cela, l'envergure du PPA est augmentée au moyen du montage des plans complémentaires à petit allongement (PCPA) (16) sur les rebords supérieurs des flasques aérodynamiques avec formation d'une zone spatiale de raréfaction de l'air à une inégalité réduite dans la direction longitudinale au-dessus d'EP.

4. Le moyen décrit dans le p. 3 se diffère par ce fait que la manoeuvrabilité longitudinale et transversale de l'EP est améliorée ; pour cela, sur le PCPA sont montés un équilibreur avant (17) (ou des élevons avant) ou un équilibeur avant (17) (ou des élevons avant) et un équilibeur arrière (18) (ou des élevons arrière).

5. Le moyen décrit dans le p. 1 se diffère par ce fait que le vol est complémentairement stabilisé et les vibrations en tangage sont amorties au moyen des moments des forces aérodynamiques automatiquement créés dont le point d'application est situé dans la partie arrière de l'EP ; pour cela, au-dessus des flaperons du PPA arrière (dernier), dans la veine du PHC une gouverne à rotation totale (24) est montée et la commande de ses mécanismes exécutifs est effectuée à raide d'une action du transmetteur d'angle d'attaque qui est directement proportionnelle à la valeur de changement de l'angle d'attaque.

6. Le moyen décrit dans le p. 3 et le p. 4 se diffère par ce fait que pour l'EP sont assurés : modes multiples, stabilité longitudinale et transversale et manoeuvrabilité complémentaires ; pour cela, la partie arrière du PCPA est exécutée sous formes des plans à grand allongement - consoles (19) qui sont équipées de volets de bord d'attaque (20), d'ailerons (21) de volets de bord de fuite (ou d'élevons) (22), cependant la projection du centre résultant de pression des consoles et du PCPA est dirigée vers l'axe longitudinal entre le CM et le bord arrière des PPA arrière.

7. Le moyen décrit dans le p. 1 se diffère par ce fait que l'EP est muni des fonctions complémentaires - décollage vertical et vol stationnaire au moyen d'assurance de déplacement des vecteurs des forces de traction du PHC verticalement vers le haut et au moyen d'orientation de leurs jets de réacteur verticalement vers le bas sous l'EP ; pour cela, le PPA ou une partie du PPA (63) avec les propulseurs y montés sont tournés autour de leurs axes transversaux, les flaperons du PPA sont déclinés vers le bas verticalement, et les ailettes articulées - en position de décollage.

8. L'écranoplane pour laquelle sont réalisés les moyens des pp. 1- 7, comprenant un fuselage, un propulseur au moins, un plan porteur à petit allongement (PPA) avec les flasques marginaux - flotteurs, une crinoline avant et arrière rétractée du coussin d'air statique, des moyens de stabilisation et de commande se diffèrent par ce fait que le plan porteur à petit allongement est réalisé sous forme d'un plan central à petit allongement (PC, 25) qui est composé dans la direction longitudinale de deux PPA au moins - PPA avant (1) à volet avant et flaperons et PPA arrière (5) à flaperons ; les bouts du PPA (9) sont réunis par les flasques aérodynamiques marginaux - flotteurs (FAF), les rebords supérieurs des flasques aérodynamiques (15) sont disposés au-dessus des surfaces supérieures du PPA avec formation d'un canal longitudinal de raréfaction élevée de l'air au-dessus du PPA et parallèlement sont formés : sous le PC dans les limites de sa projection sur le plan horizontal - une cavité du CA statique (CASt, 11), sous le PPA avant - une cavité du CA dynamique (CAD, 12), sous le PPA arrière (et suivants) - une cavité (des cavités) du (des) CA stato-dynamique(s) (CASD, 13) dont les crinolines sont formées par les surfaces intérieures des flotteurs (14), par les surfaces latérales et (ou) la surface inférieure du fuselage (65) et par les flaperons du PPA ; et avec cela, le système de conduite des flaperons du PPA avant est réalisé compte tenu de la possibilité de commander parallèlement la déviation avec utilisation de son propre levier de pilotage ou du transmetteur d'angle d'attaque (TAA) grâce au canal de stabilisation longitudinale automatique et d'amortissement muni du sous-système de réglage de l'angle (37) entre le plan de la position neutre (en gîte) des flaperons et le plan de la position neutre du TAA ; lors du montage des PPA du plan central, le calage angulaire est utilisé, ainsi qu'un recouvrement dans le plan horizontal, c'est-à-dire, le rebord avant (31) du plan arrière (des plans suivants) est (sont) situé(s) au-dessus des rebords avant (32) des flaperons du plan (des plans) avant en formant un canal (des canaux) aérien(s) (34) à travers lequel (lesquels) est (sont) dirigé(s) dans les cavités des coussins d'air un jet (des jets) de réacteur (35) de la partie inférieure du propulseur (des propulseurs) à hélices circulaires (PHC) dont l'anneau (29) est monté sur le rebord (les rebords) (31) avant du PPA arrière (suivants) (5), et le(s) moteur(s) (7) est (sont) monté(s) toute suite derrière le PHC dans le(s) volume(s) intérieur(s) du PPA (5) ; avec cela, l'envergure du PPA (5) peut être égale, inférieure ou supérieure au diamètre intérieur de l'anneau (29) du PHC, tandis que l'envergure du PPA avant (1) peut dépasser le diamètre extérieur de l'anneau, les surfaces intérieure et extérieure de l'anneau (des anneaux) sont harmonieusement raccordées aux surfaces intérieures latérales et supérieures des FAF, aux surfaces latérales et supérieure du fuselage et aux surfaces supérieures du PPA avant (suivants) avec formation d'une zone semi-circulaire (3) de la surface qui se transforme en surface supérieure (30) du PPA à composante rectiligne, et avec cela, un ensemble de base constructif est formé comprenant le PPA avant, le PHC, le moteur et le PPA arrière qui forme un complexe propulsif porteur de l'écranoplane ensemble avec la FAF (ou avec la FAF et le bord du fuselage ou avec les bords des fuselages), avec les PPA complémentaires et les consoles.

9. L'écranoplane décrite dans le p. 10 se diffère par ce fait que l'angle de calage du PPA avant (1) est égal à l'angle d'attaque moyen le plus favorable du profil aérodynamique appliqué pour le diapason estimé des altitudes de croisière de vol en mode d'effet de sol compte tenu de l'influence de l'aspiration du flux et de la couche limite de sa surface supérieure.

10. L'écranoplane décrite dans le p. 8 se diffère par les faits suivants :
- la corde du PPA avant est de 0,2 - 0,65 de la corde équivalente du plan central - de la distance du rebord avant du PPA avant (1) jusqu'au rebord arrière du PPA arrière (5),
- la corde de la gouverne à rotation totale (24) est égale à 0,15 - 0,5 de la corde du PPA arrière (5),
- les flaperons du PPA avant (1) sont réalisés sous forme de fentes, et l'axe de rotation des flaperons est situé dans les limites de 5 - 30% de leur corde.
- l'envergure des flaperons du PPA avant (1) est inférieure de 5 - 30% à l'envergure du PPA avant (1).
- les rebords avant du deuxième PPA (5) et des PPA suivants sont situés dans le plan parallèle au plan principal de l'AN, et leurs paramètres géométriques et les angles de calage peuvent être égaux ou différents.
- les rebords avant du PPA sont situés en étage : le rebord suivant est plus haut que celui précédent, avec une augmentation correspondante des cordes des surfaces postérieures et de leurs angles de calage.
- les rebords arrière des flaperons (4) et (8) en position neutre qui correspond au mode de vol estimé peuvent se trouver dans un ou dans les différents plans horizontaux, et leur disposition réciproque est définie par les exigences relatives aux caractéristiques de vol et caractétistiques techniques d'une EP concrète.
- l'équilibreur avant (17) est situé dans le flux non perturbé devant le PPA avant et monté sur les parois intérieures des extrémités avant (14) des FAF (10) ou à chaque bord entre les extrémités avant des FAF et du fuselage ; avec cela, la hauteur de localisation de l'équilibreur au-dessus du plan principal est supérieure à sa corde moyenne aérodynamique.
- l'équilibreur avant (17) et l'équilibeur arrière (18) effectuent la fonction du TAA pour les flaperons (4) du PPA avant et (ou) pour la gouverne à rotation totale (24) et sont liés à ceux-ci par un câblage mécanique (ou électrique, ou hydraulique, ou mélangé) de conduite qui prévoit la possibilité de changer à distance l'angle de calage entre les plans des équilibreurs et des flaperons et la possibilité de coupure complète.

11. L'écranoplane décrite dans le p. 8 se diffère par ce fait qu'elle est composée de deux groupes de base constructifs, de deux FAF et du fuselage (55) qui a des sections longitudinales sous formes des profiles d'aile aérodynamiques, le salon de passagers (49) est vitré, l'EP a une porte d'entrée (48), des trappes de secours (54) et l'empennage vertical double (26), entre les dérives fixes duquel est disposé une trappe d'accès pour passagers et matériel (62).

12. L'écranoplane décrite dans le p. 11 se diffère du fait que le PC est disposé entre les deux fuselages principaux et composé dans la direction transversale de trois groupes constructifs de base au moins à trois propulseurs au moins montés sur les rebords avant des PPA arrière de chaque groupe, tandis que la corde du PPA avant du groupe médian est supérieure ou inférieure aux cordes des PPA avant des groupes latéraux avec formation d'un schéma à trois points de forces de traction et de capacités de soutien dans le plan horizontal.

13. L'écranoplane décrite dans le p. 8 se diffère par ce fait que le PC est composé de deux ou plus de groupes de base constructifs dans la direction longitudinale et transversale, avec cela le PPA arrière de chaque groupe précédent est le PPA avant du groupe suivant

14. L'écranoplane décrite dans le p. 8 se diffère par ce fait que les parties inférieures des flotteurs sont réalisées sous forme d'un train à roues à plusieurs axes formé par les bandages pneumatiques de basse pression allégés placés en série l'un après l'autre (51) ; la plupart de bandages pneumatiques de chaque bord est couverte du côté extérieur par la hauteur de carénages aérodynamiques communs (52).

15. Le moyen de vol où sont réalisés les moyens décrits dans les pp. 1 - 7 et l'EP décrite dans les pp. 8 - 14 comprenant le changement de la capacité de soutien, des forces des éléments de conduite dans les canaux de tangage, de gîte et de cap et des forces de traction du (des) propulseur(s) se diffèrent par ce fait que dans le but d'augmenter la sécurité du vol aux altitudes réservées aux vols des écranoplanes, toutes les étapes du vol et les manoeuvres sont effectuées avec un angle de tangage constant égal à zéro qui correspond à la position horizontale du fuselage assurée par le balancement longitudinal de l'EP au moyen de changement de la valeur de la CS arrière (ou par un changement synchrone inversement proportionnel des valeurs de la CS avant et de la CS arrière) à l'aide du changement correspondant des angles de déviation des flaperons du PPA et (ou) par changement des modes de fonctionnement des moteurs ; avec cela, d'abord à une altitude de vol ordonnée est effectué un balancement longitudinal avec déviation des flaperons du PPA arrière ou de la gouverne à rotation totale (24) d'un angle nécessaire, ensuite dans le système de stabilisation automatique et d'amortissement « TAA - flaperons du PPA arrière » l'angle formé entre le plan du TAA et des flaperons est fixé, l'altitude de vol est choisie au moyen de déviation des flaperons du PPA d'un angle correspondant et au moyen du choix d'un mode de fonctionnement des moteurs ; pour la stabilisation de l'altitude choisie dans le canal de stabilisation automatique longitudinale et d'amortissement « TAA - flaperons du PPA avant » l'angle formé entre le plan du TAA et le plan des flaperons est fixé, un décollage micro-vertical est effectué, ainsi qu'un mouvement de translation avec utilisation du CASt dans la position des mécanismes du PPA correspondant au mouvement avec utilisation du CASt et à la puissance de décollage des moteurs ; lors de l'augmentation de la vitesse de l'EP jusqu'à la vitesse de croisière, les mécanismes du PPA sont doucement remis en position de monté ou de vol horizontal ; en volant horizontalement on commence à monter ou à descendre au moyen de l'augmentation ou de la diminution simultanée de la valeur de la CS avant et arrière, pour cela il faut augmenter ou diminuer simultanément l'angle de déviation des flaperons du PPA et des élevons des consoles, et (ou) augmenter (diminuer) le mode de fonctionnement des moteurs ; lors du vol en mode d'effet de sol, les virages coordonnés (sans glissade) sont effectués avec une gîte nécessaire et le maintien de l'altitude ; on effectue l'atterrissage en mode d'effet de sol en diminuant doucement la puissance des moteurs et en laissant l'EP de descendre jusqu'à l'altitude de vol minimale possible (compte tenu des conditions existantes) ; proportionnellement à la diminution de la vitesse, le volet avant, les flaperons du PPA, les moyens de freinage aérodynamique et de réversion sont écartés avec un passage de l'EP en mode de marche utilisant le CASt ; le roulement est effectué avec utilisation du CASt ou l'atterrissage (l'amerrissage) à vitesse d'avant minimale ou nulle, on effectue l'atterrissage de n'importe quelles altitudes de vol avec utilisation d'une trajectoire de descente courbe jusqu'à la descente en parachute dans la position horizontale du fuselage ; pour cela, à l'altitude de vol courante ou pendant la descente il faut choisir le mode minimal de fonctionnement des moteurs assurant la manoeuvrabitité et remettre les mécanismes du PPA en position correspondant au vol avec utilisation du CASt, corriger la position spatiale de l'EP et la trajectoire de descente (vitesses d'avant et verticale) ; à l'aide des organes de commande, de déviation des flaperons du PPA et du mode de fonctionnement des moteurs, on effectue le décollage vertical ou le vol stationnaire en changeant simultanément la direction des vecteurs des forces de traction résultantes des propulseurs en position verticale, pour cela il faut tourner les PPA (ou une partie du PPA) sur lesquels sont montés les propulseurs autour des axes transversaux jusqu'à ce que les forces de traction se trouvent en position verticale en recevant la puissance de décollage des moteurs ; le déplacement spatial et la stabilisation de l'EP sont effectués à l'aide des flaperons du PPA, des équilibreurs, les changements de direction des vecteurs des forces de traction des propulseurs et de leur valeur sont effectués ; aux altitudes non dangereuses, on effectue un vol « à l'avion », c'est-à-dire en commandant l'angle d'attaque à l'aide de l'équilibreur, tandis que les flaperons du PPA sont mis en position correspondant à la finesse aérodynamique maximale.
